(19) **Europäisches Patentamt**
**European Patent Office**
**Office européen des brevets**

(11) **EP 2 614 996 B1**

(12) **EUROPÄISCHE PATENTSCHRIFT**

(45) Veröffentlichungstag und Bekanntmachung des Hinweises auf die Patenterteilung:
**08.11.2017 Patentblatt 2017/45**

(51) Int Cl.:
***B60R 16/023*** *(2006.01)*     ***H04L 12/40*** *(2006.01)*
***H04L 12/851*** *(2013.01)*

(21) Anmeldenummer: **13150876.4**

(22) Anmeldetag: **10.01.2013**

(54) **Zeit- und prioritäts-gesteuerter Sende/Empfangsknoten für FlexRay und LIN**

Time and priority-controlled transmission/reception node for FlexRay and LIN

Noeud d'émission/de réception commandé de manière temporelle et prioritaire pour FlexRay et LIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2012 DE 102012200475**

(43) Veröffentlichungstag der Anmeldung:
**17.07.2013 Patentblatt 2013/29**

(73) Patentinhaber: **Technische Universität Kaiserslautern**
**67663 Kaiserslautern (DE)**

(72) Erfinder:
• **Gotzhein, Reinhard**
**67661 Kaiserslautern (DE)**
• **Braun, Tobias**
**55450 Langenlonsheim (DE)**

(74) Vertreter: **Hersina, Günter et al**
**Schoppe, Zimmermann, Stöckeler Zinkler, Schenk & Partner mbB Patentanwälte Radlkoferstrasse 2 81373 München (DE)**

(56) Entgegenhaltungen:
**EP-A1- 1 318 630**

• **REINHARD SCHNEIDER ET AL: "Optimized Schedule Synthesis under Real-Time Constraints for the Dynamic Segment of FlexRay", EMBEDDED AND UBIQUITOUS COMPUTING (EUC), 2010 IEEE/IFIP 8TH INTERNATIONAL CONFERENCE ON, IEEE, 11. Dezember 2010 (2010-12-11), Seiten 31-38, XP002698166, DOI: 10.1109/EUC.2010.15 ISBN: 978-1-4244-9719-5**
• **Flexray Consortium ET AL: "FlexRay Communications System Protocol Specification Version 3.0.1", , 31. Oktober 2010 (2010-10-31), Seiten 244-254, XP002697776, Gefunden im Internet: URL:http://www.scribd.com/doc/73436081/FlexRay-Protocol-Specification-V3-0-1 [gefunden am 2013-05-24]**
• **GOSWAMI D ET AL: "Re-engineering cyber-physical control applications for hybrid communication protocols", DESIGN, AUTOMATION&TEST IN EUROPE CONFERENCE&EXHIBITION (DATE), 2011, IEEE, 14. März 2011 (2011-03-14), Seiten 1-6, XP032318233, DOI: 10.1109/DATE.2011.5763148 ISBN: 978-1-61284-208-0**
• **REINHARD SCHNEIDER ET AL: "On the quantification of sustainability and extensibility of FlexRay schedules", DESIGN AUTOMATION CONFERENCE (DAC), 2011 48TH ACM/EDAC/IEEE, IEEE, 5. Juni 2011 (2011-06-05), Seiten 375-380, XP031927765, ISBN: 978-1-4503-0636-2**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- **TOBIAS BRAUN ET AL: "Integration of FlexRay into the SDL-Model-Driven Development Approach", SYSTEM ANALYSIS AND MODELING: ABOUT MODELS, SPRINGER BERLIN HEIDELBERG, BERLIN, HEIDELBERG, Bd. 6598, 4. Oktober 2010 (2010-10-04), Seiten 56-71, XP047023000, ISBN: 978-3-642-21651-0**

**Beschreibung**

Ausführungsbeispiele der vorliegenden Erfindung beziehen sich auf einen Sende/Empfangsknoten, der über eine Schnittstelle mit einem FlexRay- oder LIN-Datenbus verbindbar ist und der basierend auf einem Zeitplan und einer Sendepriorität dem FlexRay- oder LIN-Datenbus einen Rahmen einer verfügbaren Nachricht bereitstellt. Weitere Ausführungsbeispiele der vorliegenden Erfindung beziehen sich auf einen zeit- und prioritätsgesteuerten Sende/Empfangsknoten sowie auf dessen technische Realisierung mit FlexRay und/oder LIN.

Die heutige Rechnerkommunikation im Bereich der über drahtgebundene Datenbusse vernetzten Realzeitsysteme basiert, wie aus dem Kopetz-Artikel [Kopetz, H.: Real-Time Systems - Design principles for Distributed Embedded Applications, Kluwer Academic Publishers, 1997] hervorgeht, auf zeit- und ereignisgetriggerten Protokollen sowie Kombinationen dieser Verfahren. Bei zeitgetriggerten Protokollen werden Nachrichten zu vorab bestimmten Zeitpunkten übertragen. Bei ereignisgetriggerten Protokollen wird das Senden von Nachrichten durch auftretende Ereignisse ausgelöst. Der Vorteil ereignisgetriggerter Protokolle liegt im geringeren Ressourcenverbrauch, sofern der Datenverkehr sporadisch entsteht. Allerdings sind nur begrenzte Echtzeitgarantien möglich, falls mehrere Ereignisse fast gleichzeitig eintreten. Im Falle von periodischem Datenverkehr sind zeitgetriggerte Protokolle aufgrund der Einhaltung harter Echtzeitgarantien vorzuziehen. Ein Einsatz bei sporadischem Datenverkehr und kleinen maximalen Antwortzeiten führt jedoch zu einer massiven Verschwendung von Bandbreite, da der ungünstigste Fall zugrunde gelegt werden muss. Kombinationen beider Verfahren versuchen, hier einen Ausgleich zu schaffen.

Verfahren zur optimalen Auslastung drahtgebundener Datenbusse sind vor allem in Verbindung mit Technologien aus dem Automotive-Bereich bekannt. Zu diesen Technologien zählen FlexRay gemäß der FlexRay-Spezifikation [FlexRay Consortium: FlexRay Communications System - Protocol Specification v2.1, Revision A. December 2005] und LIN gemäß der LIN-Spezifikation [LIN Consortium: LIN Protocol Specification, Revision 2.1, Nov. 24, 2006]. Als Beispiele seien das dynamische und statische Segment von FlexRay, wie dies aus dem Schmidt E.-Artikel [E. Schmidt, K. Schmidt: Message Scheduling for the FlexRay Protocol: The Dynamic Segment, IEEE Transactions on Vehicular Technology, Vol. 58, No. 5, pp. 2160 - 2169, 2009] und dem Schmidt K.-Artikel [K. Schmidt, E. G. Schmidt: Message Scheduling for the FlexRay Protocol: The Static Segment, IEEE Transactions on Vehicular Technology, Vol. 58, No. 5, pp. 2170 - 2179, 2009] hervorgeht, und die Einführung eines Masters bei LIN, welcher für die Koordination der Kommunikation zuständig ist, angeführt. Diesen Verfahren ist gemein, dass der Zugriff auf einen Zeitschlitz entweder exklusiv (eine Station) oder prioritätsbasiert (alle Stationen) erfolgt, wobei Realzeitanforderungen gegeben sind. Im ersten Fall wird die Auslastung optimiert, im zweiten Fall die Länge des dynamischen Segments. Die Restriktionen (entweder exklusiv oder prioritätsbasiert) beschränken den Suchraum, so dass weitergehende Verbesserungen der Auslastung nicht möglich sind.

Die bekannten Lösungen zur Bestimmung optimaler Zeitpläne (engl.: schedules) für zeit- und ereignisgetriggerte Protokolle legen scharfe Restriktionen (entweder exklusiver oder prioritätsbasierter Mediumzugriff) zugrunde. Damit ist der Suchraum zum Auffinden optimaler Lösungen von vornherein stark beschränkt.

Ein weiterer Nachteil bekannter Lösungen ist der prioritätsbasierte Wettbewerb, zu dem alle Stationen zugelassen sind. Dies schränkt die möglichen Echtzeitgarantien im Fall mehrerer, fast gleichzeitig auftretender Ereignisse stark ein. Die beiden genannten Nachteile sind z. B. in FlexRay- oder LIN-Bussen ausgeprägt und führen zu einer Reduktion der effektiv nutzbaren Bandbreite, insbesondere bei sporadischem Datenverkehr mit kleinen maximalen Antwortzeiten.

In [REINHARD SCHNEIDER ET AL: "Optimized Schedule Synthesis under Real-Time Constraints for the Dynamic Segment of FlexRay", EMBEDDED AND UBIQUITOUS COMPUTING (EUC), 2010 IEEE/IFIP 8TH INTERNATIONAL CONFERENCE ON, IEEE, 11. Dezember 2010 (2010-12-11), Seiten 31-38, XP002698166, DOI: 10.1109/EUC.2010.15 ISBN: 978-1-4244-9719-5] wird eine optimierte Erstellung von Zeitplänen unter Echtzeitbedingungen für das dynamische Segment von FlexRay beschrieben. Das darin beschriebene Schema basiert auf einem inkrementellen Zeitplanerstellungsmodul, welches für jede neue Anwendung, die auf das dynamische Segment von FlexRay abgebildet werden soll, ausgeführt wird. Als Eingang für den Ersteller werden die existierenden Zeitpläne, die FlexRay Netzwerkkonfiguration und der Satz von neuen Nachrichten betrachtet. Basierend auf diesen Eingangsspezifikationen werden durch Anwenden mehrerer Ausdünnungstechniken undurchführbare Lösungen verworfen, um die Zeitpläne für die neuen Nachriten zu erstellen.

Aus dem FlexRay Standard [Flexray Consortium ET AL: "FlexRay Communications System Protocol Specification Version 3.0.1",, 31. Oktober 2010 (2010-10-31), Seiten 244-254, XP002697776, Gefunden im Internet: URL: http://www.scribd.com/doc/73436081/ FlexRay-Protocol-Specification-V3-0-1 [gefunden am 2013-05-24]] ist ein zyklusabhängiges Multiplexing (engl. cycle dependent multiplexing) sowohl für das statische als auch das dynamische Segment des FlexRay Rahmens bekannt.

In [GOSWAMI D ET AL: "Re-engineering cyber-physical control applications for hybrid communication protocols", DESIGN, AUTOMATION&TEST IN EUROPE CONFERENCE&EXHIBITION (DATE), 2011, IEEE, 14. März 2011 (2011-03-14), Seiten 1-6, XP032318233, DOI: 10.1109/DATE.2011.5763148 ISBN: 978-1-61284-208-0] wird die Überarbeitung (engl. re-engineering) von Kontrollanwendungen zur optimalen Aus-nutzung der bimodalen Eigenschaften (zeitgesteuert und ereignisgesteuert) eines darunter liegenden Kommunikationsmediums beschrieben. Dabei wird für die Kontrollnachrichten während eines Übergangszustands zunächst ein geteilter, zeitgesteuerter Kommunikati-onszeitschlitz (geteilt unter mehreren Kontrollanwendungen) bereitgestellt, und zu einem ereignisgesteuerten Kommunikationszeitplan umgeschaltet sobald ein stabiler Zustand erreicht wird.

Der vorliegenden Erfindung liegt somit die Aufgabe zugrunde, einen Sende/Empfangsknoten für ein FlexRay-Datenbus und/oder LIN-Datenbus zu schaffen, der mit einer hohen Zuverlässigkeit, relativ geringen Ressourcenanforderungen und einem schnellen Moduswechsel einen geregelten Zugriff auf den FlexRay-Datenbus und/oder LIN-Datenbus ermöglicht.

Diese Aufgabe wird durch die unabhängigen Patentansprüche gelöst.

Vorteilhafte Weiterbildungen finden sich in den abhängigen Patentansprüchen.

Ausführungsbeispiele der vorliegenden Erfindung schaffen einen Sende/Empfangsknoten mit einer Schnittstelle zum Herstellen einer Verbindung mit einem FlexRay-Datenbus oder einem LIN-Datenbus. Der Sende/Empfangsknoten ist ausgebildet, um bei einer Abfolge von Zeitabschnitten das Auftreten einer ersten Bedingung und einer zweiten Bedingung zu erfassen und, falls die erste und die zweite Bedingung für einen zugeordneten Zeitabschnitt erfüllt sind, um dem FlexRay-Datenbus während des zugeordneten Zeitabschnitts einen Rahmen einer verfügbaren Nachricht über die Schnittstelle bereit zu stellen, wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der Nachricht zugeordnete Sendepriorität für den zugeordneten Zeitabschnitt höher ist als eine weitere Sendepriorität einer weiteren verfügbaren Nachricht eines weiteren, mit dem FlexRay-Datenbus verbundenen Sende/Empfangsknotens für denselben zugeordneten Zeitabschnitt wobei pro Zeitabschnitt höchstens eine Nachricht pro Sendepriorität eingeplant wird, wobei die erste und zweite Bedingung über einen Zeitplan vorgegeben sind, der vor Ausführung ermittelt wird, wobei der Zeitplan ein modusbasierter Zeitplan ist, der für jeden Zeitabschnitt eine Anzahl potentiell bereit zu stellender Nachrichten bestimmt, wobei pro Zeitabschnitt höchstens eine Nachricht pro Ausführungsmodus eingeplant wird, so dass jeder Zeitabschnitt einen begrenzten Wettbewerb aufweist, der nach Prioritäten geordnet ist, wobei Ausführungsmodi nach Präferenzen geordnet sind und die Sendeprioritäten von Nachrichten definieren, die diesen Ausführungsmodi zugeordnet sind; und wobei ein Zeitabschnitt mehreren Sende/Empfangsknoten für unterschiedliche Ausführungsmodi zugeordnet wird, wobei dieser Zeitabschnitt bei jedem Auftreten nur einmal pro Ausführungsmodus zugeordnet ist.

Bei Ausführungsbeispielen ist die Abfolge von Zeitabschnitten eine Abfolge von Kommunikationszyklen des FlexRay-Datenbusses, wobei der zugeordnete Zeitabschnitt ein zugeordneter Kommunikationszyklus der Abfolge von Kommunikationszyklen ist, wobei der zugeordnete Kommunikationszyklus ein dynamisches Segment mit dynamischen Zeitschlitzen aufweist, wobei einem dynamischen Zeitschlitz die Sendepriorität der verfügbaren Nachricht und einem weiteren dynamischen Zeitschlitz die Sendepriorität der weiteren verfügbaren Nachricht zugeordnet ist, wobei der Sende/Empfangsknoten ausgebildet ist, um den Rahmen der verfügbaren Nachricht in dem dynamischen Zeitschlitz zu übertragen, dem die Sendepriorität der verfügbaren Nachricht zugeordnet ist.

Bei Ausführungsbeispielen ist die Abfolge von Zeitabschnitten eine Abfolge von dynamischen Zeitschlitzen eines dynamischen Segments eines Kommunikationszyklus des FlexRay-Datenbusses, wobei jeder dynamische Zeitschlitz der Abfolge von dynamischen Zeitschlitzen eine vorgegebene Anzahl von Minizeitschlitzen aufweist, so dass jeder dynamische Zeitschlitz der Abfolge von dynamischen Zeitschlitzen in einem vorgegebenen Minizeitschlitz beginnt, wobei der zugeordnete Zeitabschnitt ein zugeordneter dynamischer Zeitschlitz der Abfolge von dynamischen Zeitschlitzen ist.

Bei Ausführungsbeispielen ist die Abfolge von Zeitabschnitten eine Abfolge von statischen Zeitschlitzen eines statischen Segments eines Kommunikationszyklus des FlexRay-Datenbusses, wobei der zugeordnete Zeitabschnitt ein zugeordneter statischer Zeitschlitz der Abfolge von statischen Zeitschlitzen ist.

Bei Ausführungsbeispielen ist die Abfolge von Zeitabschnitten eine Abfolge von Zeitschlitzen des LIN-Datenbusses, wobei der zugeordnete Zeitabschnitt ein zugeordneter Zeitschlitz der Abfolge von Zeitschlitzen ist.

Bei Ausführungsbeispielen sind die erste und die zweite Bedingung so vorgegeben, dass das Auftreten der ersten und der zweiten Bedingung derart in Form einer Matrix darstellbar ist, dass eine erste Dimension der Matrix die Zeitabschnitte des Zeitplans zum Bereitstellen der Rahmen aufweist und eine zweite Dimension der Matrix die vorgegebenen Sendeprioritäten der Nachrichten aufweist, wobei in der ersten Dimension der Matrix Nachrichten gleicher Sendepriorität vorhanden sind, und wobei die in der zweiten Dimension der Matrix auftretenden vorgegebenen Sendeprioritäten der Nachrichten unterschiedlich sind.

Ausführungsbeispiele der vorliegenden Erfindung werden nachfolgend unter Bezugnalune auf die beiliegenden Figuren näher erläutert. Es zeigen:

Fig. 1a    eine schematische Ansicht eines Sende/Empfangsknotens mit einer Schnittstelle zum Verbinden mit einem Übertragungsmedium;

Fig. 1b    eine schematische Ansicht eines Sende/Empfangsknotens mit einem optionalen Speicher zum Ablegen des Zeitplans mit den zugeordneten Zeitabschnitten und/oder der Sendepriorität der bereit zu stellenden Nachricht;

Fig. 2     eine schematische Ansicht einer Abfolge von Zeitabschnitten mit einem dem Sende/Empfangsknoten zugeordneten Zeitabschnitt;

Fig. 3     ein Bussystem mit einem Datenbus und einer Mehrzahl von Sende/Empfangsknoten;

Fig. 4     eine schematische Ansicht einer zeitlichen Strukturierung der Belegung des Übertragungsmediums;

Fig. 5     eine Zuweisung von Zeitabschnitten in einer tabellarischen Anordnung für ein vereinfachtes Szenario eines Kraftfahrzeugs;

Fig. 6     eine Zuweisung von Rahmen, die mit einer Zuweisung von Zeitabschnitten in Einklang steht, in einer tabellarischen Anordnung für ein vereinfachtes Szenario eines Kraftfahrzeugs;

Fig. 7     eine schematische Ansicht einer zeitlichen Strukturierung der Belegung des FlexRay-Datenbusses gemäß der FlexRay-Spezifikation;

Fig. 8     eine schematische Ansicht eines Sende/Empfangsknotens mit einer Schnittstelle zum Verbinden mit einem FlexRay-Datenbus und eine zeitliche Strukturierung der Belegung des FlexRay-Datenbusses gemäß einem Ausführungsbeispiel der vorliegenden Erfindung;

Fig. 9     eine Zuweisung von Moduspräferenzen in einer tabellarischen Anordnung für ein vereinfachtes Szenario eines Kraftfahrzeugs gemäß einem Ausführungsbeispiel der vorliegenden Erfindung;

Fig. 10     eine Zuordnung von Nachrichten, Nachrichtentypen, Übertragungsmodi und Anzahl benötigter Zeitschlitze zu Knoten in einer tabellarischen Anordnung für ein vereinfachtes Szenario eines Kraftfahrzeugs gemäß einem Ausführungsbeispiel der vorliegenden Erfindung;

Fig. 11     eine Zuweisung von dynamischen Zeitschlitzen in einer tabellarischen Anordnung für ein vereinfachtes Szenario eines Kraftfahrzeugs gemäß einem Ausführungsbeispiel der vorliegenden Erfindung;

Fig. 12     eine Zuordnung von Nachrichten zu dynamischen Zeitschlitzen für ein vereinfachtes Szenario eines Kraftfahrzeugs gemäß einem Ausführungsbeispiel der vorliegenden Erfindung;

Fig. 13a     eine Zuweisung von dynamischen Zeitschlitzen in einer tabellarischen Anordnung für ein vereinfachtes Szenario eines Kraftfahrzeugs gemäß einem Ausführungsbeispiel der vorliegenden Erfindung;

Fig. 13b     eine Zuweisung von dynamischen Zeitschlitzen in einer tabellarischen Anordnung für ein vereinfachtes Szenario eines Kraftfahrzeugs gemäß einem Ausführungsbeispiel der vorliegenden Erfindung;

Fig. 13c     eine Zuweisung von dynamischen Zeitschlitzen in einer tabellarischen Anordnung für ein vereinfachtes Szenario eines Kraftfahrzeugs gemäß einem Ausführungsbeispiel der vorliegenden Erfindung;

Fig. 14     eine schematische Ansicht eines Sende/Empfangsknotens mit einer Schnittstelle zum Verbinden mit einem FlexRay-Datenbus und eine zeitliche Strukturierung der Belegung des FlexRay-Datenbusses gemäß einem Ausführungsbeispiel der vorliegenden Erfindung;

Fig. 15     eine schematische Ansicht eines Sende/Empfangsknotens mit einer Schnittstelle zum Verbinden mit einem FlexRay-Datenbus und eine zeitliche Strukturierung der Belegung des FlexRay-Datenbusses gemäß einem Ausführungsbeispiel der vorliegenden Erfindung;

Fig. 16     eine schematische Ansicht einer zeitlichen Strukturierung der Belegung des LIN-Datenbusses gemäß der LIN-Spezifikation; und

Fig. 17     eine schematische Ansicht eines Sende/Empfangsknotens mit einer Schnittstelle zum Verbinden mit einem LIN-Datenbus und eine zeitliche Strukturierung der Belegung des LIN-Datenbusses gemäß einem Ausführungsbeispiel der vorliegenden Erfindung.

In der nachfolgenden Beschreibung der Ausführungsbeispiele der Erfindung werden in den Figuren gleiche oder gleich wirkende Elemente mit den gleichen Bezugszeichen versehen, so dass deren Beschreibung in den unterschiedlichen Ausführungsbeispielen untereinander austauschbar ist.

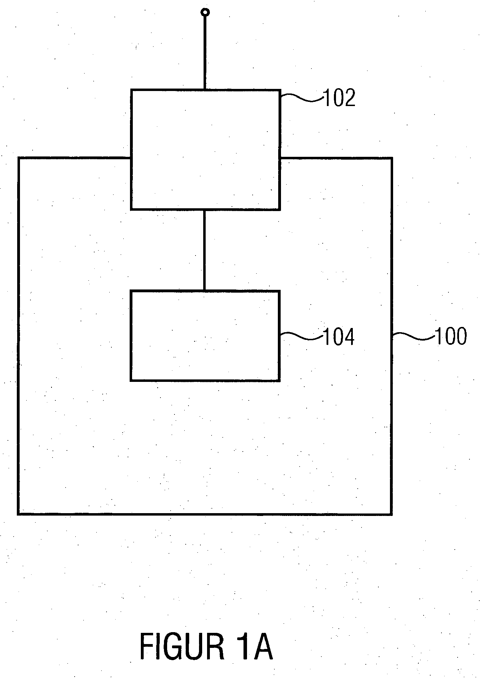

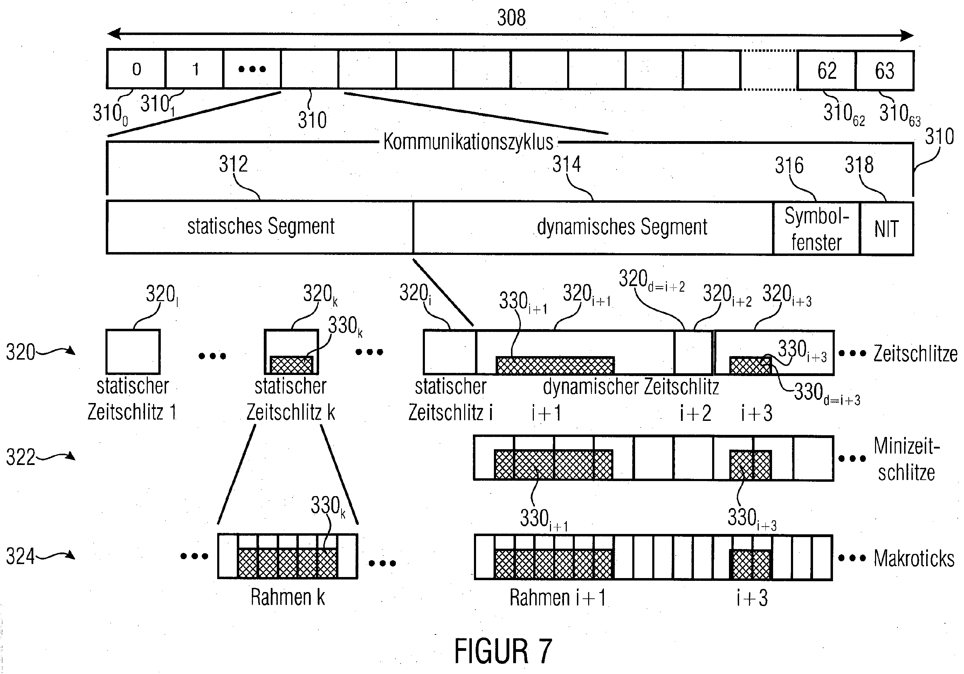

Zum besseren Verständnis werden zunächst technische Grundlagen des Sende/Empfangsknotens anhand der Fig. 1a bis 6 in einem allgemeinen Abschnitt erläutert. Im Anschluss an den allgemeinen Abschnitt werden Ausführungsbeispiele der vorliegenden Erfindung anhand der Fig. 7 bis 17 beschrieben.

Fig. 1a zeigt eine schematische Ansicht eines Sende/Empfangsknotens 100 mit einer Schnittstelle 102 zum Verbinden mit einem Übertragungsmedium (z. B. einem Datenbus). Der Sende/Empfangsknoten 100 weist ferner eine Verarbeitungseinrichtung 104 auf, die ausgebildet ist, um bei einer Abfolge von Zeitabschnitten das Auftreten einer ersten Bedingung und einer zweiten Bedingung zu erfassen und, falls die erste und die zweite Bedingung für einen zugeordneten Zeitabschnitt erfüllt ist, um dem Übertragungsmedium während des zugeordneten Zeitabschnitts einen Rahmen einer verfügbaren Nachricht über die Schnittstelle 102 bereit zu stellen, wobei für die Übermittlung der Nachricht ein oder mehrere Rahmen (z. B. Datenrahmen) erforderlich sein können und wobei ein Rahmen einen oder mehrere logische Werte (Bits) aufweisen kann. Die Anzahl der erforderlichen Rahmen pro Nachricht und die Anzahl der erforderlichen logischen Werte pro Rahmen können z. B. von der Größe oder vom Typ der Nachricht abhängen. Die erste Bedingung gibt dabei gemäß einem Zeitplan den zugeordneten Zeitabschnitt zum Bereitstellen des Rahmens der verfügbaren Nachricht an, während die zweite Bedingung angibt, dass die der Nachricht zugeordnete Sendepriorität für den zugeordneten Zeitabschnitt höher ist als eine weitere Sendepriorität einer weiteren verfügbaren Nachricht eines weiteren, mit dem Übertragungsmedium verbundenen Sende/Empfangsknotens für denselben zugeordneten Zeitabschnitt.

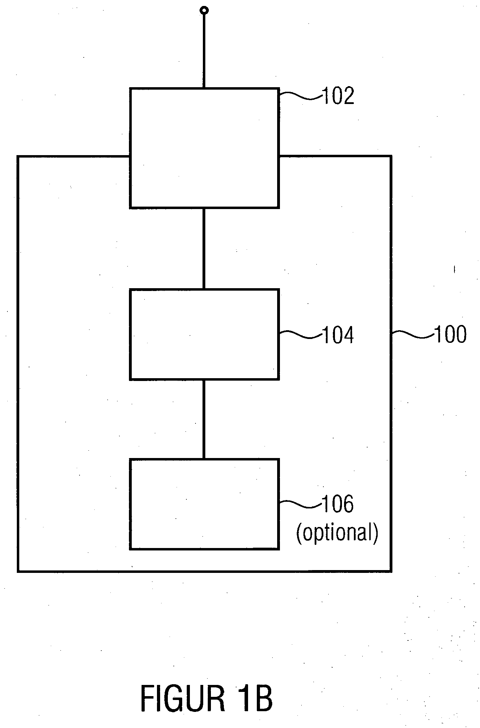

Fig. 1b zeigt eine schematische Ansicht eines Sende/Empfangsknotens 100 mit einem optionalen Speicher 106 zum Ablegen des Zeitplans mit den zugeordneten Zeitabschnitten und/oder der Sendepriorität der bereit zu stellenden Nachricht. Der Speicher 106 kann ferner derart ausgebildet sein, dass der im Speicher 106 abgelegte Zeitplan mit den zugeordneten Zeitabschnitten und/oder die Sendepriorität der bereit zu stellenden Nachricht aktualisierbar ist. Ferner kann der Zeitplan einen oder mehrere dem Sende/Empfangsknoten 100 zugeordnete Zeitabschnitte aufweisen. Basierend auf dem Zeitplan mit den zugeordneten Zeitabschnitten und basierend auf der Sendepriorität der bereit zu stellenden Nachricht kann die Verarbeitungseinrichtung 104 erfassen, wann und ob der Rahmen der verfügbaren Nachricht dem Übertragungsmedium über die Schnittstelle 102 bereit zu stellen ist.

Der Sende/Empfangsknoten 100 kann ferner ausgebildet sein, um die Sendepriorität der verfügbaren Nachricht oder eine davon abgeleitete Information dem Übertragungsmedium über die Schnittstelle 102 bereit zu stellen. Des Weiteren kann der Sende/Empfangsknoten 100 ausgebildet sein, um die Sendepriorität oder eine davon abgeleitete Information einer weiteren Nachricht eines weiteren, mit dem Übertragungsmedium verbundenen Sende/Empfangsknotens über die Schnittstelle 102 zu empfangen, um die empfangene Sendepriorität oder eine davon abgeleitete Information mit der Sendepriorität der eigenen verfügbaren Nachricht oder einer davon abgeleiteten Information zu vergleichen. Die von der Sendepriorität abgeleitete Information kann beispielsweise eine verschlüsselte Version der Sendepriorität umfassen oder einen der Sendepriorität zugeordneten Wert, wobei z. B. höhere Werte eine höhere Sendepriorität kennzeichnen können oder umgekehrt. Nachfolgend wird zur Verbesserung der Verständlichkeit der Begriff Sendepriorität verwendet, wobei die Sendepriorität oder aber auch eine von der Sendepriorität abgeleitete Information verwendet werden kann.

Wenn die empfangene Sendepriorität für den zugeordneten Zeitabschnitt eine niedrigere Präferenz als die Sendepriorität der eigenen verfügbaren Nachricht aufweist, dann kann der zugeordnete Zeitabschnitt von dem Sende/Empfangsknoten 100 zum Senden bzw. zum Bereitstellen des Rahmens der verfügbaren Nachricht genutzt werden. Der Sende/Empfangsknoten 100 kann darüber hinaus auch mehrere Sendeprioritäten empfangen und die Sendepriorität der eigenen verfügbaren Nachricht mit den empfangenen Sendeprioritäten vergleichen. Der Sende/Empfangsknoten, der die Nachricht mit der höchsten Sendepriorität aufweist, gewinnt also den begrenzten Wettbewerb für den zugeordneten Zeitabschnitt und kann den Rahmen der verfügbaren Nachricht übermitteln.

Ferner kann der Sende/Empfangsknoten 100 ausgebildet sein, um dem Übertragungsmedium über die Schnittstelle 102 keine Sendepriorität bereit zu stellen, falls der Sende/Empfangsknoten 100 zu dem zugeordneten Zeitabschnitt keine verfügbare Nachricht aufweist. Der Sende/Empfangsknoten 100 nimmt somit nicht an dem begrenzten Wettbewerb für den zugeordneten Zeitabschnitt teil, wodurch ein weiterer, mit dem Übertragungsmedium verbundener Sende/Empfangsknoten, der eine Nachricht mit z. B. einer niedrigeren Präferenz bzw. Sendepriorität aufweist, den zugeordneten Zeitabschnitt für die Übermittlung des Rahmens der verfügbaren Nachricht niedrigerer Präferenz nutzen kann. Dies ermöglicht eine deutlich effektivere Nutzung der vorhandenen Bandbreite des Übertragungsmediums bei gleichzeitiger Einhaltung der Echtzeitgarantien.

Darüber hinaus kann der Sende/Empfangsknoten 100 ausgebildet sein, falls die erste Bedingung erfüllt ist und der Sende/Empfangsknoten 100 mehrere verfügbare Nachrichten unterschiedlicher Sendepriorität aufweist, um die verfügbare Nachricht mit der höchsten Sendepriorität zu ermitteln, und um die ermittelte höchste Sendepriorität dem Übertragungsmedium über die Schnittstelle 102 bereit zu stellen. Falls ein Sende/Empfangsknoten 100 also mehrere Nachrichten unterschiedlicher Sendepriorität aufweist, so kann zunächst ein lokaler Wettbewerb zwischen den Nachrichten des Sende/Empfangsknoten 100 entstehen. Lokaler Wettbewerb bedeutet dabei, dass der Sende/Empfangsknoten 100 die Sendeprioritäten der eigenen verfügbaren Nachrichten auswertet, um z. B. die höchste Sendepriorität zu ermitteln. Den lokalen Wettbewerb gewinnt beispielsweise die Nachricht, die die höchste Sendepriorität aufweist. Anschließend stellt der Sende/Empfangsknoten 100 zu dem zugeordneten Zeitabschnitt die ermittelte höchste Sendepriorität über die Schnittstelle 102 dem Übertragungsmedium bereit, wodurch es, falls ein weiterer bzw. mehrere weitere Sende/Empfangsknoten zu dem zugeordneten Zeitabschnitt eine verfügbare Nachricht aufweisen, zu einem globalen Wettbewerb kommt. Globaler Wettbewerb bedeutet dabei, dass der Sende/Empfangsknoten 100 die Sendepriorität (bzw. Sendeprioritäten) der weiteren verfügbaren Nachrichten des weiteren, mit dem Übertragungsmedium verbundenen Sende/Empfangsknotens auswertet. Diesen globalen Wettbewerb für den zugeordneten Zeitabschnitt gewinnt immer die Nachricht, die die höchste Sendepriorität aufweist.

Nachfolgend wird davon ausgegangen, dass der Sende/Empfangsknoten 100 die Sendepriorität der Nachricht signalisiert, die den lokalen Wettbewerb gewonnen hat. Ferner bezieht sich nachfolgend der Begriff Wettbewerb, sofern nicht anders angegeben, auf den globalen Wettbewerb, an dem mehrere Sende/Empfangsknoten teilnehmen können.

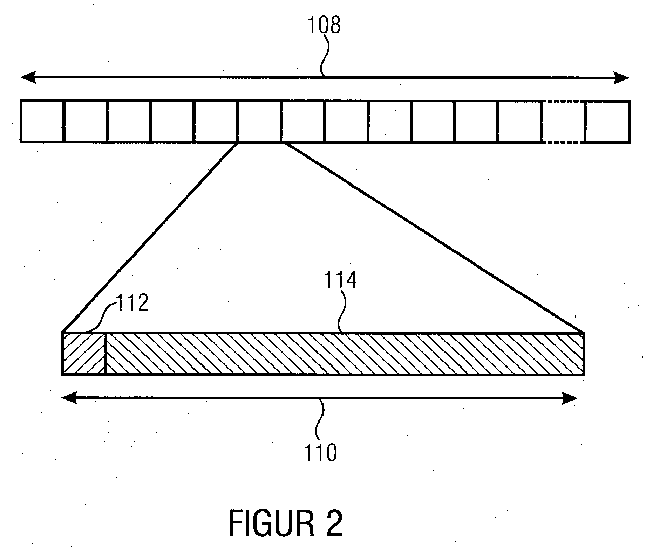

Fig. 2 zeigt eine schematische Ansicht einer Abfolge von Zeitabschnitten 108 mit einem dem Sende/Empfangsknoten 100 zugeordneten Zeitabschnitt 110. Der dem Sende/Empfangsknoten 100 zugeordnete Zeitabschnitt 110 kann in Unterabschnitte unterteilt werden, wobei der Sende/Empfangsknoten 100 ausgebildet ist, um in einem ersten Unterabschnitt 112 die Sendepriorität der verfügbaren Nachricht dem Übertragungsmedium über die Schnittstelle 102 bereit zu stellen und um in einem weiteren Unterabschnitt 114 den oder die Rahmen der verfügbaren Nachricht über die Schnittstelle 102 bereit zu stellen, falls keine höhere Sendepriorität empfangen wird. Hierzu kann der Sende/Empfangsknoten z. B. ausgebildet sein, um den Vergleich der Sendepriorität der eigenen Nachricht mit der empfangenen Sendepriorität während des ersten Unterabschnitts des zugeordneten Zeitabschnitts durchzuführen. Der Sende/Empfangsknoten 100 ist aber nicht auf solche Beispiele beschränkt, sondern vielmehr kann der Zeitabschnitt 110 darüber hinaus in weitere Unterabschnitte unterschiedlicher Länge unterteilt werden.

Für den Fall, dass der Sende/Empfangsknoten 100 eine verfügbare Nachricht aufweist, jedoch den begrenzten Wettbewerb für den zugeordneten Zeitabschnitt verliert, da eine höhere Sendepriorität einer weiteren Nachricht eines weiteren, mit dem Übertragungsmedium verbundenen Sende/Empfangsknotens 100 empfangen wird, kann der Sende/Empfangsknoten 100 ausgebildet sein, um die verfügbare Nachricht zu speichern, um die verfügbare Nachricht zu einem späteren zugeordneten Zeitabschnitt dem Übertragungsmedium über die Schnittstelle 102 bereit zu stellen. Dies kann erforderlich sein, falls die zu übertragenden Informationen weiterhin relevant sind oder ein weiterer, mit dem Übertragungsmedium verbundener Sende/Empfangsknoten auf diese Informationen angewiesen ist. Alternativ kann der Sende/Empfangsknoten 100 ausgebildet sein, um in diesem Fall die verfügbare Nachricht zu verwerfen. Dies kann der Fall sein, falls die zu übertragenen Informationen zu dem späteren Zeitpunkt nicht mehr aktuell sind oder nicht mehr benötigt werden. Ob eine verfügbare Nachricht gespeichert oder verworfen wird, kann z. B. zum Zeitpunkt der Entwicklung (z. B. des Kraftfahrzeugs) festgelegt werden und hängt in der Regel von der in der Nachricht enthaltenen Information ab. Beispielsweise kann die Nachricht eines Temperatursensors, die einen Temperaturwert aufweist, in der Regel verworfen werden, wobei für den nächsten zugeordneten Zeitabschnitt eine Nachricht mit einem aktualisierten Temperaturwert verfügbar ist. Eine Nachricht zur Einstellung der Sitz- oder Spiegelposition könnte z. B. weiterhin relevant sein, weshalb eine solche Nachricht z. B. zwischengespeichert und zu einem späteren zugeordneten Zeitabschnitt übermittelt wird.

Ferner kann der Sende/Empfangsknoten 100 ausgebildet sein, um während eines Synchronisierungszeitschnitts den Zeitplan mit dem zugeordneten Zeitabschnitt und/oder die Sendepriorität der bereit zu stellenden Nachricht mit einer zentralen Steuereinrichtung, die den Zeitplan und die Sendeprioritäten der bereit zu stellenden Nachrichten aufweist, zu synchronisieren. Die Aktualisierung des Zeitplans mit dem zugeordneten Zeitabschnitt und/oder der Sendepriorität kann beispielsweise beim Hochfahren des Sende/Empfangsknotens oder beim Hochfahren des Datenbusses, z. B. nach einem Neustart des Kraftfahrzeugs, erfolgen. Ferner kann der Sende/Empfangknoten ausgebildet sein, um die Aktualisierung selbständig oder auf eine Anforderung hin durchzuführen. Des Weiteren kann der Sende/Empfangsknoten 100 einen Taktgeber und/oder eine Synchronisierungseinrichtung zur Taktsynchronisation mit den weiteren, mit dem Übertragungsmedium verbundenen Sende/Empfangsknoten aufweisen.

Die Schnittstelle 102 des Sende/Empfangsknotens 100 kann ferner ausgebildet sein, um eine Verbindung mit einem Datenbus herzustellen. Nachfolgend werden daher Beispiele des Sende/Empfangsknotens 100 in einem Bussystem mit einem Datenbus und einer Mehrzahl von Sende/Empfangsknoten 100 beschrieben.

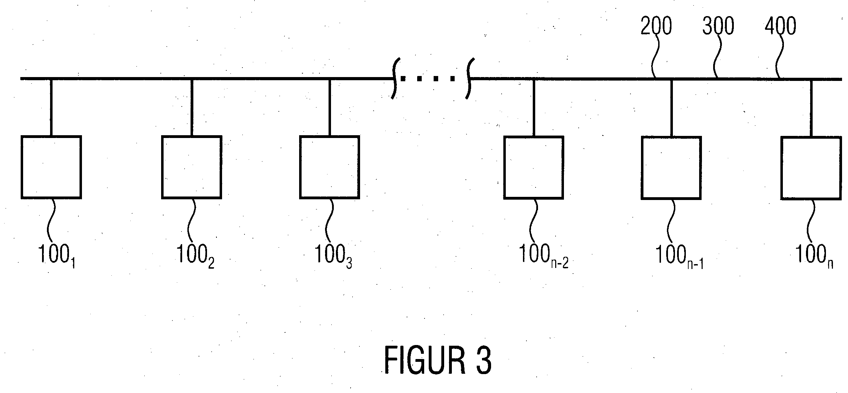

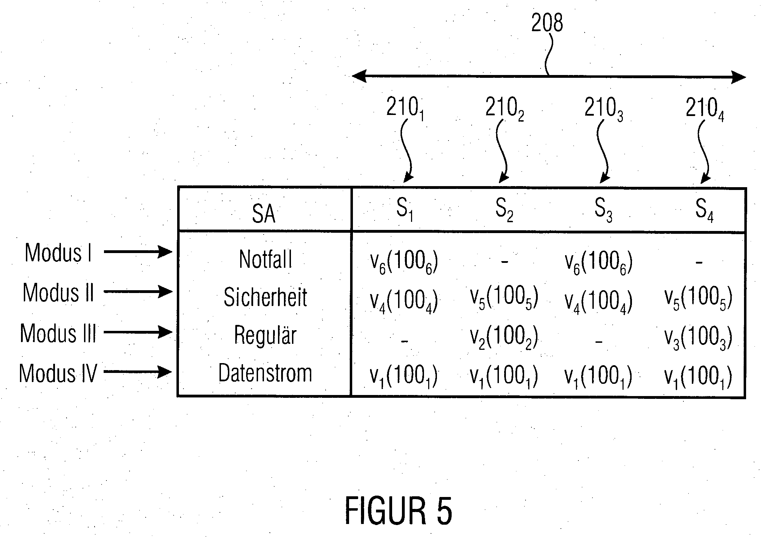

Fig. 3 zeigt ein Bussystem mit einem Datenbus 200 und einer Mehrzahl von Sende/Empfangsknoten $100_1$ bis $100_n$. Das Bussystem erweitert, bei gegebenen Echtzeitanforderungen, den Suchraum zum Auffinden optimaler Zeitpläne (engl.: schedules) für Zeitabschnitts- bzw. Zeitschlitz-basierte Datenbusse mit Mehrfachzugriff. Hierzu wird das Konzept der Ausführungsmodi (engl.: execution modes, modes) eingeführt. Ausführungsmodi geben zunächst die Präferenz von Systemfunktionalitäten und darüber dann auch die Sendepriorität von Nachrichten der betreffenden Funktionalität an. In einem Bussystem treten in der Regel Nachrichten höherer Relevanz und Nachrichten niedrigerer Relevanz auf, so z. B. Nachrichten, die die Sicherheit betreffen oder Nachrichten, die einen Audiodatenstrom enthalten. Somit können z. B. die Ausführungsmodi *Notfall, Sicherheit, Regulär* und *Datenstrom* eingeführt werden. Ausführungsmodi werden nach Präferenzen geordnet und definieren z. B. die Prioritäten von Nachrichten, die diesen Ausführungsmodi zugeordnet sind. Darüber hinaus wird ein optimaler, statischer modusbasierter Zeitplan (engl.: mode-based slot schedule) vor Ausführung (engl.: offline) ermittelt, so dass die erforderliche Planbarkeit weiterhin gegeben ist und zur Laufzeit (z. B. während der Zeit, die ein Rahmen vom Sender zum Empfänger benötigt) keine zusätzlich zu übertragenden Daten (engl.: overhead) entstehen. Bezugnehmend auf das in Fig. 5 gezeigte Beispiel werden vier Modi (engl.: modes) verwendet, der Sende/Empfangsknoten 100 ist aber nicht auf solche Beispiele beschränkt, sondern vielmehr kann die Anzahl der Modi beliebig sein.

Die Einführung von Ausführungsmodi eröffnet einerseits das Potential zur Verbesserung der Systemstrukturierung, andererseits bilden die Ausführungsmodi die Grundlage für das modusbasierte Zeitplanen. Der modusbasierte Zeitplan bestimmt für jeden Zeitabschnitt (engl.: time slot) eine Anzahl potentiell zu sendender bzw. bereit zu stellender Nachrichten, wobei pro Zeitabschnitt höchstens eine Nachricht pro Ausführungsmodus (engl.: execution mode) eingeplant wird. Damit weist jeder Zeitabschnitt einen begrenzten Wettbewerb auf, der nach Prioritäten geordnet ist, wodurch eine flexible Nutzung des zugeordneten Zeitabschnitts während der Laufzeit gewährleistet wird. Das Bussystem mit einem Datenbus und einer Mehrzahl von Sende/Empfangsknoten 100 ermöglicht es somit, ein begrenztes, kontrolliertes Ausmaß an dynamischem Wettbewerb für jeden Zeitabschnitt zu ermöglichen. Beim modusbasiertem Zeitplanen kann ein Zeitabschnitt mehreren Sende/Empfangsknoten 100 für die unterschiedlichsten Verwendungszwecke zugeordnet werden. Da dieser Zeitabschnitt bei jedem Auftreten z. B. nur einmal genutzt werden kann, kann sichergestellt werden, dass die Verwendungszwecke nicht widersprüchlich sind. Ein bevorzugter Lösungsansatz kann darin bestehen, Ausführungsmodi zu identifizieren, die sich entweder gegenseitig ausschließen oder die nach Präferenzen geordnet werden können, und den Zeitabschnitt nur einmal pro Ausführungsmodus zuzuordnen. Nachrichten höherer Relevanz, z. B. sicherheitsrelevante Nachrichten, und Nachrichten niedrigerer Relevanz, z. B. ein Audiodatenstrom, können nach Präferenzen geordnet werden und einem Ausführungsmodus zugeordnet werden. Beispielsweise kann zwischen einem Ausführungsmodus *Datenstrom* und einem Ausführungsmodus *Sicherheit* unterschieden werden, wobei sicherheitsrelevante Nachrichten im Ausführungsmodus *Sicherheit* Präferenz vor Unterhaltungsnachrichten bekommen. Anders als bei den zurzeit im Automotive-Bereich eingesetzten Zeitplanungs-Verfahren kann beim modusbasierten Zeitplanen eine kontrollierte Mehrfachbelegung desselben Zeitabschnitts erfolgen. Dadurch werden die verfügbaren Zeitabschnitte besser genutzt, was zu einer verbesserten Auslastung der Kommunikationsressourcen führt.

Das modusbasierte Zeitplanen ist somit eine globale Zeitplanung für Zeitabschnitte mit Mehrfachzuweisungen in verteilten Kommunikationsumgebungen. Nachfolgend wird zunächst ein abstraktes Kommunikationsmodell definiert, wobei folgende Annahme getroffen werden kann: Ein Single-Hop-Netzwerk (engl.: single-hop network) weist eine endliche Menge $V = \{v_1, ..., v_n\}$ von Sende/Empfangsknoten $100_1$ bis $100_n$ (engl.: nodes) auf, die anhand von Verknüpfungen paarweise verbunden sind.

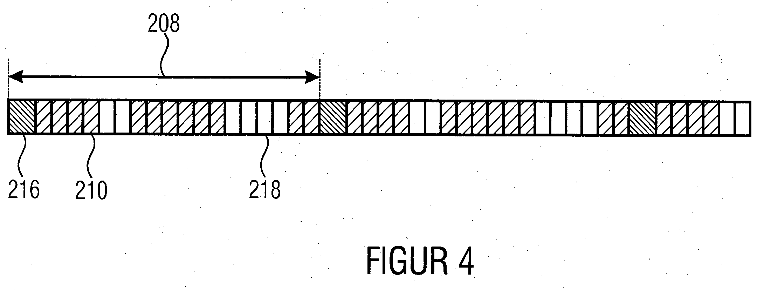

In diesem Zusammenhang zeigt Fig. 4 eine schematische Ansicht einer zeitlichen Strukturierung der Belegung des Übertragungsmediums 200 in Zeitintervallen. Das modusbasierte Zeitplanen beruht auf einem Übertragungsmedium 200 (engl.: medium), das in eine Sequenz von Zeitintervallen unterteilt werden kann (TDMA = time division multiple access, dt. Mehrfachzugriff im Zeitmultiplex). Ferner kann davon ausgegangen werden, dass das Übertragungsmedium 200 in fortlaufend nummerierte Makrozeitabschnitte 208 (engl.: macro slots) gegebener Länge, z. B. gleicher Länge, unterteilt ist, wobei die Makrozeitabschnitte 208 wiederum in nummerierte Mikrozeitabschnitte 210 (engl.: micro slots) unterteilt sind. Nachfolgend werden Mikrozeitabschnitte 210 mit Zeitabschnitte 210 bezeichnet, wobei die Zeitabschnitte 210 den Zeitabschnitten 110 der vorherigen Beispiele (Fig. 2) entsprechen können.

Zuweisungen beziehen sich auf Zeitabschnittsnummern (engl.: micro slot numbers) und gelten für das Auftreten des entsprechenden Zeitabschnitts 210 in jedem Makrozeitabschnitt 208. Somit kann folgende Annahme getroffen werden: Zeit wird in eine kontinuierliche Sequenz von Zeitintervallen gegebener Länge $S^* = (S_1, S_2, ...)$, die als Makrozeitabschnitte 208 bezeichnet werden, unterteilt. Jeder Makrozeitabschnitt $S$ (208) wird wiederum in eine endliche Sequenz $S = (s_1, ..., s_Z)$ von Zeitabschnitten 210, die eine unterschiedliche Länge aufweisen können, unterteilt. Jeder Zeitabschnitt 210 tritt einmal pro Makrozeitabschnitt 208 auf. Das Auftreten eines Zeitabschnitts $s_r$ (210) im Makrozeitabschnitt $S_j$ (208) wird als $s_{j,r}$ bezeichnet.

Die zeitliche Strukturierung des Übertragungsmediums 200 (engl.: medium structuring), die dem modusbasierten Zeitplanen zugrunde liegt, kann als virtuelle Strukturierung angesehen werden, wobei irrelevante Details entfallen, die sonst eine gewisse Bedeutung haben könnten. Beispielsweise kann ein Makrozeitabschnitt 208 zusätzlich ein Synchronisierungsintervall 216 sowie mehrere leere Zeitabschnitte (engl.: idle micro slots) 218 aufweisen. In dem in Fig. 4 gezeigten Beispiel stellen lediglich die grau schattierten Bereiche das Auftreten eines für die Übertragung zugeordneten Zeitabschnitts (engl.: micro slot occurrences) dar. In Fig. 4 sind beispielhaft z=12 Zeitabschnitte 210 für die Übertragung zugeordnet.

Nachfolgend werden Übertragungsmodi (engl.: transmission modes) eingeführt. Übertragungsmodi korrespondieren mit Ausführungsmodi und geben die Präferenz bzw. Priorität von Nachrichten an, wodurch in einem Bussystem Nachrichten nach Relevanz gewichtet werden können. Ferner können Übertragungsmodi z. B. von entsprechenden Systemausführungsmodi (engl.: system execution modes) abgeleitet werden. Modi werden einer eindeutigen Moduspräferenz zugeordnet, die die Priorität der entsprechenden Nachrichten bzw. Datenströme bestimmt. Dabei kann folgende Annahme getroffen werden: Übertragungsmodi (engl.: transmission modes) werden als nicht-leere, endliche Menge $M = \{m_1, ..., m_l\}$ modelliert. Jedem Modus (engl.: mode) wird eine eindeutige Moduspräferenz $mp: M \rightarrow IN_0$ (Element der natürlichen Zahlen) zugewiesen, wobei geringere Werte vereinbarungsgemäß eine höhere Präferenz kennzeichnen. Für die Kennzeichnung der Präferenz können darüber hinaus auch andere Konventionen festgelegt werden.

Für jeden Modus können Zeitabschnitte 210 den Sende/Empfangsknoten $100_1$ bis $100_n$ zugeordnet werden, die diesen Zeitabschnitt 210 nutzen können, um z. B. Rahmen (engl.: frames) verfügbarer Nachrichten zu senden bzw. dem Übertragungsmedium 200 über die Schnittstelle 102 bereit zu stellen. Dies bedeutet, dass bei gegebenen $l$ Modi $m_g$, ein Zeitabschnitt 210 bis zu $l$ mal, möglicherweise verschiedenen Sende/Empfangsknoten $100_1$ bis $100_n$, zugeordnet werden kann. Falls der Zeitabschnitt $s_j$ des Modus $m_g$ einem Sende/Empfangsknoten $v$ (100), z. B. dem Sende/Empfangsknoten $100_2$, zugewiesen ist, gilt dies implizit für das Auftreten dieses Zeitabschnitts 210 in allen Makrozeitabschnitten 208. Damit kann folgende Annahme getroffen werden: $V$ sei ein Single-Hop-Netzwerk, $M$ sei eine Menge von Modi und $S$ sei eine Sequenz von Zeitabschnitten 210. Damit kann eine Teilfunktion, die eine Zuweisung von Zeitabschnitten ($SA$ = slot assignment) definiert, wie folgt angegeben werden:

$$SA: S \times M \rightarrow V$$

Die Zuweisung von Zeitabschnitten ($SA$) kann z. B. statisch bestimmt werden und definiert alle Bandbreitenzuordnungen (engl.: bandwidth allocations). Falls $SA$ für ein bestimmtes Paar $(s,m)$ definiert ist, definiert dies eindeutig einen Sende/Empfangsknoten 100, z. B. den Sende/Empfangsknoten $100_2$, dem alle Auftretensfälle des Zeitabschnitts $s$ (210) in dem Modus $m$ zugewiesen sind. Falls $SA$ für ein bestimmtes Paar $(s,m)$ nicht definiert ist, werden die Auftretensfälle des Zeitabschnitts $s$ (210) in dem Modus $m$ nicht verwendet. Die Definition der Zuweisung von Zeitabschnitten ($SA$) präzisiert somit die erste Bedingung, die den Zeitpunkt zum Bereitstellen des Rahmens der verfügbaren Nachricht angibt.

Fig. 5 zeigt eine Zuweisung von Zeitabschnitten in einer tabellarischen Anordnung für ein vereinfachtes Szenario eines Kraftfahrzeugs. Die Tabelle weist vier Zeitabschnitte $210_1$ bis $210_4$ je Makrozeitabschnitt 208 und vier Modi auf. Modus I: *Notfall* mit der Moduspräferenz eins; Modus II: *Sicherheit* mit der Moduspräferenz zwei; Modus III: *Regulär* mit der Moduspräferenz drei; und Modus IV: *Datenstrom* mit der Moduspräferenz vier. Gemäß dem folgenden Grundprinzip werden die Zeitabschnitte $210_1$ bis $210_4$ sechs verschiedenen Sende/Empfangsknoten $100_1$ bis $100_6$ zugewiesen, wobei zur Veranschaulichung davon ausgegangen wird, dass jeder Sende/Empfangsknoten $100_1$ bis $100_6$ nur Nachrichten eines Typs aufweist. Die Sende/Empfangsknoten $100_1$ bis $100_6$ sind aber nicht auf solche Beispiele beschränkt, sondern vielmehr kann es, falls ein Sende/Empfangsknoten mehrere Nachrichten unterschiedlicher Präferenz aufweist, zunächst zu einem lokalen Wettbewerb kommen.

In dem in Fig. 5 gezeigten Beispiel sendet ein Sende/Empfangsknoten $v_1$ ($100_1$) periodische Unterhaltungsnachrichten, z. B. einen Audiodatenstrom, der die gesamte verfügbare Bandbreite nutzen kann. Deshalb werden dem Sende/Empfangsknoten $v_1$ ($100_1$) im Modus IV *Datenstrom* alle Zeitabschnitte $210_1$ bis $210_4$ zugeordnet. Die Sende/Empfangsknoten $v_2$ ($100_2$) und $v_3$ ($100_3$) senden im Modus III *Regulär,* der Präferenz vor dem Modus IV *Datenstrom* hat, Nachrichten mit sporadischen Ereignissen, die z. B. eine Bewegung der Spiegel und eine Positionierung der Sitze melden. Da diese Ereignisse jedoch selten sind, werden die Zeitabschnitte $210_2$ und $210_4$ üblicherweise nicht von den Sende/Empfangsknoten $v_2$ ($100_2$) und $v_3$ ($100_3$) genutzt. Die Sende/Empfangsknoten $v_4$ ($100_4$) und $v_5$ ($100_5$) senden Nachrichten, die Ereignisse einer drahtgebundenen Lenkung (engl.: steer-by-wire) und einer drahtgebundenen Bremse (engl.: brake-by-wire) aufweisen können, in dem Modus II *Sicherheit* mit einer hohen Präferenz. Der Sende/Empfangsknoten $v_6$ ($100_6$) signalisiert in dem Modus I *Notfall* Ereignisse eines Airbags. Da diese Ereignisse extrem selten sind, können sie sogar Präferenz vor Ereignissen und somit Nachrichten der drahtgebundenen Lenkung haben. Dabei kann folgende Annahme getroffen werden: F sei eine Menge von Rahmen verfügbarer Nachrichten, d. h. zu sendender Nachrichten, S* sei eine Sequenz von Makrozeitabschnitten 208, S sei eine Sequenz von Zeitabschnitten 210, M sei eine Menge von Modi, und V sei ein Single-Hop-Netzwerk. Damit kann eine Teilfunktion, die eine Zuweisung von Rahmen ($FA$ = frame assignment) definiert, wie folgt angegeben werden:

$$FA: S^* \times S \times M \times V \rightarrow F$$

Die Zuweisung von Rahmen (*FA*) bestimmt, welche Rahmen für welchen Zeitabschnitt 210, Modus und Sende/Empfangsknoten 100 eingeplant (engl.: scheduled) sind. In der Praxis wird dies dynamisch entschieden, da die zu sendenden Rahmen verfügbarer Nachrichten in einem nicht bereiten Zustand der Sende/Empfangsknoten $100_1$ bis $100_n$ (engl.: offline) nicht bekannt sind. Ein Rahmen einer ereignisgesteuerten Nachricht wird beim modusbasierten Zeitplanen somit nur dann eingeplant, falls das entsprechende Ereignis eintritt und der Sende/Empfangsknoten 100 dementsprechend eine verfügbare Nachricht aufweist. Beispielsweise werden Nachrichten, die Ereignisse der drahtgebundenen Bremse aufweisen, nur dann eingeplant, wenn ein Fahrer ein Bremspedal betätigt. Ferner müssen Rahmen verfügbarer Nachrichten eventuell mehr als einmal eingeplant werden, falls sie mit anderen Rahmen verfügbarer Nachrichten in Wettbewerb stehen, die einem Modus mit einer höheren Präferenz zugeordnet sind. Mit anderen Worten, falls ein Rahmen einer verfügbaren Nachricht für einen vorgegebenen Zeitabschnitt 210 eingeplant ist, bedeutet das nicht, dass dieser Rahmen auch tatsächlich in diesem Zeitabschnitt 210 gesendet wird.

Gemäß einigen Beispielen steht die Zuweisung eines Rahmens mit der Zuweisung eines Zeitabschnitts im Einklang, d. h. die Zuweisung eines Rahmens respektiert die Zuweisung eines Zeitabschnitts, wobei folgende Annahme getroffen werden kann: *SA* sei die Zuweisung eines Zeitabschnitts, *FA* sei die Zuweisung eines Rahmens. Dann steht *FA* in Einklang mit *SA,* falls:

$$\forall S \in S^*, s \in S, m \in M, v \in V, f \in F. \ (FA(S,s,m,v) = f \Rightarrow SA(s,m) = v).$$

Dabei ist *S* eine Sequenz von Zeitabschnitten 210, *S\** eine Sequenz von Makrozeitabschnitten 208, *s* ein Zeitabschnitt 210, *M* eine Menge von Modi, *m* ein Modus, *V* ein Single-Hop-Netzwerk, *v* ein Sende/Empfangsknoten 100, *F* eine Menge von Rahmen verfügbarer Nachrichten und *f* ein Rahmen einer verfügbaren Nachricht. Die Strategie des modusbasierten Zeitplanens präzisiert somit die zweite Bedingung, die angibt, dass die dem Rahmen einer verfügbaren Nachricht zugeordnete Sendepriorität für den zugeordneten Zeitabschnitt höher ist als eine weitere Sendepriorität eines Rahmens einer weiteren verfügbaren Nachricht eines weiteren, mit dem Übertragungsmedium verbundenen Sende/Empfangsknotens.

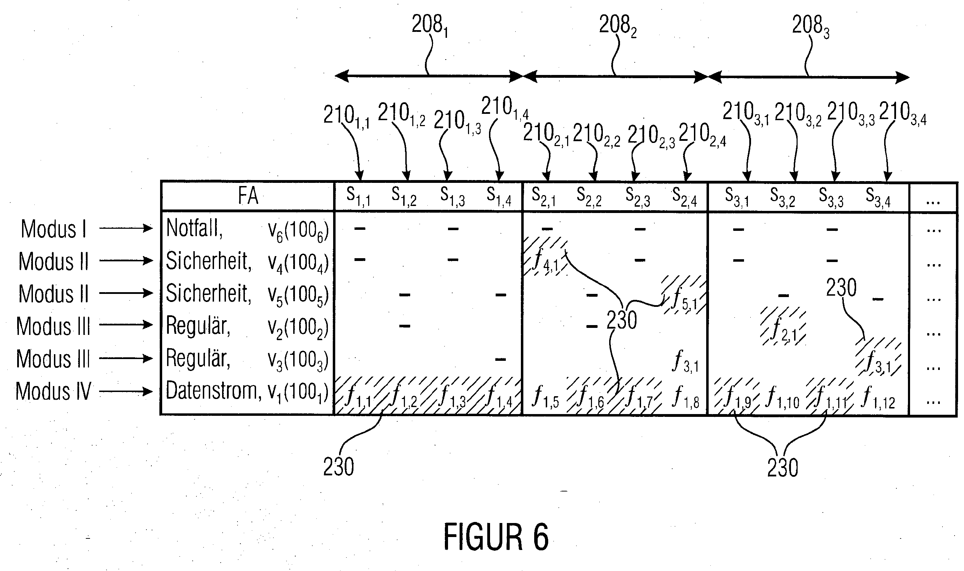

Fig. 6 zeigt eine Zuweisung von Rahmen, die mit einer Zuweisung von Zeitabschnitten in Einklang steht, in einer tabellarischen Anordnung. Eingeplante Rahmen verfügbarer Nachrichten sind durch einen Eintrag $f_{x,y}$ gekennzeichnet, wobei der erste Index dem Index des Sende/Empfangsknotens $100_1$ bis $100_6$ entspricht und der zweite Index eine fortlaufende Nummerierung ist. In Fig. 6 weisen die Bezugszeichen der Makrozeitabschnitte 208 zeitlich fortlaufend nummerierte Indexe auf, während die Bezugszeichen der Zeitabschnitte 210 durch zwei Indexe gekennzeichnet sind, wobei der erste Index dem Index des zugehörigen Makrozeitabschnitts 208 und der zweite Index eine fortlaufende Nummerierung innerhalb eines Makrozeitabschnitts 208 entspricht. Zuweisungen von Zeitabschnitten 210, die keine eingeplanten Rahmen aufweisen, sind durch einen Eintrag „-" gekennzeichnet. In dem in Fig. 6 gezeigten Beispiel, ist der Sende/Empfangsknoten $v_1$ ($100_1$) bereit, die gesamte mögliche Bandbreite zu nutzen, wohingegen die anderen Sende/Empfangsknoten 1002 bis $100_6$ lediglich sporadische Erfordernisse aufweisen.

Das Konzept des modusbasierten Zeitplanens lässt sich somit wie folgt definieren: *FA: S\* x S x M x V → F* sei eine Zuweisung von Rahmen, *tx ⊆ S\* x S x V x F* sei eine Beziehung, die definiert, ob ein Rahmen einer verfügbaren Nachricht bei einem Auftreten eines gegebenen Zeitabschnitts 210 seitens eines Sende/Empfangsknoten 100 gesendet wird. Dann ist modusbasiertes Zeitplanen eine Strategie, bei der bei jedem Auftreten eines Zeitabschnitts 210 der eingeplante Rahmen gesendet wird, der die verfügbare Nachricht mit der höchsten Moduspräferenz aufweist. Damit ergibt sich formal folgender Zusammenhang:

$$\forall S \in S^*, s \in S, m \in M, v \in V. \ \exists f \in F. \ (f = FA(S,s,m,v) \ \wedge \ \forall m' \in M, v' \in V, f' \in F. \ (m'$$
$$\neq m \ \wedge \ f' = FA(S,s,m',v') \ \wedge \ mp(m) < mp(m')) \Rightarrow tx(S,s,v,f)).$$

Dabei ist *S* eine Sequenz von Zeitabschnitten 210, *S\** eine Sequenz von Makrozeitabschnitten 208, *s* ein Zeitabschnitt 210, *M* eine Menge von Modi, *m* ein Modus, *m'* ein weiterer Modus, *V* ein Single-Hop-Netzwerk, *v* ein Sende/Empfangsknoten 100, *v'* ein weiterer Sende/Empfangsknoten 100, *F* eine Menge von Rahmen verfügbarer Nachrichten, *f* ein Rahmen einer verfügbaren Nachricht, *f'* ein weiterer Rahmen einer weiteren verfügbaren Nachricht, *FA* eine Zuweisung von Rahmen und *mp* die Moduspräferenz, wobei *tx* angibt, ob ein Sende/Empfangsknoten 100 einen Rahmen einer verfügbaren Nachricht während des zugeordneten Zeitabschnitts 210 sendet.

Aus den obigen Definitionen folgt, dass bei jedem Auftreten eines Zeitabschnitts 210 höchstens ein Sende/Empfangsknoten 100 senden kann. Den Wettbewerb für den zugeordneten Zeitabschnitt 210 gewinnt immer derjenige Sende/Empfangsknoten 100, der die Nachricht mit der höchsten Sendepriorität bzw. dem Modus höchster Präferenz aufweist. Dabei wird pro Zeitabschnitt höchstens eine Nachricht pro Modus eingeplant, so dass zu einem zugeordneten Zeitabschnitt niemals zwei bzw. mehrere Sende/Empfangsknoten 100 verfügbare Nachrichten mit der gleichen Sendepriorität aufweisen. In dem in Fig. 6 gezeigten Beispiel kann z. B. der Sende/Empfangsknoten $100_4$ im Zeitabschnitt $210_{2,1}$ senden. Ferner kennzeichnen in Fig. 6 die schattierten Einträge 230 die Rahmen, die gemäß dem modusbasierten Zeitplan gesendet werden. Somit ist beim modusbasierten Zeitplanen, für die in Fig. 6 gezeigte Zuweisung von Zeitabschnitten, ein zeitgesteuertes Kommunikationsmedium ausreichend, wohingegen für die Realisierung eines vollkommen deterministischen Zeitplans (engl.: schedule), je nach Echtzeitanforderungen, mehr als ein Kommunikationsmedium erforderlich ist.

Ob ein Rahmen einer verfügbaren Nachricht übertragen wird oder nicht, ist eine verteilte Entscheidung, bei der alle Sende/Empfangsknoten $100_1$ bis $100_n$ ausgebildet sind, um basierend auf ihren lokalen Informationen einstimmig zu entscheiden. Falls für einen zugeordneten Zeitabschnitt 210, mehrere Nachrichten untereinander in Wettbewerb stehen, gewinnt die Nachricht, die den höchsten Übertragungsmodus aufweist. Die Rahmen verfügbarer Nachrichten, die den Wettbewerb verlieren, werden entweder neu eingeplant oder verworfen; dies sind jedoch anwendungsspezifische Entscheidungen, die das modusbasierte Zeitplanen nicht betrifft. In dem in Fig. 6 gezeigten Beispiel werden die Rahmen der verfügbaren Nachrichten im Modus IV *Datenstrom,* z. B. die Rahmen $f_{1,5}$ und $f_{1,8}$, verworfen, während der Rahmen der verfügbaren Nachricht im Modus III *Regulär,* z. B. der Rahmen $f_{3,1}$, neu eingeplant wird. Solange im Modus I *Notfall* keine Nachrichten vorhanden sind, gewinnen die Rahmen der verfügbaren Nachrichten im Modus II *Sicherheit* den Wettbewerb; somit ist in diesen Fällen keine neue Einplanung erforderlich. Da es für jeden Zeitabschnitt 210 erforderlich ist, dass der Rahmen gesendet wird, der die Nachricht mit dem Modus mit der höchsten Präferenz aufweist, ist die schnelle Signalisierung des aktuellen Modus eine Grundvoraussetzung für eine effiziente Implementierung des modusbasierten Zeitplanens.

Für eine effiziente Implementierung des oben beschriebenen modusbasierten Zeitplanens wird der aktuelle Modus mit der höchsten Präferenz schnell und zuverlässig durch das Netzwerk bzw. über den Datenbus verbreitet. Nachfolgend wird dies mit schneller Modussignalisierung (engl.: fast mode signaling) bezeichnet. Darüber hinaus kann durch die schnelle Modussignalisierung sichergestellt werden, dass zu Beginn jedes Zeitabschnitts bzw. nach einer sehr kurzen (vernachlässigbaren) Verzögerung der aktuelle Übertragungsmodus allen Sende/Empfangsknoten $100_1$ bis $100_n$ bekannt ist. Die schnelle Modussignalisierung kann, in Abhängigkeit vom Geltungsbereich (engl.: scope) der Übertragungsmodi, auf unterschiedliche Weise erfolgen.

Bei einem Bussystems mit einem Datenbus 200 und einer Mehrzahl von Sende/Empfangsknoten $100_1$ bis $100_n$ sowie mit modusbasiertem Zeitplanen wird der Geltungsbereich der Übertragungsmodi auf einzelne (engl.: individual) Sende/Empfangsknoten 100 beschränkt. Hierdurch entsteht ein kontrollierbarer Wettbewerb zwischen den Sende/Empfangsknoten 100, wobei jeder Sende/Empfangsknoten 100 für den zugeordneten Zeitabschnitt 210 die Zuweisung von Rahmen bestimmen kann. Wenn also eine nicht-leere Menge von eingeplanten Rahmen verfügbarer Nachrichten vorliegt, dann ist der Modus mit der höchsten Präferenz der lokale Modus, der auf den zugeordneten Zeitabschnitt 210 anzuwenden ist. Zum Senden des Rahmens der verfügbaren Nachricht konkurriert der Sende/Empfangsknoten 100 mit anderen Sende/Empfangsknoten $100_1$ bis $100_n$, indem der Sende/Empfangsknoten 100 den Modus bzw. die Sende-priorit ät der verfügbaren Nachricht auf eine kollisionsgeschützte Weise signalisiert. Die schnelle Modussignalisierung ermöglicht somit eine busweite, deterministische Signalisierung des aktuellen Modus mit der höchsten Priorität unmittelbar zu Beginn eines Zeitabschnitts und ist damit echtzeitfähig. Dieses Konzept der schnellen Modussignalisierung eignet sich insbesondere für die effiziente Implementierung des modusbasierten Zeitplanens.

Das Konzept der schnellen Modussignalisierung hat gegenüber einem systemweiten bzw. globalen Geltungsbereich der Übertragungsmodi wesentliche Vorteile. Bei einem globalen Geltungsbereich könnten nur die Zeitabschnitte genutzt werden, die dem aktuellen Übertragungsmodus zugeordnet sind. Ferner wäre es erforderlich, den globalen Modus z. B. zu Beginn jedes Makrozeitabschnitts oder zu Beginn jedes Zeitabschnitts zu signalisieren. Hierdurch könnten Rahmen verfügbarer Nachrichten, die dem aktuell signalisierten Modus zugeordnet sind, sofort und ohne weiteren Wettbewerb gesendet werden. Falls jedoch keine Nachricht den aktuell signalisierten Modus aufweist, kann der Zeitabschnitt nicht genutzt werden, solange der aktuelle Übertragungsmodus besteht. Darüber hinaus stehen globale Übertragungsmodi in Konflikt mit dem modusbasierten Zeitplanen, da eine effiziente Nutzung der verfügbaren Bandbreite nicht mehr sichergestellt wird.

Der modusbasierte Zeitplan kann durch die schnelle Modussignalisierung auf einem drahtgebundenen, zeitgesteuerten Datenbus mit Mehrfachzugriff realisiert werden. Die Prioritäten der Modi werden bei der Mediumarbitrierung in der Form umgesetzt, dass nach der (sehr kurzen) Arbitrierungsphase nur ein Sende/Empfangsknoten 100 sendet. Auf diese Weise können bei gegebenem Anforderungsprofil Echtzeitgarantien gegeben werden, soweit dies erforderlich ist. Ferner wird eine verbesserte Auslastbarkeit drahtgebundener Datenbusse im Echtzeitbetrieb ermöglicht. Das Konzept der Ausführungsmodi, des modusbasierten Zeitplanens und der schnellen Modussignalisierung ermöglicht somit eine echtzeitfähige Lösung für drahtgebundene, zeitgesteuerte Datenbusse mit Mehrfachzugriff. Hierzu wird ein statischer Zeitplan, ein kontrollierter Wettbewerb pro Zeitabschnitt sowie eine sehr schnelle dynamische Signalisierung des aktuellen Modus mit der höchsten Präferenz genutzt.

Dabei kann der Sende/Empfangsknoten 100 ausgebildet sein, um die Sendepriorität der verfügbaren Nachricht dem Übertragungsmedium zu dem zugeordneten Zeitabschnitt bereit zu stellen und um eine weitere Sendepriorität einer weiteren Nachricht eines weiteren, mit dem Übertragungsmedium verbundenen Sende/Empfangsknotens zu empfangen. Darüber hinaus kann z. B. der Sende/Empfangsknoten 100, der die Nachricht mit der höchsten Sendepriorität aufweist, ausgebildet sein, um die Sendepriorität der Nachricht zu dem zugeordneten Zeitabschnitt zu signalisieren, den Rahmen der verfügbaren Nachricht jedoch sofort zu senden, ohne eine weitere Sendepriorität zu empfangen und diese mit der eigenen zu vergleichen. Dies ist möglich, da der Sende/Empfangsknoten 100, der die Nachricht mit der höchsten Priorität aufweist, den Wettbewerb für den zugeordneten Zeitabschnitt immer gewinnt. Ferner kann der Sende/Empfangsknoten, der die Nachricht mit der niedrigsten Sendepriorität aufweist, z. B. ausgebildet sein, um den Rahmen der verfügbaren Nachricht zu dem zugeordneten Zeitabschnitt dem Übertragungsmedium über die Schnittstelle bereit zu stellen, falls keine weitere Sendepriorität empfangbar ist, ohne die Sendepriorität der verfügbaren Nachricht zu signalisieren. Dies ist möglich, da der Sende/Empfangsknoten 100, der die Nachricht mit der niedrigsten Sendepriorität aufweist, den Wettbewerb für den zugeordneten Zeitabschnitt immer verliert.

Eine Mehrzahl von Sende/Empfangsknoten 100 können in einem Single-Hop-Netzwerk vernetzt werden. Darüber hinaus können mehrere Bussysteme mit einem Datenbus 200 und einer Mehrzahl von Sende/Empfangsknoten 100 über Netzübergangsknoten (engl.: gateway nodes) zu einem Multi-Hop-Netzwerk (engl.: multi-hop network) zusammengefasst werden, wobei Adressierungsschemata und Routingprotokolle einer höheren Ebene erforderlich sind. Um bei Multi-Hop-Netzwerken ein deterministisches Verhalten sicherzustellen, können z. B. Zeitabschnitte in den unterschiedlichen Bussystemen derart angeordnet werden, dass Nachrichten, die von einem Netzübergangsknoten empfangen werden, zeitnah während des nächsten Sprunges (engl.: hop) weitergeleitet werden. Das Prinzip zum Auffinden geeigneter modusbasierter Zeitpläne für Multi-Hop-Netzwerke ist das gleiche wie beim modusbasierten Zeitplanen für Single-Hop-Netzwerke. Das Konzept der schnellen Modussignalisierung ist ebenfalls für drahtgebundene Multi-Hop-Netzwerke anwendbar.

Nachfolgend werden Realisierungen der modusbasierten Zeitplanung (engl.: mode-based scheduling) und der schnellen Modussignalisierung (engl.: fast mode-signalling) mit FlexRay betrachtet, wobei der FlexRay-Standard 2.1 gemäß der FlexRay-Spezifikation [FlexRay Consortium: FlexRay Communications System - Protocol Specification v2.1, Revision A. December 2005] zugrunde gelegt wird. Zum besseren Verständnis wird zunächst auf die grundlegende Funktionsweise von FlexRay eingegangen. Daraufhin werden Realisierungen betrachtet, die mit dem bestehenden FlexRay-Standard verträglich sind (standardverträgliche technische Realisierung). Anschließend werden flexible Realisierungen der modusbasierten Zeitplanung erörtert, die eine Verallgemeinerung des FlexRay-Standards erfordern (technische Realisierung mit FlexRay auf Basis von Verallgemeinerungen des Standards).

FlexRay ist ein Fahrzeugbus, welcher speziell, entsprechend den Anforderungen im Automotive-Bereich von einem Industriekonsortium, bestehend aus führenden Unternehmen im Automobilsegment wie BMW, Bosch, Daimler und General Motors sowie führenden Chipherstellern wie NXP Semiconductors, Philips und Motorola seit 2000 entwickelt wurde. Der aktuelle Protokollstandard FlexRay 2.1A gemäß der FlexRay-Spezifikation wurde 2005 veröffentlicht. Das Konsortium löste sich 2009 auf; zurzeit wird der FlexRay-Standard in einen ISO-Standard überführt.

FlexRay ist ein deterministisches, zeitgetriggertes Kommunikationsprotokoll mit integrierter Unterstützung für ereignisgetriggerte Kommunikation mit dynamischer, prioritätsbasierter Bandbreitenvergabe. FlexRay erlaubt durch die harte Echtzeitfähigkeit aufgrund der Zusicherung deterministischer Garantien sowie durch die beiden physikalisch getrennten Übertragungskanäle die notwendige Redundanz für den Einsatz in sicherheitskritischen Anwendungsszenarien wie einer drahtgebundenen Lenkung (engl.: steer-by-wire) oder einer drahtgebundenen Bremse (engl.: brake-by-wire). Die beiden Kanäle bieten eine Übertragungsrate von je 10 MBit/s und können entweder für die zeitgleiche redundante Übertragung von Rahmen oder die unabhängige Übertragung genutzt werden.

Fig. 7 zeigt eine zeitliche Strukturierung der Belegung des FlexRay-Datenbusses 300 gemäß der FlexRay-Spezifikation. FlexRay unterteilt die Zeit in gleichlange und gleichstrukturierte Zeitabschnitte, die als Kommunikationszyklen 310 (kurz: Zyklus) bezeichnet werden. Jeder Kommunikationszyklus 310 (engl.: communication cycle) besteht aus einem verpflichtenden statischen Segment 312 (engl.: static segment), einem optionalen dynamischen Segment 314 (engl.: dynamic segment), einem ebenfalls optionalen Symbol Fenster 316 (engl.: symbol window) sowie einer verpflichtenden Netzwerkleerlaufzeit 318 (engl.: network idle time, NIT). Die Kommunikationszyklen 310 sind von 0 bis 63 durchnummeriert. Nach dem Kommunikationszyklus mit der Nummer 63 beginnt die Zählung wieder bei 0.

Das statische Segment 312 ist weiterhin unterteilt in eine konfigurierbare, aber feste Anzahl statischer Zeitschlitze $320_k$ ($1 \leq k \leq i$, wobei i und k natürliche Zahlen sind) (engl.: static slots) gleicher Länge, die maximal einem Knoten 100 (FlexRay-Standard 2.1A, FlexRay-Spezifikation) zur exklusiven Nutzung zugeordnet sind. Die Zeitschlitze $320_k$ des statischen Segments 312 sind fortlaufend nummeriert (k), beginnend bei 1 (k = 1). Die Länge der statischen Zeitschlitze $320_k$ wird in Makroticks 324 (engl.: macroticks) angegeben; hierbei handelt es sich um die kleinste gemeinsame, netzwerkweit synchronisierte Zeiteinheit des FlexRay-Protokolls. Die Berechnung der Korrekturwerte und deren Anwendung auf die lokalen Uhren der einzelnen Knoten 100 erfolgt in der Netzwerkleerlaufzeit 318.

Das dynamische Segment 314 setzt sich aus einer konfigurierbaren, aber festen Anzahl von Minizeitschlitzen 322 (engl.: minislots) gleicher Länge zusammen. Die Länge eines Minizeitschlitzes 322 wird wieder in Makroticks 324 angegeben. Zur Laufzeit werden die Minizeitschlitze 322 durch den Minizeitschlitz-Mechanismus zu dynamischen Zeitschlitzen $320_d$ (d = i+1, i+2, i+3, ..., i+w; wobei w eine natürliche Zahl größer gleich 1 ist (w ≥ 1)) (engl.: dynamic slots) kombiniert, deren Länge sich nach den Anforderungen zur Laufzeit richtet. Die dynamischen Zeitschlitze $320_d$ werden sequenziell nummeriert (d) und setzen die Nummerierung (k) der statischen Zeitschlitze $320_k$ fort. Jeder dynamische Zeitschlitz $320_d$ besteht aus mindestens einem Minizeitschlitz 322. Wenn ein Knoten 100 in einem dynamischen Zeitschlitz $320_d$ eine Übertragung beginnt, wird dieser so lange um zusätzliche Minizeitschlitze 322 erweitert, bis die Übertragung abgeschlossen ist. Erfolgt in einem Minizeitschlitz 322 keine Übertragung, erhöhen die einzelnen Knoten 100 ihren internen Zeitschlitzzähler (d) um 1. Die Zuordnung der dynamischen Zeitschlitznummern (d) zu den einzelnen Knoten 100 erfolgt bei der Konfiguration und muss sicherstellen, dass es zu keinen Kollisionen kommt. Ein Knoten 100 darf eine Übertragung nur in den dynamischen Zeitschlitzen $320_d$ starten, die ihm zugeordnet sind. Darüber hinaus müssen die Knoten 100 sicherstellen, dass eine Übertragung innerhalb der Grenzen des dynamischen Segments 314 abgeschlossen wird. Die dynamischen Zeitschlitzummern (d) entsprechen den Prioritäten der einzelnen Rahmen $330_d$ und ermöglichen eine prioritätsbasierte Vergabe der verfügbaren Bandbreite. Eine niedrige Zeitschlitznummer (d) entspricht hierbei einer hohen Priorität. Fig. 7 zeigt die Übertragung zweier unterschiedlich langer Rahmen $330_{d=i+1}$ und $330_{d=i+3}$ im dynamischen Segment 314. Der Rahmen $330_{d=i+1}$ mit der Zeitschlitznummer d = i+1 hat eine höhere Priorität als der Rahmen $330_{d=i+3}$ mit der Nummer d = i+3 und wird daher zuerst übertragen.

Das optionale Symbol-Fenster 316 (engl.: symbol window) wird zur Übertragung von speziellen Symbolen, wie zum Beispiel dem Mediumzugriff-Testsymbol (engl.: media access test symbol) verwendet. Für weitere Details zum FlexRay-Protokoll sei an dieser Stelle auf die FlexRay-Spezifikation verwiesen.

Das dynamische Segment 314 ermöglicht eine prioritätsbasierte Vergabe der verfügbaren Bandbreite und unterstützt so in besonderem Maße die Anforderungen ereignisbasierter Kommunikation. In diesem Abschnitt wird eine Methode zur Abbildung von modusbasierter Zeitplanung (engl.: mode-based scheduling) und schneller Modussignalisierung (engl.: fast möde-signalling) auf das dynamische Segment 314 des FlexRay-Protokolls erläutert. Des Weiteren werden die sich ergebenden Einschränkungen durch das Protokoll selbst sowie die am Markt verfügbare Hardware zur Anbindung von Knoten 100 an den FlexRay-Bus 300 untersucht. Das hier vorgestellte Verfahren ist konform zum FlexRay-Standard 2.1A und ermöglicht darüber hinaus, Knoten 100, die modusbasierte Zeitplanung und schnelle Modussignalisierung nutzen, und Knoten 100, die diese Konzepte nicht kennen, zusammen in einem Netzwerk zu betreiben. Basierend auf dieser ersten Lösung werden Einschränkungen diskutiert und Vorschläge gemacht, wie diese durch entsprechende Unterstützung der Konzepte auf Ebene der Kommunikationscontroller (engl.: communication controller = CC) sowie optimierte Methoden zur Umsetzung der modusbasierten Zeitplanung und der schnellen Modussignalisierung behoben werden können, ohne dabei den bestehenden FlexRay-Standard 2.1A zu verletzen.

Die im FlexRay-Standard verwendete Terminologie weist einen hohen Grad an Gemeinsamkeiten mit den in dem allgemeinen Abschnitt verwendeten Begrifflichkeiten auf. An dieser Stelle sei explizit darauf hingewiesen, dass die Begriffe nicht die gleichen Konzepte bezeichnen. Da sich die hier beschriebene Erfindung auf eine Erweiterung des FlexRay-Protokolls bezieht, werden die Begrifflichkeiten des FlexRay-Standards verwendet, um die Konzepte des FlexRay-Protokolls zu beschreiben (z. B. statischer Zeitschlitz $320_k$, dynamischer Zeitschlitz $320_d$ usw.). Um Konzepte der modusbasierten Zeitplanung und der schnellen Modussignalisierung zu adressieren, werden diese, sofern der Name nicht eindeutig ist, explizit kenntlich gemacht. So wird im Folgenden ein Zeitschlitz (engl.: timeslot) bei der modusbasierten Zeitplanung, wie dieser in dem allgemeinen Abschnitt definiert wird, als modusbasierter Zeitschlitz 110 (210) bezeichnet.

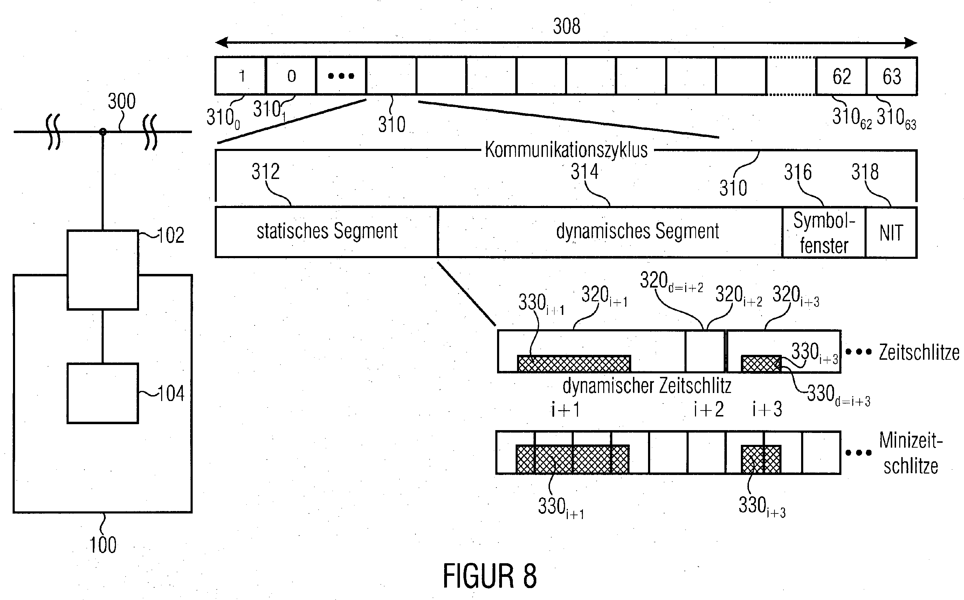

Fig. 8 zeigt einen Sende/Empfangsknoten 100 mit einer Schnittstelle 102 zum Herstellen einer Verbindung mit einem FlexRay-Datenbus 300 sowie eine zeitliche Strukturierung der Belegung des FlexRay-Datenbusses 300 gemäß einem Ausführungsbeispiel der vorliegenden Erfindung. Der Sende/Empfangsknoten 100 ist ausgebildet, um bei einer Abfolge von Zeitabschnitten 108 das Auftreten einer ersten Bedingung und einer zweiten Bedingung zu erfassen und, falls die erste und die zweite Bedingung für einen zugeordneten Zeitabschnitt 110 erfüllt sind, um dem FlexRay-Datenbus 300 während des zugeordneten Zeitabschnitts 110 einen Rahmen einer verfügbaren Nachricht über die Schnittstelle 102 bereit zu stellen, wobei die erste Bedingung gemäß einem Zeitplan den zugeordneten Zeitabschnitt 110 zum Bereitstellen des Rahmens der verfügbaren Nachricht angibt, und wobei die zweite Bedingung angibt, dass die der Nachricht zugeordnete Sendepriorität für den zugeordneten Zeitabschnitt 110 höher ist als eine weitere Sendepriorität einer weiteren verfügbaren Nachricht eines weiteren, mit dem FlexRay-Datenbus 300 verbundenen Sende/Empfangsknotens für den selben zugeordneten Zeitabschnitt 110. Dabei ist die Abfolge von Zeitabschnitten 108 eine Abfolge von Kommunikationszyklen 308 des FlexRay-Datenbusses 300, wobei der zugeordnete Zeitabschnitt 110 ein zugeordneter Kommunikationszyklus 310 der Abfolge von Kommunikationszyklen 308 ist, wobei der zugeordnete Kommunikationszyklus 310 ein dynamisches Segment 314 mit dynamischen Zeitschlitzen $320_d$ aufweist, wobei einem der dynamischen Zeitschlitze $320_d$ die Sendepriorität der verfügbaren Nachricht und einem weiteren der dynamischen Zeitschlitze $320_d$ die Sendepriorität der weiteren verfügbaren Nachricht zugeordnet ist.

Bei Ausführungsbeispielen kann die erste und zweite Bedingung so vorgegeben sein, dass das Auftreten der ersten und der zweiten Bedingung derart in Form einer Matrix darstellbar ist, dass eine erste Dimension der Matrix die Zeitabschnitte des Zeitplans zum Bereitstellen der Rahmen aufweist und eine zweite Dimension der Matrix die vorgegebenen Sendeprioritäten der Nachrichten aufweist, wobei in der ersten Dimension der Matrix Nachrichten gleicher Sendeprioritäten vorhanden sind, und wobei die in der zweiten Dimension der Matrix auftretenden vorgegebenen Sendeprioritäten der Nachrichten unterschiedlich sind (vgl. Fig. 5 und 6).

Beispielsweise kann dem dynamischen Zeitschlitz $320_{d=i+1}$ die Sendepriorität der verfügbaren Nachricht und dem dynamischen Zeitschlitz $320_{d=i+3}$ die Sendepriorität der weiteren verfügbaren Nachricht zugeordnet werden. Dabei kann der Sende-/Empfangsknoten 100 ausgebildet sein, um, falls die erste und die zweite Bedingung für den zugeordneten Kommunikationszyklus 310 erfüllt sind, den Rahmen $330_{d=i+1}$ der verfügbaren Nachricht in dem dynamischen Zeitschlitz $320_{d=i+1}$ zu übertragen, dem die Sendepriorität der verfügbaren Nachricht zugeordnet ist. Natürlich kann auch einem anderen dynamischen Zeitschlitz, wie z. B. dem dynamischen Zeitschlitz $320_{d=i+2}$ oder dem dynamischen Zeitschlitz $320_{d=i+3}$, die Sendepriorität der verfügbaren Nachricht zugeordnet werden.

Ferner können die dynamischen Zeitschlitze $320_d$ entsprechend ihrem zeitlichen Auftreten in dem dynamischen Segment 314 fortlaufend nummeriert (d) sein, wobei zumindest zwei dynamischen Zeitschlitzen Sendeprioritäten derart zugeordnet sind, dass einem dynamischen Zeitschlitz, der eine geringere Nummerierung (d) aufweist, eine höhere Sendepriorität zugeordnet ist, als einem dynamischen Zeitschlitz, der eine höhere Nummerierung (d) aufweist, wobei die zumindest zwei dynamischen Zeitschlitze den dynamischen Zeitschlitz, dem die Sendepriorität der verfügbaren Nachricht zugeordnet ist, und den weiteren dynamischen Zeitschlitz, dem die Sendepriorität der weiteren verfügbaren Nachricht zugeordnet ist, umfassen. Dabei können die zumindest zwei dynamischen Zeitschlitze, bezogen auf ihr zeitliches Auftreten an einem Anfang des dynamischen Segments angeordnet sein.

Beispielsweise kann dem dynamischen Zeitschlitz $320_{d=i+1}$ eine höhere Sendepriorität zugeordnet werden, als dem dynamischen Zeitschlitz $320_{d=i+2}$, wobei dem dynamischen Zeitschlitz $320_{d=i+2}$ eine höhere Sendepriorität zugeordnet werden kann, als dem dynamischen Zeitschlitz $320_{d=i+3}$. Bezogen auf das oben erwähnte Beispiel, bei welchem dem dynamischen Zeitschlitz $320_{d=i+1}$ die Sendepriorität der verfügbaren Nachricht und dem dynamischen Zeitschlitz $320_{d=i+3}$ die Sendepriorität der weiteren verfügbaren Nachricht zugeordnet ist, würde der Sende/Empfangsknoten, der den Rahmen $330_{d=i+1}$ der verfügbaren Nachricht aufweist, den begrenzten Wettbewerb gewinnen, so dass der Sende/Empfangsknoten 100 den dynamischen Zeitschlitz $320_{d=i+1}$ nutzen kann, um den Rahmen $330_{d=i+1}$ der verfügbaren Nachricht zu übertragen.

Die grundlegende Idee dieser ersten Umsetzungsvariante ist die Abbildung jeweils eines modusbasierten Zeitschlitzes 110 auf einen Kommunikationszyklus 310 des FlexRay-Protokolls. Für die Übertragung der Daten wird das dynamische Segment 314 verwendet. Aufgrund der Eigenschaften des von FlexRay verwendeten FTDMA-Verfahrens (Minizeitschlitz-Mechanismus) kann der modusbasierte Zeitschlitz 110 an den Anfang des dynamischen Segments 314 gelegt werden (FTDMA= Flexible Time Division Multiple Access, dt. Flexibler Mehrfachzugriff im Zeitmultiplex). Je nach Anwendungsszenario kann das verpflichtende statische Segment 312 auf dessen minimal zulässige Länge konfiguriert werden. Ebenso kann die Länge des dynamischen Segments 314 so gewählt werden, dass der modusbasierte Zeitschlitz 110 dieses komplett ausfüllt und somit die Gesamtlänge eines Kommunikationszyklus 310 minimal für das gewählte Szenario ist. Die im Weiteren vorgestellte Lösung erlaubt auch einen Mischbetrieb, der die Nutzung des statischen Segments 312 und zusätzlich die Verwendung des noch verbleibenden dynamischen Segments 314 für eine rein ereignis- und prioritätsbasierte Kommunikation ermöglicht.

Für die folgenden Betrachtungen sei $M = \{m_1,...,m_l\}$ die nicht leere, endliche Menge der Modi (engl.: modes). Jedem Modus wird eine eindeutige Moduspräferenz $mp: M \rightarrow \mathbb{N}_0$ zugewiesen. Des Weiteren sei $V = \{v_1,...,v_n\}$ die Menge der Knoten 100 des Netzwerks. Hierbei wird im Folgenden davon ausgegangen, dass ein niedrigerer Wert einer höheren Präferenz entspricht (vgl. allgemeiner Abschnitt). Die Zuordnung der Sendeberechtigung eines Knotens 100 zu einem modusbasierten Zeitschlitz 110 (310) erfolgt mittels der partiellen Funktion $SA: S \times M \rightarrow_p V$. Die entsprechenden formalen Definitionen hierzu sind in dem allgemeinen Abschnitt zu finden.

Bei Ausführungsbeispielen kann die zweite Bedingung ferner erfüllt sein, wenn in dem dynamischen Segment 314 vor dem Auftreten des dynamischen Zeitschlitzes $320_d$, dem die Sendepriorität der verfügbaren Nachricht zugeordnet ist, der Rahmen der weiteren verfügbaren Nachricht nicht übertragen wurde.

Beispielsweise kann dem dynamischen Zeitschlitz $320_{d=i+3}$ die Sendepriorität der verfügbaren Nachricht zugeordnet sein. In diesem Fall ist die zweite Bedingung erfüllt, wenn in dem dynamischen Segment 314 vor dem Auftreten des dynamischen Zeitschlitzes $320_{d=i+3}$, also in den dynamischen Zeitschlitzen $320_{d=i+1}$ und $320_{d=i+2}$, der Rahmen der weiteren verfügbaren Nachricht nicht übertragen wurde.

Bei der Umsetzung von modusbasierter Zeitplanung und schneller Modussignalisierung mittels FlexRay werden also die Moduspräferenzen auf die Prioritäten (Zeitschlitznummern (d)) des dynamischen Segments 314 abgebildet, wobei eine niedrigere Zeitschlitznummer (d) einer höheren Priorität entspricht. Jedem Modus wird mittels der in Definition 1 beschriebenen Abbildungsvorschrift eine eindeutige Zeitschlitznummer (d) des dynamischen Segments 314 zugeordnet. Die Abbildungsvorschrift gewährleistet, dass die auf den Modi durch die Funktion $mp$ induzierte Präferenzrelation aufrechterhalten wird. Die Abbildung erfolgt auf sukzessive aufeinander folgende Zeitschlitznummern (d). Dies ermöglicht es, die verfügbare Bandbreite effektiv zu nutzen. Die Abbildung auf sukzessive aufeinander folgende Zeitschlitznummern (d) bietet sich an, da bei FlexRay jede vergebene Zeitschlitznummer (d) des dynamischen Segments 314 mindestens einen Minizeitschlitz 322 und damit Bandbreite beansprucht. Dies gilt insbesondere auch, wenn kein Rahmen $330_d$ in dem dynamischen Zeitschlitz $320_d$ versendet wird (vgl. FlexRay-Spezifikation, Kapitel 5.1.4 bzgl. Details zur Funktionsweise des Minizeitschlitz-Mechanismus).

Durch die Konfiguration des dynamischen Segments 314 und des Kommunikationscontrollers kann sichergestellt werden, dass ein Knoten $v \in V$ (100) Nachrichten mit dem Modus $m \in M$ nur in den modusbasierten Zeitschlitzen $s \in S$ (110) versenden kann, für die dieser eine entsprechende Zeitschlitzallokation besitzt, d.h. $SA(s,m)$ ist definiert und es gilt $SA(s,m)=v$. Zusätzlich kann sichergestellt werden, dass, wenn mehrere Knoten 100 in einem modusbasierten Zeitschlitz 110 (310) sendeberechtigt und -bereit sind, nur derjenige Knoten 100 mit der höchsten Moduspräferenz seinen Rahmen 330 versendet.

Die Kommunikation ist bei FlexRay in Kommunikationszyklen 310 mit fester Struktur und Länge organisiert. Jeder Zyklus 310 verfügt über eine 6-Bit Zyklusnummer, die in jedem Rahmen 330 als Teil des Headers übertragen wird. Nach dem Zyklus mit der Nummer 63 beginnt die Nummerierung wieder bei 0. Die Kommunikationscontroller (engl.: communication controller, CC) unterstützen den sich wiederholenden Zyklus 310 durch ein spezielles Pufferkonzept mit Filtern, wie weiter unten beschrieben. Um eine möglichst effiziente Umsetzung auf Basis handelsüblicher Kommunikationscontroller zu ermöglichen, wird zunächst von folgender Vereinfachung ausgegangen:

Vereinfachung 1: Ein modusbasierter Makrozeitschlitz 108 weist $q$ modusbasierte Zeitschlitze 110 (Mikrozeitschlitze) auf, mit $q \in \mathbb{N}_0$, $0 < q \leq 64$ und $64 \mod q \equiv 0$. Diese Vereinfachung stellt keine Einschränkung des allgemeinen Konzepts dar, wie weiter unten erläutert wird.

Basierend auf dieser Vereinfachung gilt, dass der modusbasierte Zeitschlitz 110 mit der Nummer $u \in \mathbb{N}_0$, $0 < u \leq q$ durch die FlexRay-Kommunikationszyklen $t \in \{0,...,63\}$ (310) abgebildet wird, für die gilt:

$$( t \bmod q ) + 1 \equiv u$$

Die den Modi $M$ durch die Funktion $mp$ zugewiesenen Präferenzen werden, wie bereits erläutert, mit Hilfe des Minizeitschlitz-Mechanismus von FlexRay abgebildet. Die Moduspräferenzen werden hierbei auf sukzessive aufeinander folgende dynamische Zeitschlitznummern (d) abgebildet. Ein Nachteil dieses Ansatzes kann darin bestehen, dass auch innerhalb eines modusbasierten Zeitschlitzes 110 (310) nicht durch die Zeitschlitzallokation $SA$ vergebene Sendeberechtigungen (d.h. ist $m \in M$ ein Modus und $s \in S$ ein modusbasierter Zeitschlitz, so ist $SA(s,m)$ nicht definiert) jeweils einen Minizeitschlitz 322 beanspruchen und somit unnötig Bandbreite verbrauchen. Diese Problematik lässt sich durch eine entsprechende Optimierung bei der Zuordnung der Modi zu den dynamischen Zeitschlitznummern (d) reduzieren (*Optimierung 1*) und wird weiter unten detailliert beschrieben.

Sei im Folgenden $i + 1$ die Nummer des ersten Zeitschlitzes $320_d$ des dynamischen Segments 314.

Definition 1: Die Funktion $slt: M \rightarrow \mathbb{N}_0$ ordnet jedem Modus eine Zeitschlitznummer (d) (des dynamischen Segments 314) zu und ist wie folgt definiert:

$$\forall m \in M: slt(m) = i + 1 + | M \setminus M_m | \; mit \; M_m =_{df} \{n \in M \mid mp(m) \leq mp(n)\}$$

Bei einigen Ausführungsbeispielen ist die Länge des dynamischen Segments 314 so gewählt, dass es auch dem Knoten 100 mit der niedrigsten Moduspräferenz (Sendepriorität) möglich ist, eine Nachricht mit der maximal zulässigen Nutzlast (engl.: payload) zu versenden, falls innerhalb dieses modusbasierten Zeitschlitzes 110 (310) noch kein Knoten 100 mit einer höheren Moduspräferenz eine Nachricht gesendet hat. Zudem kann durch die Konfiguration des Kommunikationscontrollers ebenfalls sichergestellt werden, dass, falls ein Knoten 100 innerhalb eines modusbasierten Zeitschlitzes 110 (310) gesendet hat, kein weiterer Knoten 100 mit einer niedrigeren Moduspräferenz in diesem modusbasierten Zeitschlitz 110 (310) mehr sendet. Optimierung 2 verzichtet auf diese Einschränkung und ermöglicht so, insbesondere bei sehr kurzen Rahmen 330, eine bessere Ausnutzung der für den modusbasierten Zeitschlitz 110 (310) reservierten Bandbreite. Es wird weiterhin sichergestellt, dass der sendebereite und -berechtigte Knoten 100 mit der höchsten Moduspräferenz zuerst seinen Rahmen 330 verschicken kann.

Da ein modusbasierter Zeitschlitz 110 jeweils auf einen FlexRay-Kommunikationszyklus 310 abgebildet werden kann, besitzen bei einigen Ausführungsbeispielen alle modusbasierten Zeitschlitze 110 (310) die gleiche Länge (Anforderung aus dem FlexRay-Protokoll), auch wenn diese nur zum Teil für die Übertragung von Nutzdaten verwendet wird. Durch entsprechend gewählte Konfigurationsparameter des dynamischen Segments 314 sowie der Konfigurationsparameter des Kommunikationscontrollers kann das Minizeitschlitz-Verfahren verwendet werden, um modusbasierte Zeitplanung und schnelle Modussignalisierung mit FlexRay umzusetzen. Im Folgenden werden die Anforderungen an die Konfiguration des dynamischen Segments 314 beschrieben.

Bei einigen Ausführungsbeispielen weist das dynamische Segment 314 eine vorgegebene Anzahl von Minizeitschlitzen 322 auf, die entsprechend ihrem Auftreten in dem dynamischen Segment 314 fortlaufend nummeriert sind, wobei die dynamischen Zeitschlitze $320_d$ des dynamischen Segments 314 jeweils zumindest einen Minizeitschlitz 322 umfassen, wobei der Sende/Empfangsknoten 100 ausgebildet ist, um, falls der dynamische Zeitschlitz $320_d$, dem die Sendepriorität der verfügbaren Nachricht zugeordnet ist, zeitlich nach einem letztmöglichen Minizeitschlitz, der den letztmöglichen Beginn der Übertragung des Rahmens $330_d$ der verfügbaren Nachricht angibt, auftritt, den Rahmen $330_d$ der verfügbaren Nachricht zu verwerfen oder zu einem späteren zugeordneten Kommunikationszyklus dem FlexRay-Datenbus 300 bereit zu stellen.

In anderen Worten, bei einigen Ausführungsbeispielen ist die Datenübertragung innerhalb des dynamischen Segments 314 auch für den Modus mit der niedrigsten Priorität innerhalb der Grenzen des dynamischen Segments 314 möglich. Hierbei gilt es zu beachten, dass durch die Abbildung der Moduspräferenzen auf die dynamischen Zeitschlitze $320_d$ zunächst $|M|$-1 Minizeitschlitze 322 ungenutzt verstreichen, bis der Knoten 100 mit der niedrigsten Moduspräferenz sendet. Sei $p_{max,s}$ die maximal zulässige Nutzlast (in Zwei-Byte-Worten (Bei FlexRay werden zulässige Nutzdaten-Größen in Zwei-Byte-Worten angegeben. Auch hier handelt es sich lediglich um eine Vereinfachung. Bei Nutzlasten, die keine Vielfachen von Zwei-Byte-Worten sind, können durch die Anwendung oder Kommunikationscontroller einfach Fülldaten ergänzt werden)) aller modusbasierten Zeitschlitze 110 (310) und $p_{max,t}$ die Dauer der Übertragung eines FlexRay-Rahmens, der nur diese Nutzlast transportiert, gegeben als Anzahl benötigter Minizeitschlitze 322 (Diese Länge kann anhand von Randbedingung (engl.: constraint 21), [13] aus der FlexRay-Spezifikation berechnet werden).

Forderung 1: Sei $p_{max,t}$ die Anzahl der Minizeitschlitze 322, die zur Übertragung eines Rahmens 330 mit der maximalen erlaubten Nutzlast $p_{max,s}$ gemäß FlexRay-Spezifikation, Randbedingung (engl.: constraint) 21, Bez. 13 benötigt werden, so beträgt bei einigen Ausführungsbeispielen die Länge des dynamischen Segments 314 mindestens $|M|$ -1 + $p_{max,t}$ Minizeitschlitze 322.

Der Sende/Empfangsknoten 100 kann ferner ausgebildet sein, um, falls der Rahmen 330 der verfügbaren Nachricht eine vorgegebene Länge unterschreitet, den Rahmen 330 der verfügbaren Nachricht vor der Übertragung mit Fülldaten aufzufüllen oder an den Rahmen 330 der verfügbaren Nachricht Fülldaten anzuhängen, so dass eine Übertragung des Rahmens 330 der verfügbaren Nachricht oder der Fülldaten erst nach dem Auftreten des letztmöglichen Minizeitschlitzes (*pLatestTx*) endet.

Um sicherzustellen, dass im Falle einer Übertragung eines Knotens 100 mit einer hohen Moduspräferenz (hohe Priorität) nicht noch ein Knoten 100 mit niedriger Präferenz im gleichen Kommunikationszyklus 310 einen Rahmen 330 verschicken kann, kann eine Anpassung des Konfigurationsparameters *pLatestTx* sowie ein Auffüllen mit Fülldaten (engl.: padding) notwendig sein. Der Konfigurationsparameter *pLatestTx* legt den letzten Minizeitschlitz fest (letztmöglichen Minizeitschlitz), in dem innerhalb des dynamischen Segments 314 eine Übertragung begonnen werden kann (vgl. FlexRay-Spezifikation, Kapitel 5.3.3.2). Es handelt sich um einen lokalen Konfigurationsparameter des Kommunikationscontrollers, der für jeden Knoten 100 des Netzwerks individuell konfiguriert werden kann.

Forderung 2: Sei M die Menge der Modi, dann ist pLatestTx für alle Kommunikationscontroller des Netzwerks, die eine Sendeberechtigung für einen modusbasierten Zeitschlitz haben, auf *pLatestTx* = $|M|$ zu setzen.

Durch die Forderungen 1 und 2 kann sichergestellt werden, dass eine Übertragung, welche im Minizeitschlitz *pLatestTx* (letztmöglichen Minizeitschlitz) beginnt (z. B. die Übertragung einer Nachricht mit der niedrigsten Moduspräferenz unter Verwendung der Zuordnung aus Definition 1) innerhalb der Grenzen des dynamischen Segments 314 abgeschlossen werden kann (Randbedingung (engl.: constraint) 36 aus der FlexRay-Spezifikation).

Ebenso kann sichergestellt werden, dass bei einer Übertragung eines Rahmens 330 mit wenigen Nutzdaten nicht noch ein weiterer Rahmen 330 mit niedrigerer Moduspräferenz in demselben modusbasierten Zeitschlitz 110 (310) gesendet werden kann. Diese Möglichkeit wäre unter Umständen gegeben, wenn der zuerst übertragene Rahmen 330 so kurz ist, dass noch Minizeitschlitze 322 vor dem *pLatestTx-ten* Minizeitschlitz des dynamischen Segments 314 unbelegt sind. Dieses Problem kann mit einem Auffüllen (engl.: padding) zu kurzer Nutzdaten durch den Kommunikationscontroller gelöst werden. Das Auffüllen (engl.: padding) kann so gewählt werden, dass die resultierenden FlexRay-Rahmen 330 die Forderung 3 erfüllen.

Forderung 3: Sei M die Menge der Modi und $F_m$ die Menge aller im Modus $m \in M$ zu versendenden FlexRay-Rahmen 330. Sei des Weiteren $F = \cup_{m \in M} F_m$ und *dur: F* $\rightarrow \mathbb{N}$ eine Funktion, die einem FlexRay-Rahmen 330 die für die Übertragung notwendigen Minizeitschlitze auf Basis von Randbedingung (engl.: constraint) 21, [13] aus der FlexRay-Spezifikation zuordnet. In diesem Falle gilt bei einigen Ausführungsbeispielen:

$$\forall m \in M, f \in F_m: slt(m) - (i + 1) + dur(f) \geq pLatestTx$$

Basierend aus den Anforderungen von Forderung 3 ergibt sich die Größe der Nutzlast der zu versendenden FlexRay-Rahmen 330 direkt zu:

Folgerung 1: Sei *M* die Menge der Modi, so ist die Länge jedes zu versendenden Rahmens 330 (engl.: frames) gegeben durch:

$$\forall m \in M, f \in F_m: len(f) = max (i + 1 + pLatestTx - slt(m), p_{max,t})$$

Unter Anwendung der Folgerung 1 kann für jeden Modus $m \in M$ die benötigte Länge der Nutzlast eines zu versendenden Rahmens 330 bestimmt werden. Die so ermittelte Größe ist Bestandteil der Konfiguration der Puffer des Kommunikationscontrollers. Sollen in einem modusbasierten Zeitschlitz 110 (310) weniger Nutzdaten als von Folgerung 1 gefordert versendet werden, so können entsprechend Fülldaten eingefügt werden, um Forderung 3 zu erfüllen. Aufgrund von Forderung 1 kann sichergestellt werden, dass die maximal zulässigen Nutzdaten $p_{max,t}$ eines modusbasierten Zeitschlitzes 110 (310) innerhalb der Nutzlast (engl.: payload) des jeweiligen FlexRay-Rahmens 330 Platz finden.
Unter Ausnutzung der Eigenschaften aktueller FlexRay-Kommunikationscontroller kann unter Verwendung einer FlexRay-Konfiguration, die die oben beschriebenen Forderungen erfüllt, eine wie zuvor skizzierte Realisierung von modusbasierter Zeitplanung und schneller Modussignalisierung auf Basis des dynamischen Segments 314 von FlexRay implementiert werden. Die vorgestellte Lösung ist konform zum FlexRay-Standard 2.1A und kann parallel zur im Standard beschriebenen Kommunikation innerhalb eines Netzwerks eingesetzt werden.
Im folgenden wird die Umsetzung der oben beschriebenen Implementierung von modusbasierter Zeitplanung und schneller Modussignalisierung mit handelsüblicher Hardware beschrieben.
Der Sende/Empfangsknoten 100 kann einen Kommunikationscontroller mit einem Sendepuffer zum Puffern des Rahmens 330 der verfügbaren Nachricht und/oder einen Empfangspuffer zum Puffern des Rahmens der weiteren verfügbaren Nachricht aufweisen.
Beispielsweise verwenden FlexRay-Kommunikationscontroller, die auf dem E-Ray FlexRay IP-Modul von Bosch beruhen, wie dem MB88121C von Fujitsu, Sende- und Empfangspuffer zur Entkopplung des Hosts von den harten Echtzeitanforderungen des CC. Bei der Konfiguration der Puffer werden den Sende- und Empfangspuffern Zeitschlitze 320 des Kommunikationszyklus 310 zugeordnet. Wenn ein Kommunikationscontroller einen in einem Zeitschlitz 320 versendeten Rahmen 330 erkennt, überprüft dieser, ob ein Empfangspuffer für den Zeitschlitz 320 reserviert ist und legt diesen Rahmen 330 in dem entsprechenden Puffer ab. Analog prüft der Kommunikationscontroller, ob es einen Sendepuffer für den aktuellen Zeitschlitz 320 gibt und ob dieser valide Daten enthält. In diesem Falle wird ein Rahmen 330 mit diesen Daten in dem entsprechenden Zeitschlitz 320 gesendet (vgl. FlexRay-Spezifikation, Kapitel 9.3.2). Gängige Kommunikationscontroller erlauben es, mit Hilfe des Zyklus-Zähler-Filters (engl.: cycle counter filter) auf Basis der Nummer des aktuellen Kommunikationszyklus 310 festzulegen, welche Puffer (beim Senden oder Speichern eines empfangenen Rahmens 330) bei der Auswahl berücksichtigt werden (vgl. E-Ray Handbuch [E-Ray, FlexRay IP-Module, User's Manual, Revision 1.2.7, Robert Bosch GmbH, 2009], Kapitel 5.7 und 5.8). Darüber hinaus bieten die meisten Kommunikationscontroller die Möglichkeit, die Pufferkonfiguration während des Betriebs zu verändern (vgl. E-Ray Handbuch, Kapitel 5.11). Die beiden zuvor genannten Leistungsmerkmale müssen gemäß dem FlexRay-Standard nicht von allen Kommunikationscontrollern unterstützt werden. Um einen Kommunikationscontroller, der diese Merkmale nicht unterstützt, zusammen mit modusbasierter Zeitplanung verwenden zu können, kann die Anwendung auf dem Host das beschriebene Pufferkonzept nachbilden.
Ferner kann der Sende/Empfangsknoten 100 ausgebildet sein, um in dem zugeordneten Kommunikationszyklus 310 durch Setzen eines Flags des Empfangspuffers das Erfüllen der ersten Bedingung zu signalisieren, und um, falls die zweite Bedingung während des zugeordneten Kommunikationszyklus 310 nicht erfüllt ist, das Flag vor dem Auftreten eines nachfolgenden Kommunikationszyklus zu löschen.
Beispielsweise lassen sich die einzelnen Sendepuffer den verschiedenen Kommunikationszyklen 310 und damit auch dem jeweiligen modusbasierten Zeitschlitz 110 (310) mit Hilfe des Zyklus-Zähler-Filters (engl.: cycle counter filter) zuordnen. Dies ist allerdings nur möglich, wenn Vereinfachung 1, wie im vorherigen Kapitel beschrieben, gilt. Ist dies nicht der Fall, kann ein alternativer Ansatz verfolgt werden: Für jeden Modus $m \in M$, für den der Knoten 100 über eine zulässige Zeitschlitzallokation verfügt, wird ein Sendepuffer für den dynamischen Zeitschlitz $slt(m)$ ($320_d$) reserviert (Für den Fall, dass die Anzahl der verfügbaren Puffer im Kommunikationscontroller zu klein ist, kann z. B. eine Rekonfiguration der Puffer zur Laufzeit erfolgen). Die Anwendungssoftware darf nach dem Füllen des Puffers mit Nutzdaten das Flag zur Signalisierung, dass der Puffer valide Daten enthält, nur setzen, wenn der Kommunikationszyklus 310 einen modusbasierten Zeitschlitz 110 repräsentiert, für den der Knoten 100 für den jeweiligen Modus über eine Sendeberechtigung verfügt. Falls die Daten nicht in diesem Kommunikationszyklus 310 gesendet werden, kann das Flag durch die Anwendung wieder rechtzeitig gelöscht werden, um zu verhindern, dass der Rahmen $330_d$ in einem modusbasierten Zeitschlitz 110 (310) versendet wird, für den keine Sendeberechtigung vorliegt. Dieser Ansatz stellt harte zeitliche Anforderungen an die Anwendung und ist daher für sicherheitskritische Systeme problematisch. Durch die Erweiterung des Konzepts der Sendepuffer um spezielle modusbasierte Sendepuffer lassen sich die hier beschriebenen Implementierungsprobleme lösen, wie weiter unten beschrieben.

Bei FlexRay können nach erfolgtem Anlauf (engl.: startup) des Netzwerks neue Knoten 100 zu jedem beliebigen Zeitpunkt integriert werden. Ist Vereinfachung 1 nicht gegeben, besteht für die neu hinzugekommenen Knoten 100 das Problem, dass diese die Zuordnung zwischen Kommunikationszyklus 310 und der Nummer des durch den Kommunikationszyklus repräsentierten modusbasierten Zeitschlitzes 110 (310) nicht kennen. Soll auf Vereinfachung 1 verzichtet werden, ist es z. B. möglich, bei jedem Rahmen 330, der in einem modusbasierten Zeitschlitz 110 (310) übertragen wird, die Nummer des modusbasierten Zeitschlitzes 110 (310) mit zu übertragen. Sobald ein neu in das Netzwerk integrierter Knoten 100 diese Information empfangen hat, kann er seine Sendepuffer entsprechend konfigurieren und an der Kommunikation aktiv teilnehmen. Entweder kann ein Masterknoten verwendet werden, der für die Verteilung dieser Information verantwortlich ist, oder ein neu in das Netzwerk integrierter Knoten 100 hört das Medium (Datenbus) zunächst für mehrere Kommunikationszyklen 310 ab. Wenn in dieser Zeit kein Knoten 100 innerhalb eines modusbasierten Zeitschlitzes 110 (310) gesendet hat, beginnt der Knoten 100 mit seinem regulären Sendebetrieb und legt damit den Beginn des modusbasierten Makrozeitschlitzes 108 fest.

Wird auf Vereinfachung 1 verzichtet, kann die Zeitschlitznummer des repräsentierten modusbasierten Zeitschlitzes 110 (310) innerhalb der Nutzlast (engl.: payload) des gesendeten FlexRay-Rahmens 330 kodiert werden, um eine Integration von Knoten 100 zu ermöglichen. Die Zeitschlitznummer kann beispielsweise als Nachrichten-Identifizierer (engl.: message-ID, ID = identifier) versendet werden (Nutzung des Nutzlast-Präambel-Indikators (engl.: payload preamble indicator), vgl. FlexRay-Spezifikation, Kapitel 4.3.2). So können unter Umständen weitere optionale Filtertechniken eingesetzt werden, sofern der Kommunikationscontroller die Definition von Filterkriterien bei Empfangspuffern, bezogen auf einen Nachrichten-Identifizierer, unterstützt.

Die zuvor beschriebene, zum FlexRay-Standard 2.1A konforme Umsetzung von modusbasierter Zeitplanung und schneller Modussignalisierung erlaubt die Integration jeweils eines modusbasierten Zeitschlitzes 110 pro Kanal in das dynamische Segment 314 von FlexRay. Hierbei werden Knoten 100, die modusbasierte Zeitplanung und schnelle Modussignalisierung nicht unterstützen, nicht beeinträchtigt. Wie bereits beschrieben, beginnt das dynamische Segment 314 mit dem modusbasierten Zeitschlitz 110. Da die Länge dieses Zeitschlitzes 110 nach unten hin begrenzt ist (Forderung 1), können die noch verbliebenen Minizeitschlitze 322 des dynamischen Segments 314 ohne Einschränkungen weiter genutzt werden. Durch die Verwendung beider FlexRay-Kanäle können pro Kommunikationszyklus 310 jeweils zwei modusbasierte Zeitschlitze 110 gleichzeitig abgebildet werden.

Den Knoten 100, die einen modusbasierten Zeitschlitz 110 für die Kommunikation nutzen, ist es nicht möglich, weitere Nachrichten innerhalb des verbleibenden dynamischen Segments 314 zu übertragen. Der Grund liegt in der notwendigen Konfiguration des Parameters *pLatestTx* (der Konfigurationsparameter *pLatestTx* gibt den letzten Minizeitschlitz an (letztmöglichen Minizeitschlitz), in dem innerhalb des dynamischen Segments 314 eine Übertragung begonnen werden kann (vgl. FlexRay-Spezifikation, Kapitel 5.3.3.2)) (Forderung 2). Das ebenfalls notwendige Auffüllen (engl.: padding), welches sicherstellt, dass innerhalb eines modusbasierten Zeitschlitzes 110 nicht mehrere kurze Rahmen 330 mit unterschiedlichen Modi versendet werden, führt insbesondere bei kurzen Nutzlasten zu einer eigentlich unnötigen Reduktion der verbleibenden Minizeitschlitze 322, bezogen auf die konventionelle Nutzung des noch verbleibenden dynamischen Segments 314. Aus diesem Grund verzichtet Optimierung 2 auf die Forderung, pro modusbasiertem Zeitschlitz 110 (310) maximal einen modusbasierten eingeplanten Rahmen 330 zu übertragen, wie weiter unten beschrieben.

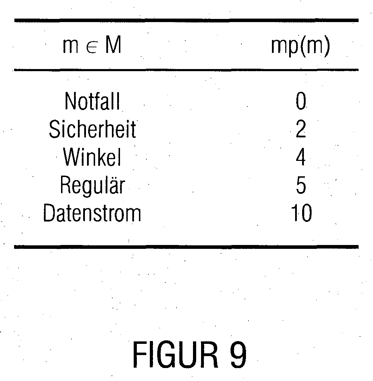

Fig. 9 zeigt eine Zuweisung von Moduspräferenzen in einer tabellarischen Anordnung für ein vereinfachtes Szenario eines Kraftfahrzeugs gemäß einem Ausführungsbeispiel der vorliegenden Erfindung. Das in Fig. 9 gezeigte Beispiel nutzt das oben beschriebene Verfahren, um modusbasierte Zeitplanung und schnelle Modussignalisierung mittels FlexRay abzubilden. Dabei wird dem Ausführungsmodus *Notfall* die Moduspräferenz 0, dem Ausführungsmodus *Sicherheit* die Moduspräferenz 2, dem Ausführungsmodus Winkel die Moduspräferenz 4, dem Ausführungsmodus *regulär* die Moduspräferenz 5 und dem Ausführungsmodus *Datenstrom* die Moduspräferenz 10 zugeordnet.

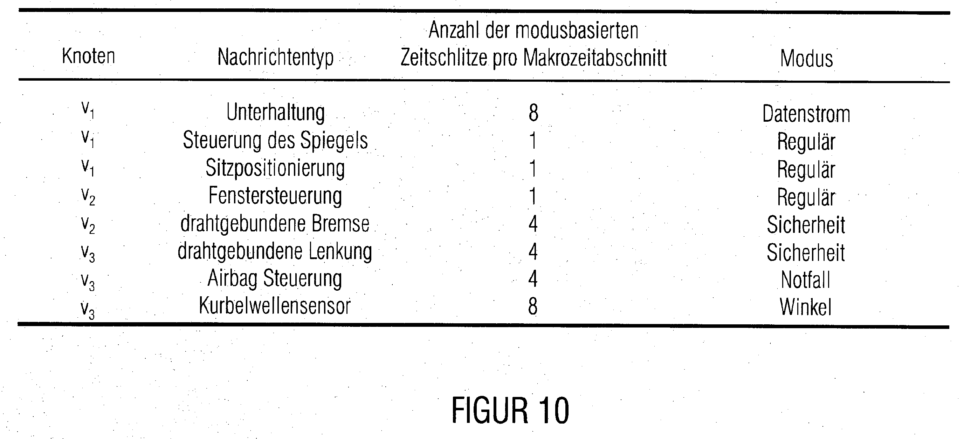

Fig. 10 zeigt eine Zuordnung von Nachrichtentypen, Übertragungsmodi und Anzahl benötigter Zeitschlitze zu Knoten 100 in einer tabellarischen Anordnung für ein vereinfachtes Szenario eines Kraftfahrzeugs gemäß einem Ausführungsbeispiel der vorliegenden Erfindung. Abgebildet wird ein vereinfachtes Szenario in einem Automobil. Es soll ein FlexRay-Bus 300 verwendet werden, um verschiedene Kommunikationsanforderungen zu erfüllen. Diese erstrecken sich von den Anforderungen zur Abdeckung sicherheitsrelevanter Funktionen (Airbag-Steuerung, Funktionen für eine drahtgebundene Bremse (engl.: brake-by-wire) und eine drahtgebundene Lenkung (engl.: steer-by-wire)) über Sensoren zur Motorsteuerung bis hin zu sicherheitsunkritischen Komfortfunktionen, wie beispielsweise der Einstellung der Sitze und Spiegel. Zur Vereinfachung beschränkt sich das Beispiel auf die Nutzung nur eines Kanals des FlexRay-Busses 300. Bei der Realisierung verteilen sich die Nachrichten auf insgesamt drei verschiedene Knoten $v_1$ bis $v_3$. Ein modusbasierter Makrozeitschlitz 108 weist dabei 16 modusbasierte Zeitschlitze 110 auf.

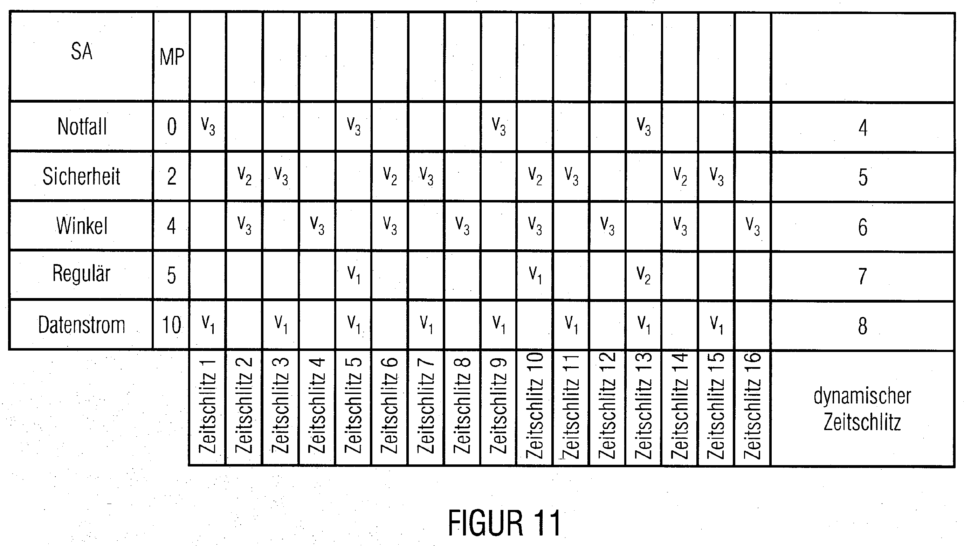

Fig. 11 zeigt eine Zuweisung von dynamischen Zeitschlitzen $320_d$ in einer tabellarischen Anordnung für ein vereinfachtes Szenario eines Kraftfahrzeugs gemäß einem Ausführungsbeispiel der vorliegenden Erfindung. In anderen Worten, Fig. 11 zeigt die verwendete Zeitschlitzallokation *SA*. Da für die gewählte Länge des modusbasierten Zyklus 310 die Bedingungen von Vereinfachung 1 gelten, kann die Zuordnung der Sendepuffer innerhalb des Kommunikationscontrollers zu den jeweiligen modusbasierten Zeitschlitzen 110 (310) über den Zyklus-Zähler-Filter (engl.: cycle counter filter) abgebildet werden (für jede Sendeberechtigung aus Fig. 11 reservieren die entsprechenden Knoten einen Sendepuffer).

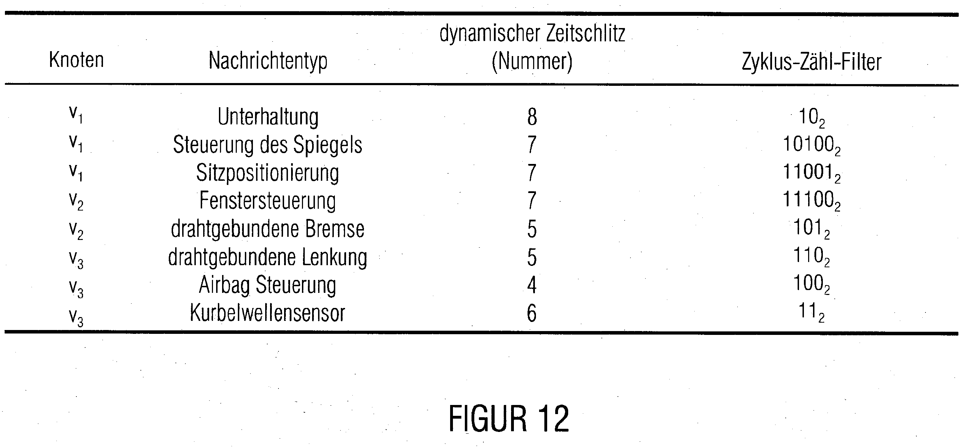

Fig. 12 zeigt eine Zuordnung von Nachrichten zu dynamischen Zeitschlitzen für ein vereinfachtes Szenario eines Kraftfahrzeugs gemäß einem Ausführungsbeispiel der vorliegenden Erfindung. Die in Fig. 12 angegebenen Werte für den Zyklus-Zähler-Filter (engl.: cycle counter filter) gelten für Kommunikationscontroller, die auf dem E-Ray FlexRay IP-Module von Bosch beruhen (vgl. ERay-Handbuch, Kapitel 5.7.2). Die Nummern (d) der dynamischen Zeitschlitze $320_d$ ergeben sich aus den Definitionen der Moduspräferenzen und der in Definition 1 beschriebenen Abbildung auf die dynamischen Zeitschlitze $320_d$. Die Nummer (d) des ersten dynamischen Zeitschlitzes ist in diesem Beispiel 4.

Die oben angesprochenen Schwächen sind auf die mangelnde Unterstützung von modusbasierter Zeitplanung und schneller Modussignalisierung in den aktuellen Kommunikationscontrollern zurückzuführen. Diese Defizite lassen sich auf Ebene der Kommunikationscontroller durch die Einführung spezieller modusbasierter Sendepuffer mit entsprechender Unterstützung für die modusbasierte Zeitplanung beheben.

Dementsprechend kann der Sende/Empfangsknoten 100 einen Kommunikationscontroller mit einem Sendepuffer zum Puffern des Rahmens 330 der verfügbaren Nachricht und/oder einen Empfangspuffer zum Puffern des Rahmens der weiteren verfügbaren Nachricht aufweisen. Dabei kann der Sendepuffer dem zugeordneten Kommunikationszyklus 310 und der Sendepriorität der verfügbaren Nachricht zugeordnet sein.

Beispielsweise kann ein modusbasierter Sendepuffer einem modusbasierten Zeitschlitz 110 (310) und einem Modus zugeordnet werden. Der Modus kann als Nummer (d) des dynamischen Zeitschlitzes $320_d$ gespeichert werden, die sich aus der Moduspräferenz, wie in Definition 1 beschrieben, ableitet. Zusätzlich wird für modusbasierte Sendepuffer ein angepasster Auswahlmechanismus benötigt: Wenn innerhalb eines modusbasierten Zeitschlitzes 110 (310) bereits ein Rahmen 330 mit einem höheren Moduspräferenz (entspricht einer kleineren dynamischen Zeitschlitznummer (d)) gesendet oder empfangen wurde, werden innerhalb dieses Kommunikationszyklus 310 keine weiteren modusbasierte Sendepuffer (die diesem modusbasierten Zeitschlitz 110 zugeordnet wurden) bei der Wahl eines zu versendenden Rahmens 330 berücksichtigt.

Durch die Einführung von modusbasierten Sendepuffern entfällt die Notwendigkeit, FlexRay-Rahmen 330 mit Fülldaten künstlich zu vergrößern, um die Übertragung mehrerer kurzer Rahmen 330 in einem modusbasierten Zeitschlitz 110 (310) zu verhindern (Forderung 3). Ebenso entfällt Forderung 2 und somit die erzwungene Konfiguration des Parameters *pLatestTx*. Mit dieser Erweiterung können sich nun auch Knoten 100, die über eine Sendeberechtigung für einen modusbasierten Zeitschlitz 110 (310) verfügen, aktiv an der Kommunikation innerhalb des nach dem modusbasierten Zeitschlitz 110 noch verbleibenden dynamischen Segments 314 beteiligen.

Soll zusätzlich auf Vereinfachung 1 verzichtet werden, kann zunächst eine Synchronisation auf die aktuelle modusbasierte Zeitschlitznummer erfolgen, bevor die modusbasierten Sendepuffer für den Versand von Rahmen 330 genutzt werden können, wie oben beschrieben.

Wenn die Nutzung der modusbasierten Zeitschlitze 110 im Vordergrund steht, kann das dynamische Segment 314 auf die Mindestlänge (Forderung 1) gekürzt werden. Die Länge der statischen Zeitschlitze $320_k$ wird in diesem Fall ebenfalls auf den minimal zulässigen Wert konfiguriert. Gemäß FlexRay-Standard 2.1A ist die minimal zulässige Länge des statischen Segments 312 von der Anzahl der Knoten 100 des Netzwerks abhängig: Für jeden Knoten 100 des Netzwerks kann ein statischer Zeitschlitz $320_k$ exklusiv reserviert werden. Die Länge der statischen Zeitschlitze $320_k$ kann minimal innerhalb der vorgegebenen Randbedingung (engl.: constraints) gewählt werden. Die Länge der Nutzlast (engl.: payload) wird in diesem Fall zu 0 konfiguriert. Kommunikationscontroller, die auf dem E-Ray FlexRay IP-Module von Bosch beruhen, erlauben auch den Betrieb von Konfigurationen, bei denen einem Knoten 100 kein Zeitschlitz $320_k$ im statischen Segment 312 zugeordnet ist (vgl. ERay-Handbuch, Kapitel 4.7.1); diese Konfigurationen sind aber nicht mehr konform zum FlexRay-Standard 2.1 A.

Die in Definition 1 vorgestellte Technik der Zuordnung dynamischer Zeitschlitznummern (d) zu den definierten Moduspräferenzen kann zu einer Verschwendung von Bandbreite führen, da jede vergebene dynamische Zeitschlitznummer (d) aufgrund des Minizeitschlitz-Mechanismus auch dann einen Minizeitschlitz 322 belegt, wenn diesem Zeitschlitz kein Knoten 100 zugeordnet ist.

Um diese Problematik zu entschärfen, genügt es, die Zuordnung dynamischer Zeitschlitznummern (d) zu einem Modus (Moduspräferenz) für jeden modusbasierten Zeitschlitz 110 (310) individuell durchzuführen und dabei jeweils nur die Modi zu berücksichtigten, für die Sendeberechtigungen in diesem modusbasierten Zeitschlitz 110 (310) vergeben wurden (vgl. Definition 2). Es gilt wieder, dass $i$+1 die Nummer des ersten dynamischen Zeitschlitzes ist.

Definition 2: Die Funktion $slt_2$: $M \times S \rightarrow \mathbb{N}_0$ ordnet jedem Modus m $\in$ M eines modusbasierten Zeitschlitzes $s \in S$ (110) eine dynamische Zeitschlitznummer (d) zu und ist wie folgt definiert:

$$\forall m \in M, \ \forall s \in S \ mit \ SA(s,m) \ definiert: slt_2(m,s) = i + 1 + |\, M_s \setminus M_{s,m} \,| \ mit:$$
$$M_s =_{\mathrm{df}} \{m \in M \mid SA(s,m) \ definiert\} \tag{1}$$
$$M_{s,m} =_{\mathrm{df}} \{n \in M_s \mid mp(m) \leq mp(n)\}$$

Definition 2 führt unter Umständen dazu, dass dem gleichen Modus unterschiedliche dynamische Zeitschlitznummern (d) zugeordnet werden, falls für diesen mehr als eine Sendeberechtigung pro modusbasiertem Makrozeitschlitz 108 existiert. Insbesondere bzgl. der Konfiguration der Puffer ist entweder ein erhöhter Aufwand bezogen auf die Steuerungsanwendung notwendig oder eine ergänzende Erweiterung des Konzepts der modusbasierten Sendepuffer zur Behandlung dieses Aspektes.

Die minimale Länge des dynamischen Segments 314 hängt von der Anzahl der vergebenen Sendeberechtigungen innerhalb der einzelnen modusbasierten Zeitschlitze 110 (310) ab. Da die Länge des dynamischen Segments 314 für alle Kommunikationszyklen 310 identisch ist, ergibt sich die minimale Länge des dynamischen Segments 314 aus dem Maximum der benötigten Längen aller modusbasierten Zeitschlitze 110 (310).

Forderung 4: Sei $p_{max,t}$ die Anzahl der Minizeitschlitze 322, die zur Übertragung eines Rahmens 330 mit der maximalen erlaubten Nutzlast $p_{max,s}$ gemäß FlexRay-Spezifikation, Randbedingung (engl.: constraint) 21, Bez. 13 benötigt werden, so beträgt bei einigen Ausführungsbeispielen die Länge des dynamischen Segments 314 mindestens $max_{s \in S} (|M_s| - 1 + p_{max,t})$ Minizeitschlitze 322.

Basierend auf dieser modifizierten Zuordnung kann das Auffüllen (engl.: padding) entsprechend für jeden modusbasierten Zeitschlitz 110 (310) individuell bestimmt werden, so dass weiterhin sichergestellt ist, dass pro modusbasiertem Zeitschlitz 100 (310) nur der sendebereite und sendeberechtigte Knoten 100 mit der höchsten Moduspräferenz senden kann.

Zusätzliches Optimierungspotential kann sich bei der Bestimmung der Randbedingungen (engl.: constraints) ergeben, wenn die maximal zulässige Nutzlast für jede Sendeberechtigung individuell betrachtet und bei der Ableitung der Konfiguration berücksichtigt wird. Insbesondere bei Systemen mit sehr heterogener Länge der verwendeten Nutzlast können sich Einsparungen bezüglich der minimalen Länge des dynamischen Segments 314 ergeben (vgl. Definition 2).

Die Realisierung mit bereits auf dem Markt verfügbarer Hardware kann durch die optimierten Ansätze erschwert werden (Pufferkonfiguration etc.). Um diese sinnvoll nutzen zu können, kann eine wie oben beschriebene Erweiterung der in der Hardware unterstützten Konzepte erforderlich sein.

Ein Nachteil der hier beschriebenen optimierten Variante ist die Verletzung des Konzepts der zeitlichen Kapselung: Eine Erweiterung bzw. Veränderung der Sendeberechtigungen erfordert eine komplette Neuzuordnung der Modi zu den dynamischen Zeitschlitzen $320_d$ für alle Knoten 100 des Systems. Daher wird diese Erweiterung im Folgenden nicht betrachtet, eine entsprechende Umsetzung ist aber leicht möglich und steht nicht im Widerspruch zum FlexRay-Standard 2.1A. Die oben beschriebene Abbildung (Definition 1) auf sukzessive Zeitschlitznummern (d) erschwert zwar auch eine mögliche Erweiterung, verhindert aber zu große Lücken innerhalb des dynamischen Segments 314 und damit eine unnötige Verschwendung von Bandbreite.

Im folgenden wird das bereits beschriebene Fallbeispiel der Fig. 9 und 10 aufgegriffen, wobei bei der Zuordnung der dynamischen Zeitschlitze $320_d$ zu den modusbasierten Zeitschlitzen 110 die optimierte Zuordnungsfunktion $slt_2$ aus Definition 2 verwendet wird.

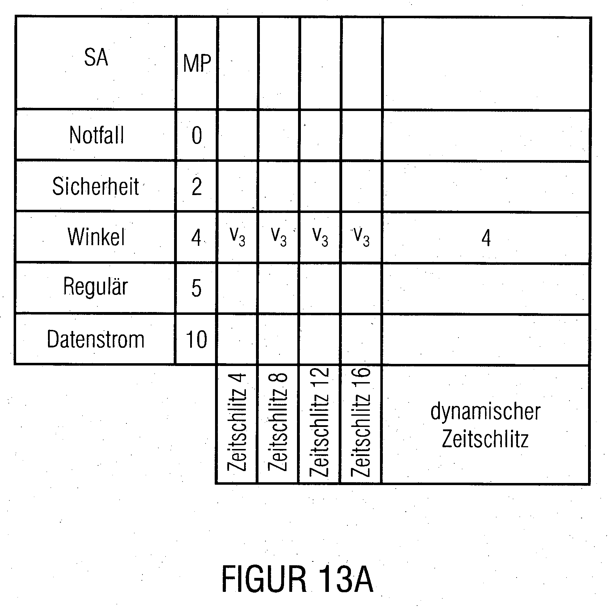

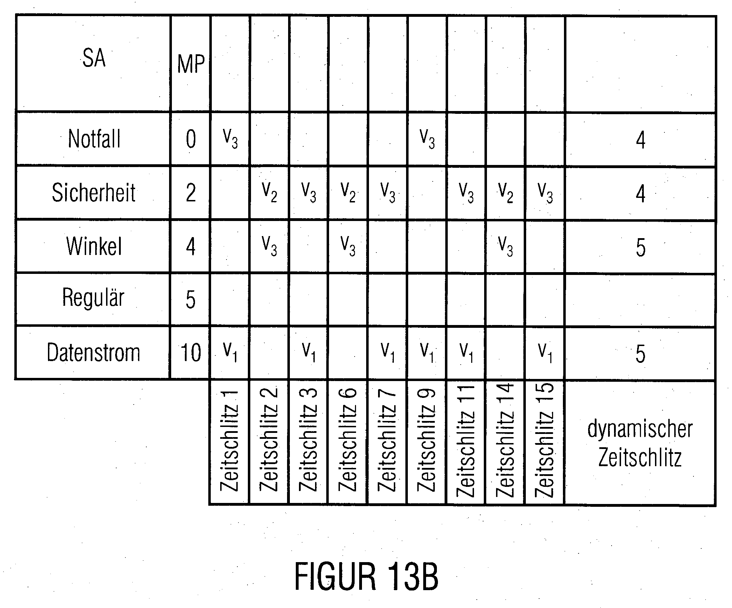

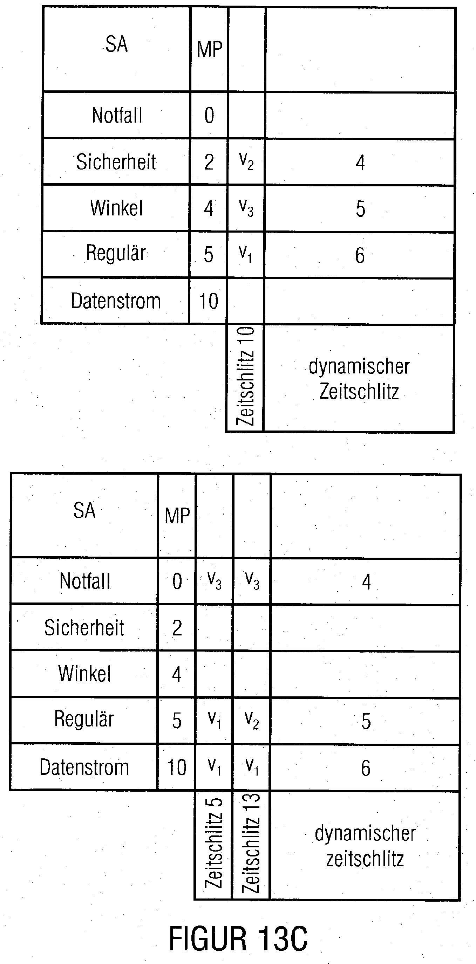

Fig. 13a bis 13c zeigen die Auswirkungen dieser Zuordnung. Statt vorher mit 5 dynamischen Zeitschlitznummern kommt dieses Beispiel mit maximal 3 dynamischen Zeitschlitznummern (d) bei der Zuordnung aus. Dies entspricht einer Einsparung von mindestens 2 Minizeitschlitzen 322 pro Kommunikationszyklus 310. Wenn innerhalb des dynamischen Segments 314 parallel neben dem modusbasierten Zeitschlitz 110 mittels des Minizeitschlitz-Mechanismus kommuniziert wird, kann die nun zusätzlich freie Bandbreite noch besser ausgenutzt werden (z. B. wird in Zeitschlitz 4, 8, 12 und 16 nur ein dynamischer Zeitschlitz benötigt, statt bisher 5).

Die Forderung, dass pro modusbasiertem Zeitschlitz 110 (310) jeweils nur der sendebereite und -berechtigte Knoten 100 mit der höchsten Moduspräferenz senden darf, führt dazu, dass bei kurzen Nutzdaten Bandbreite durch das Auffüllen (engl.: padding) verschwendet wird. Ohne das Auffüllen (engl.: padding) hätte unter Umständen ein weiterer in diesem modusbasierten Zeitschlitz 110 (310) sendeberechtigter und -bereiter Knoten 100 ebenfalls seinen Rahmen 330 übertragen können, obwohl dieser einem Modus mit niedrigerer Moduspräferenz zugeordnet ist. Im folgenden werden die hierfür notwendigen Modifikationen an dem bereits erläuterten Verfahren beschrieben. Die hier beschriebene Optimierung 2 kann auch zusammen mit Optimierung 1 eingesetzt werden.

So kann die zweite Bedingung ferner erfüllt sein, wenn in dem dynamischen Segment 314 vor dem Auftreten des dynamischen Zeitschlitzes $320_d$, dem die Sendepriorität der verfügbaren Nachricht zugeordnet ist, der Rahmen $330_d$ der weiteren verfügbaren Nachricht übertragen wurde und der dynamische Zeitschlitz $320_d$, dem die Sendepriorität der verfügbaren Nachricht zugeordnet ist, zeitgleich mit dem letztmöglichen Minizeitschlitz auftritt oder vor dem letztmöglichen Minizeitschlitz auftritt.

Durch den Verzicht auf das Auffüllen (engl.: padding) der Nutzdaten gemäß Forderung 3 bzw. Folgerung 1 wird das zuvor beschriebene Verhalten durch den Einsatz des Minizeitschlitz-Mechanismus realisiert. Durch die Abbildung der Moduspräferenzen auf die dynamischen Zeitschlitznummern (d) (Definition 1 bzw. 2) wird erreicht, dass zunächst der sendebereite und -berechtigte Knoten 100 mit der höchsten Moduspräferenz senden darf. Dementsprechend ermöglicht auch diese Optimierung die Zusicherung deterministischer Garantien bzgl. der auftretenden Verzögerungen für die Modi mit der höchsten Moduspräferenz, für die innerhalb des modusbasierten Zeitschlitzes 110 (310) eine Sendeberechtigung erteilt wurde. Ist in diesem modusbasierten Zeitschlitz 110 (310) darüber hinaus noch ein weiterer sendeberechtigter Knoten 100 bereit, kann dieser in dem laufenden modusbasierten Zeitschlitz 110 (310) ebenfalls seinen Rahmen 330 übertragen. Ferner wird bei einigen Ausführungsbeispielen sichergestellt, dass der Knoten 100 seine Übertragung vor dem *pLatestTx*-ten Minizeitschlitz beginnt.

Auch die Festlegung des Parameters *pLatestTx* gemäß der Forderung 2 dient, ohne die Verwendung von Optimierung 2, der Begrenzung der Anzahl der Knoten 100, die in einem modusbasierten Zeitschlitz 110 (310) senden, auf maximal einen Knoten 100. Im Rahmen von Optimierung 2 dient der Parameter *pLatestTx* dazu, die maximale Länge eines modusbasierten Zeitschlitzes 110 (310) zu begrenzen, falls das Szenario dies erfordert. Somit lässt sich die Mindestlänge des verbleibenden dynamischen Segments 314 garantieren (Es gelten weiterhin die bereits erläuterten Einschränkungen, dass die Knoten 100, die eine Sendeberechtigung innerhalb eines modusbasierten Zeitschlitzes 110 (310) besitzen, an der Kommunikation im verbleibenden dynamischen Segment 314 nicht mehr aktiv teilnehmen können). Forderung 2 legt für die Verwendung der Abbildungsvorschrift aus Definition 1 die untere Grenze des Parameters *pLatestTx* auf *pLatestTx* $\geq$ |$M$| fest. Entsprechend lässt sich, basierend auf Ausdruck (1) der Definition 2, eine untere Grenze für die Nutzung zusammen mit Optimierung 1 bestimmen.

Bei einigen Ausführungsbeispielen wird natürlich bei der Konfiguration des Parameters *pLatestTx* ebenfalls sichergestellt, dass eine in diesem Minizeitschlitz (letztmöglichen Minizeitschlitz) startende Übertragung noch innerhalb des dynamischen Segments 314 vollständig abgeschlossen werden kann, entsprechend Randbedingung (engl.: constraint) 36 des FlexRay-Spezifikation 2.1A (siehe FlexRay-Spezifikation, Kapitel B.4.26).

Die bisher beschriebenen Realisierungen beschränken sich darauf, pro Kommunikationszyklus 310 einen modusbasierten Zeitschlitz 110 innerhalb des dynamischen Segments 314 abzubilden. Im Folgenden wird eine Erweiterung beschrieben, auf deren Basis ein vollständiger modusbasierter Makrozeitschlitz 108 innerhalb des dynamischen Segments 314 umgesetzt werden kann.

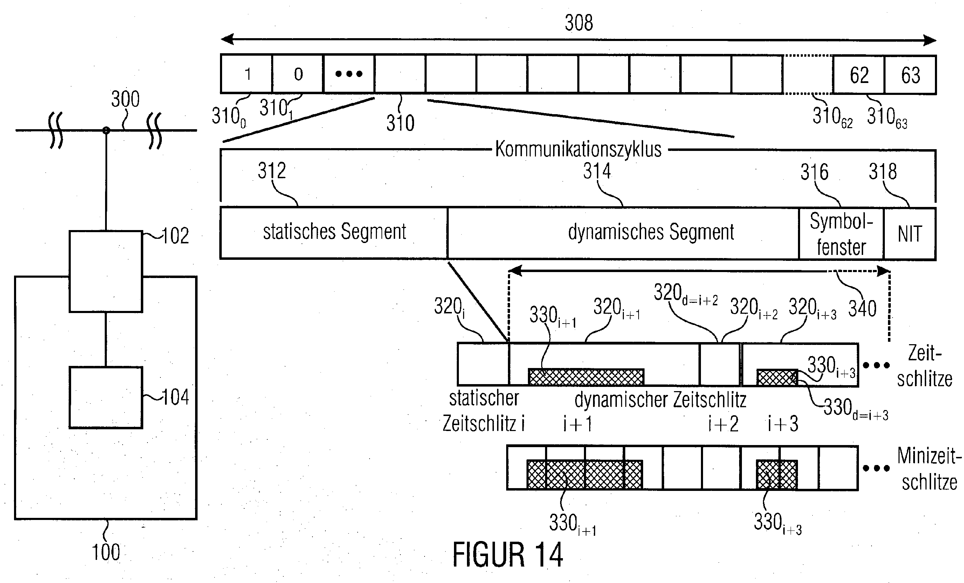

Fig. 14 zeigt eine schematische Ansicht eines Sende/Empfangsknotens 100 mit einer Schnittstelle 102 zum Verbinden mit einem FlexRay-Datenbus 300 sowie eine zeitliche Strukturierung der Belegung des FlexRay-Datenbusses 300 gemäß einem Ausführungsbeispiel der vorliegenden Erfindung. Der Sende/Empfangsknoten 100 ist ausgebildet, um bei einer Abfolge von Zeitabschnitten 108 das Auftreten einer ersten Bedingung und einer zweiten Bedingung zu erfassen und, falls die erste und die zweite Bedingung für einen zugeordneten Zeitabschnitt 110 erfüllt sind, um dem FlexRay-Datenbus 300 während des zugeordneten Zeitabschnitts 110 einen Rahmen einer verfügbaren Nachricht über die Schnittstelle 102 bereit zu stellen, wobei die erste Bedingung gemäß einem Zeitplan den zugeordneten Zeitabschnitt 110 zum Bereitstellen des Rahmens der verfügbaren Nachricht angibt, und wobei die zweite Bedingung angibt, dass die der Nachricht zugeordnete Sendepriorität für den zugeordneten Zeitabschnitt 110 höher ist als eine weitere Sendepriorität einer weiteren verfügbaren Nachricht eines weiteren, mit dem FlexRay-Datenbus 300 verbundenen Sende/Empfangsknotens. Dabei ist die Abfolge von Zeitabschnitten 108 eine Abfolge von dynamischen Zeitschlitzen 340 eines dynamischen Segments 314 eines Kommunikationszyklus 310 des FlexRay-Datenbusses 300, wobei jeder dynamische Zeitschlitz $320_d$ der Abfolge von dynamischen Zeitschlitzen 340 eine vorgegebene Anzahl von Minizeitschlitzen 322 aufweist, so dass jeder dynamische Zeitschlitz $320_d$ der Abfolge von dynamischen Zeitschlitzen 340 in einem vorgegebenen Minizeitschlitz beginnt, wobei der zugeordnete Zeitabschnitt 110 ein zugeordneter dynamischer Zeitschlitz $320_d$

der Abfolge von dynamischen Zeitschlitzen 340 ist.

Bei Ausführungsbeispielen kann die erste und zweite Bedingung so vorgegeben sein, dass das Auftreten der ersten und zweiten Bedingung derart in Form einer Matrix darstellbar ist, dass eine erste Dimension der Matrix die Zeitabschnitte des Zeitplans zum Bereitstellen der Rahmen aufweist und eine zweite Dimension der Matrix die vorgegebenen Sendeprioritäten der Nachrichten aufweist, wobei in der ersten Dimension der Matrix Nachrichten gleicher Sendepriorität vorhanden sind, und wobei die in der zweiten Dimension der Matrix auftretenden vorgegebenen Sendeprioritäten der Nachrichten unterschiedlich sind.

Beispielsweise können die modusbasierten Zeitschlitze 110 des abzubildenden modusbasierten Makrozeitschlitzes 108 den Anfang des dynamischen Segments 314 bilden. Ungenutzte Minizeitschlitze 322 am Ende des dynamischen Segments 314 (nach den modusbasierten Zeitschlitzen 110) können weiterhin für die Kommunikation unter Verwendung des Minizeitschlitz-Mechanismus genutzt werden. Um weiterhin deterministische Garantien bzgl. der auftretenden Verzögerungen für die Modi mit der höchsten Moduspräferenz, für die innerhalb eines modusbasierten Zeitschlitzes 110 ($320_d$) eine Sendeberechtigung erteilt wurde, sicherstellen zu können, können die einzelnen modusbasierten Zeitschlitze 110 ($320_d$) eine feste Länge aufweisen.

Die Minizeitschlitze 322 des zugeordneten dynamischen Zeitschlitzes (z. B. des Minizeitschlitzes $320_{d=i+1}$) können entsprechend ihres zeitlichen Auftretens in dem zugeordneten dynamischen Zeitschlitz (z. B. des Minizeitschlitzes $320_{d=i+1}$) fortlaufend nummeriert sein, wobei zumindest zwei Minizeitschlitzen Sendeprioritäten derart zugeordnet werden, das einem Minizeitschlitz, der eine geringere Nummerierung aufweist, eine höhere Sendepriorität zugeordnet wird, als einem Minizeitschlitz, der eine höhere Nummerierung aufweist, wobei einem der zumindest zwei Minizeitschlitze die Sendepriorität der verfügbaren Nachricht, und einem weiteren der zumindest zwei Minizeitschlitze die Sendepriorität der weiteren verfügbaren Nachricht zugeordnet wird.

Ferner kann nach zumindest einem dynamischen Zeitschlitz $320_d$ der Abfolge von dynamischen Zeitschlitzen 340 ein zusätzlicher dynamischer Zeitschlitz mit Fülldaten angehängt werden, so dass ein nachfolgender dynamischer Zeitschlitz der Abfolge von dynamischen Zeitschlitzen zu dem vorgegebenen Minizeitschlitz beginnt.

Beispielsweise kann nach dem dynamischen Zeitschlitz $320_{d=i+1}$ ein Füllzeitschlitz $320_{d=i+2}$ angehängt werden, so dass der nachfolgende dynamische Zeitschlitz $320_{d=i+3}$ der Abfolge von dynamischen Zeitschlitzen 340 zu dem vorgegebenen Minizeitschlitz beginnt.

Durch die Forderung nach einer festen Länge kann jeder modusbasierte Zeitschlitz 110 ($320_d$) in einem festgelegten Minizeitschlitz 322 beginnen (in allen Kommunikationszyklen 310). Aufgrund der Entkopplung der Minizeitschlitze 322 von den dynamischen Zeitschlitznummern (d), durch den bei FlexRay verwendeten Minizeitschlitz-Mechanismus, resultiert aus der hier vorgestellten Lösung ein erhöhter Bandbreitenbedarf: Um sicherzustellen, dass jeder modusbasierte Zeitschlitz 110 ($320_d$) in einem festen Minizeitschlitz 322 beginnt, wird zusätzlich nach den für einen modusbasierten Zeitschlitz 110 ($320_d$) reservierten dynamischen Zeitschlitzen $320_d$ ein weiterer dynamischer Zeitschlitz reserviert (bei dem letzten modusbasierten Zeitschlitz 110 innerhalb des dynamischen Segments 314 kann auf diesen verzichtet werden) (im Folgenden wird dieser als Füllzeitschlitz (engl.: stuffing-slot) bezeichnet). Ein ausgezeichneter Knoten 100 kann diesen Zeitschlitz nutzen, um jeweils einen Rahmen der Länge zu senden, sodass der nachfolgende modusbasierte Zeitschlitz 110 ($320_d$) jeweils zum gleichen Minizeitschlitz 322 beginnt (engl.: stuffing). Bei einigen Ausführungsbeispielen wird diese Bedingung auch erfüllt, wenn innerhalb eines modusbasierten Zeitschlitzes 110 ($320_d$) kein Knoten 100 eine Nachricht versendet. Zudem wird bei einigen Ausführungsbeispielen sichergestellt, dass eine Kommunikation unter Verwendung von modusbasierter Zeitplanung und schneller Modussignalisierung erst startet, wenn der Knoten 100, welcher für das Füllen (engl.: stuffing) verantwortlich ist, seine Arbeit aufgenommen hat. Alternativ kann auch der in einem Modus sendeberechtigte Knoten 100 mit der niedrigsten Moduspräferenz das Füllen (engl.: stuffing) innerhalb des für seinen Modus reservierten dynamischen Zeitschlitzes $320_d$ übernehmen. Hierzu ist die Anforderung an das Auffüllen (engl.: padding) entsprechend zu erweitern. Zusätzlich erkennen bei einigen Ausführungsbeispielen die anderen Knoten 100, wenn sich in dem jeweiligen Rahmen 330 keine sinnvollen Daten, sondern nur Fülldaten befinden. Umgesetzt werden kann dieser Ansatz z. B. durch die Markierung eines Rahmens 330 als Null-Rahmen. Die Verwendung von Null-Rahmen innerhalb des dynamischen Segments 314 ist in der FlexRay-Spezifikation 2.1A nicht vorgesehen, hier wäre eine entsprechende Anpassung des Standards notwendig. Eine effiziente Umsetzung des Füllzeitschlitz-Mechanismus kann auf Seiten des Kommunikationscontrollers durch entsprechende funktionale Erweiterungen erfolgen.

Die vorgestellten Abbildungsvorschriften (Definition 1 und 2), um den Moduspräferenzen dynamische Zeitschlitznummern (d) zuzuordnen, können für diesen Ansatz geringfügig modifiziert werden. Während Definition 1 und 2 jeweils die dynamischen Zeitschlitznummern (d) der Modi eines modusbasierten Zeitschlitzes 110 ($320_d$) basierend auf der Nummer (d) des ersten Zeitschlitzes des dynamischen Segments i + 1 bestimmen, kann nun die Anzahl der bereits vergebenen dynamischen Zeitschlitznummern (d) für die zuvor in dem dynamischen Segment 314 eingeplanten modusbasierten Zeitschlitze 110 ($320_d$) als Ausgangsbasis für die Berechnung verwendet werden (bei der Verwendung eines Füllzeitschlitzes (engl.: stuffing-slot) ist dieser entsprechend zu berücksichtigen).

Basierend auf Forderung 1 bzw. Forderung 4 kann (unter Berücksichtigung der verwendeten Füllzeitschlitze (engl.: *stuffzng-slots*)) die maximale Länge der jeweiligen modusbasierten Zeitschlitze 110 ($320_d$) und basierend hierauf jeweils der Minizeitschlitz 322, zu dem ein modusbasierter Zeitschlitz 110 ($320_d$) frühestens beginnen darf, bestimmt werden.

Die Umsetzungsmöglichkeiten dieses Ansatzes sind mit aktueller Hardware sehr beschränkt: Soll ein Knoten 100 in mehr als nur einem modusbasierten Zeitschlitz 110 ($320_d$) Rahmen 330 versenden können, ist eine entsprechende Erweiterung der Sendepuffer, wie oben beschrieben, notwendig, die es erlaubt, den Parameter *pLatestTx* für jeden Sendepuffer individuell zu konfigurieren.

Die Möglichkeiten zur effizienten Realisierung der modusbasierten Zeitplanung und der schnellen Modussignalisierung mit FlexRay sind durch den bestehenden FlexRay-Standard beschränkt. Jedoch würden vergleichsweise geringfügige Verallgemeinerungen des Standards sehr effiziente Realisierungen ermöglichen. Im folgenden werden zunächst zwei Einschränkungen des Standards diskutiert, und es werden konzeptionelle Vorschläge entwickelt, wie diese Einschränkungen abgeschwächt werden könnten. Anschließend wird eine erste effiziente Realisierung von modusbasierter Zeitplanung und schneller Modussignalisierung, die z. B. durch die Abschwächung der ersten Einschränkung umsetzbar ist, vorgestellt. Danach wird eine zweite effizienzmäßig weiter verbesserte Lösung beschrieben, deren Umsetzung z. B. durch die Abschwächung der ersten und zweiten Einschränkung möglich ist.

Der bestehende FlexRay-Standard definiert eine zeitliche Strukturierung der Belegung des Übertragungsmediums 300. Zeit ist in Zeitabschnitte derselben Länge unterteilt, die als Kommunikationszyklen 310 (kurz: Zyklen) bezeichnet werden. Jeder Kommunikationszyklus 310 ist in Segmente unterteilt: ein statisches Segment 312, ein optionales dynamisches Segment 314, ein optionales Symbolfenster 316 sowie eine Netzwerk-Leerlaufzeit 318 (NIT = network idle time). Das statische Segment 312 weist eine Mehrzahl statischer Zeitschlitze 320k auf, mit der Einschränkung, dass jeder Zeitschlitz $320_k$ höchstens einem Knoten 100 zugeordnet werden darf (*Einschränkung 1*: Verbot von Zeitschlitz-Multiplexing und Wettbewerb, siehe FlexRay-Spezifikation, Abschnitte 5.1.3.1 und 9.3.2.1.1). Durch diese exklusive Zuordnung soll der deterministische, konkurrenzfreie Zugriff sichergestellt werden. Eine weitere Einschränkung besteht darin, dass alle statischen Zeitschlitze $320_k$ dieselbe Länge haben (*Einschränkung 2*: gleiche Länge aller statischen Zeitschlitze, siehe FlexRay-Spezifikation, Abschnitte 5.1.3.1 und 5.2.3.2).

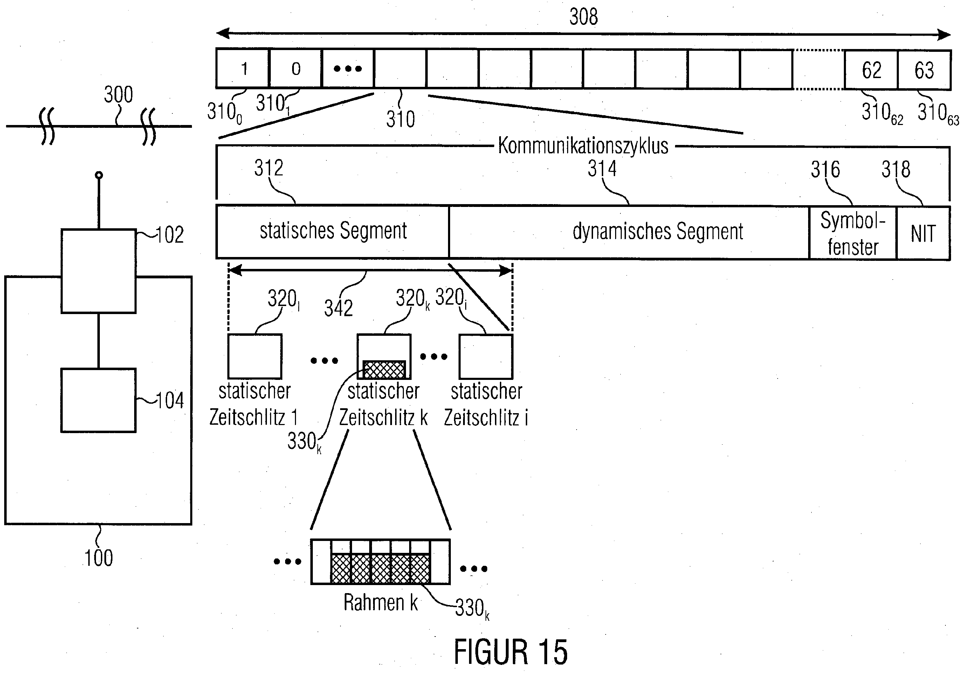

Fig. 15 zeigt eine schematische Ansicht eines Sende/Empfangsknotens 100 mit einer Schnittstelle 102 zum Verbinden mit einem FlexRay-Datenbus 300 sowie eine zeitliche Strukturierung der Belegung des FlexRay-Datenbusses 300 gemäß einem Ausführungsbeispiel der vorliegenden Erfindung. Der Sende/Empfangsknoten 100 ist ausgebildet, um bei einer Abfolge von Zeitabschnitten 108 das Auftreten einer ersten Bedingung und einer zweiten Bedingung zu erfassen und, falls die erste und die zweite Bedingung für einen zugeordneten Zeitabschnitt 110 erfüllt sind, um dem FlexRay-Datenbus 300 während des zugeordneten Zeitabschnitts 110 einen Rahmen 330 einer verfügbaren Nachricht über die Schnittstelle 102 bereit zu stellen, wobei die erste Bedingung gemäß einem Zeitplan den zugeordneten Zeitabschnitt 110 zum Bereitstellen des Rahmens 330 der verfügbaren Nachrichten angibt, und wobei die zweite Bedingung angibt, dass die der Nachricht zugeordneten Sendepriorität für den zugeordneten Zeitabschnitt 110 höher ist als eine weitere Sendepriorität einer weiteren verfügbaren Nachricht eines weiteren, mit dem FlexRay-Datenbus 300 verbundenen Sende/Empfangsknotens. Dabei ist die Abfolge von Zeitabschnitten 108 eine Abfolge von statischen Zeitschlitzen 342 eines statischen Segments 312 eines Kommunikationszyklus 310 des FlexRay-Datenbusses 300, wobei der zugeordnete Zeitabschnitt 110 ein zugeordneter statischer Zeitschlitz $320_k$ der Abfolge von statischen Zeitschlitzen 342 ist.

Bei Ausführungsbeispielen kann die erste und zweite Bedingung so vorgegeben sein, dass das Auftreten der ersten und zweiten Bedingung derart in Form einer Matrix darstellbar ist, dass eine erste Dimension der Matrix die Zeitabschnitte des Zeitplans zum Bereitstellen der Rahmen aufweist und eine zweite Dimension der Matrix die vorgegebenen Sendeprioritäten der Nachrichten aufweist, wobei in der ersten Dimension der Matrix Nachrichten gleicher Sendepriorität vorhanden sind, und wobei die in der zweiten Dimension der Matrix auftretenden vorgegebenen Sendeprioritäten der Nachrichten unterschiedlich sind.

In anderen Worten, Einschränkung 1 könnte z. B. durch die Zulassung von Zeitschlitz-Multiplexing und beschränktem Wettbewerb in Zeitschlitzen $320_k$ des statischen Segments 312 abgeschwächt werden. Die Zulassung von Zeitschlitz-Multiplexing würde es erlauben, einen statischen Zeitschlitz $320_k$ in unterschiedlichen Zyklen 310 verschiedenen Knoten 100 zuzuordnen (vgl. auch FlexRay-Standard Version 3.0). Die zusätzliche Zulassung von beschränktem Wettbewerb würde die Nutzung statischer Zeitschlitze $320_k$ als modusbasierte Zeitschlitze 110 ermöglichen. Die im FlexRay-Standard vorgesehene exklusive Nutzung eines statischen Zeitschlitzes $320_k$ könnte in diesem Fall durch die Begrenzung des Wettbewerbs in diesem Zeitschlitz $320_k$ auf einen einzigen Knoten 100 erreicht werden. Damit ist die Abschwächung von Einschränkung 1 kompatibel mit dem bestehenden FlexRay-Standard.

Einschränkung 2 könnte z. B. durch die Zulassung unterschiedlicher Längen für statische Zeitschlitze 320k bzw. für eine Teilmenge statischer Zeitschlitze $320_k$ abgeschwächt werden, wobei die Zeitstruktur des statischen Segments 312 in allen Zyklen 310 identisch ist. Eine weitere Abschwächung von Einschränkung 2 könnte z. B. darin bestehen, dass die statischen Segmente 312 verschiedener Zyklen 310 eine unterschiedliche Zeitstruktur haben können. Diese Abschwächungen beinhalten die Möglichkeit, die Zeitstruktur im Rahmen der durch den aktuellen FlexRay-Standard vorgegebenen Einschränkungen zu wählen, so dass es sich um kompatible Abschwächungen handelt. Beide Abschwächungen würden die effizientere Nutzung der Bandbreite auch bei exklusiver Nutzung statischer Zeitschlitze $320_k$ durch die Möglichkeit zur Abstimmung der Zeitschlitzlänge auf die Länge der zu sendenden Rahmen 330 unterstützen. Im Falle der Nutzung statischer Zeitschlitze $320_k$ als modusbasierte Zeitschlitze 110 könnte die Länge statischer Zeitschlitze $320_k$ zusätzlich auf den in diesem Zeitschlitz $320_k$ vorgesehenen Wettbewerb abgestimmt werden, wodurch die effizientere Nutzung der Bandbreite auch diesen Fällen unterstützt wird.

Dabei kann jeder statische Zeitschlitz $320_k$ der Abfolge von statischen Zeitschlitzen 342 eine vorgegebene Anzahl von Minizeitschlitzen 322 aufweisen. Ferner können die Minizeitschlitze 322 des zugeordneten statischen Zeitschlitzes entsprechend ihres zeitlichen Auftretens fortlaufend nummeriert sein, wobei zumindest zwei Minizeitschlitzen Sendeprioritäten derart zugeordnet werden, dass einem Minizeitschlitz, der eine geringere Nummerierung aufweist, eine höhere Sendepriorität zugeordnet wird, als einem Minizeitschlitz, der eine höhere Nummerierung aufweist, wobei einem der zumindest zwei Minizeitschlitze die Sendepriorität der verfügbaren Nachricht und einem weiteren der zumindest zwei Minizeitschlitze die Sendepriorität der weiteren verfügbaren Nachricht zugeordnet wird. Dabei kann die zweite Bedingung erfüllt sein, wenn in dem statischen Zeitschlitz $320_k$ vor dem Auftreten des Minizeitschlitzes, dem die Sendepriorität der verfügbaren Nachricht zugeordnet ist, der Rahmen der weiteren verfügbaren Nachricht nicht übertragen wurde.

Zur Realisierung des beschränkten Wettbewerbs in statischen Zeitschlitzen $320_k$ könnte z. B. das im dynamischen Segment 314 angewendete Minizeitschlitz-Verfahren in geeignet angepasster Form verwendet werden. Das dynamische Segment 314 ist in Minizeitschlitze 322 konstanter Länge unterteilt, die fortlaufend nummeriert sind, beginnend bei $i+1$, wodurch die Nummerierung der Zeitschlitze $320_k$ des statischen Segments 312 fortgesetzt wird. Rahmen $330_d$, die im dynamischen Segment 314 gesendet werden sollen, erhalten einen eindeutig vergebenen Identifizierer $c \geq i+1$, Die Übertragung eines Rahmens $330_d$ mit dem Identifizierer c beginnt in dem $(c-i)$-ten freien Minizeitschlitz, sofern der nachfolgende Abschnitt des dynamischen Segments 314 lang genug ist, um die Übertragung abzuschließen. Für die Übertragung werden mehrere Minizeitschlitze 322 zu einem dynamischen Zeitschlitz $320_d$ zusammengefasst. Während dieser Zeit wird das Zählen freier Minizeitschlitze 322 ausgesetzt. Dieses Schema verleiht Rahmen $330_d$ mit kleineren Identifizierern Präferenz, garantiert jedoch nicht, dass alle Rahmen $330_d$, die in einem dynamischen Segment 314 konkurrieren, gesendet werden können. Durch die Vergabe eindeutiger Identifizierer ist sichergestellt, dass keine Kollisionen auftreten (FTDMA).

Die Anpassung des im dynamischen Segment 314 angewendeten Verfahrens zur Realisierung des Wettbewerbs könnte z. B. in der nachfolgend beschriebenen Form erfolgen. Sei M = $\{m_1,...,m_l\}$ eine nichtleere endliche Menge von Modi, $mp: M \to \mathbb{N}_0$ eine Funktion, die jedem Modus eine Präferenz zuordnet, wobei in der nachfolgenden Darstellung angenommen wird, dass niedrigere Werte eine höhere Präferenz bedeuten. Des Weiteren sei V = $\{v_1,...,v_n\}$ eine endliche, nichtleere Menge von Knoten 100, die gemeinsam ein Single-Hop-Netzwerk bilden. Die Zeit wird in eine unendliche Sequenz S = $(S_1, S_2, ...)$ von Zyklen 310 unterteilt, die jeweils aus einem statischen Segment 312 mit einer Sequenz S = $(s_1,...,s_i)$ gleichlanger statischer Zeitschlitze $320_k$ bestehen. Jeder statische Zeitschlitz $s_k$ aus S ($320_k$) wird durch seine Position $k$ in der Sequenz identifiziert. Die partielle Funktion $SA: S \times M \to_p V$ ist eine Zeitschlitzallokation, die für jeden Zeitschlitz $320_k$ und jeden Modus maximal einen Knoten 100 bestimmt, der einen Rahmen 330 zum Senden bereitstellen darf.

Definition 3 (vgl. Definition 1): Die Funktion $mslt: M \to \mathbb{N}_0$ ordnet jedem Modus eine Minizeitschlitznummer zu und ist wie folgt definiert:

$$\forall m \in M: mslt(m) = |M \setminus M_m| \; mit \; M_m =_{df} \{n \in M \mid mp(m) < mp(n)\}$$

Jeder statische Zeitschlitz $320_k$ wird in eine Anzahl von Minizeitschlitzen 322 zerlegt, die fortlaufend nummeriert sind, beginnend bei 0. Damit das für das dynamische Segment 314 beschriebene Wettbewerbsverfahren angewendet werden kann, weist bei einigen Ausführungsbeispielen jeder statische Zeitschlitz $320_k$ in einer ersten Realisierung die nachfolgende Mindestlänge auf:

Forderung 5 (vgl. Forderung 1): Sei $p_{max,t}$ die Anzahl der Minizeitschlitze 322, die zur Übertragung eines Rahmens $330_k$ mit der maximalen erlaubten Nutzlast $p_{max,s}$ gemäß FlexRay-Spezifikation, Randbedingung (engl.: constraint) 21, Bez. 13 benötigt werden, so beträgt bei einigen Ausführungsbeispielen die Länge jedes statischen Zeitschlitzes $320_k$ mindestens $|M| - 1 + p_{max,t}$ Minizeitschlitze $+ 2 \cdot gdActionPointOffset$ Makroticks (vgl. FlexRay-Spezifikation Randbedingung (engl.: constraint) 15: $gdStatic$).

Sei $s_{j,r}$ ein Auftreten des statischen Zeitschlitzes $s_r$ des Zyklus $S_j$, $f$ ein Rahmen, der gemäß modusbasierter Zeitplanung für Zeitschlitz $s_{j,r}$ und Modus $m_t$ eingeplant ist. Laut Definition 3 ist $p = mslt(m_t)$ die Minizeitschlitznummer des Rahmens. Ferner gelte, dass alle weiteren für $s_{j,r}$ eingeplanten Rahmen $f'$ Modi aufweisen, denen laut $mslt$ eine höhere Minizeitschlitznummer zugeordnet ist. Dann beginnt die Übertragung des Rahmens $f$ in dem $p$-ten freien Minizeitschlitz, wobei der statische Zeitschlitz $320_k$ laut Forderung 5 bei einigen Ausführungsbeispielen so konfiguriert ist, dass die Übertragung des Rahmens $f$ abgeschlossen werden kann.

Ferner kann der Sende/Empfangsknoten 100 ausgebildet sein, um, falls der Minizeitschlitz, dem die Sendepriorität der verfügbaren Nachricht zugeordnet ist, zeitlich nach einem letztmöglichen Minizeitschlitz, der den letztmöglichen Beginn der Übertragung des Rahmens der verfügbaren Nachricht angibt, auftritt, den Rahmen $330_k$ der verfügbaren Nachricht zu verwerfen oder zu einem späteren zugeordneten statischen Zeitschlitz $320_k$ dem FlexRay-Datenbus 300 bereit zu stellen.

In jedem Auftreten eines statischen Zeitschlitzes $320_k$ kann ein neuer Wettbewerb durchgeführt werden, an dem die Knoten 100, die für diesen Zeitschlitz $320_k$ Rahmen $330_k$ eingeplant haben, teilnehmen. Die Beschränkung des Wettbewerbs ergibt sich durch die Anzahl der Modi (Obergrenze) bzw. durch die Anzahl der in einem Auftreten eines Zeitschlitzes $320_k$ eingeplanten Rahmen $330_k$. Durch den Einsatz der modusbasierten Zeitplanung ist sichergestellt, dass pro statischem Zeitschlitz $320_k$ und Modus maximal ein Rahmen $330_k$ eingeplant wird. Auf diese Weise erhalten Rahmen 330, die in dem Auftreten eines Zeitschlitzes $320_k$ gesendet werden sollen, immer paarweise verschiedene Minizeitschlitznummern.

Die zweite Bedingung kann ferner erfüllt sein, wenn in dem statischen Zeitschlitz $320_k$ vor dem Auftreten des Minizeitschlitzes, dem die Sendepriorität der verfügbaren Nachricht zugeordnet ist, der Rahmen der weiteren verfügbaren Nachricht übertragen wurde und der Minizeitschlitz, dem die Sendepriorität der verfügbaren Nachricht zugeordnet ist, zeitgleich mit dem letztmöglichen Minizeitschlitz auftritt oder vor dem letztmöglichen Minizeitschlitz auftritt.

Ferner kann der Sende/Empfangsknoten 100 ausgebildet sein, um, falls der Rahmen $330_k$ der verfügbaren Nachricht eine vorgegebene Länge unterschreitet, den Rahmen $330_k$ der verfügbaren Nachricht vor der Übertragung mit Fülldaten aufzufüllen oder an den Rahmen $330_k$ der verfügbaren Nachricht Fülldaten anzuhängen, so dass eine Übertragung des Rahmens $330_k$ der verfügbaren Nachricht oder der Fülldaten erst nach dem Auftreten des letztmöglichen Minizeitschlitzes endet.

In einer beschriebenen Ausprägung von modusbasierter Zeitplanung wird pro Zeitschlitz $320_k$ höchstens ein Rahmen $330_k$ gesendet, und zwar der Rahmen 330 mit der höchsten Priorität, auch wenn mehrere Rahmen 330 eingeplant sind. Zur Verbesserung der Effizienz kann in einer weiteren beschriebenen Ausprägung des modusbasierter Zeitplanung von dieser Festlegung abgewichen werden, sofern die Länge des Zeitschlitzes $320_k$ ausreicht, um einen oder mehrere weitere eingeplante Rahmen 330 in der Reihenfolge ihrer Priorität zu senden. Dazu kann das bereits beschriebene Wettbewerbsverfahren eingesetzt werden, wobei z. B. ein Parameter ähnlich wie z. B. *pLatestTx* (letztmöglicher Minizeitschlitz) dazu verwendet werden kann, um sicherzustellen, dass die Zeitschlitzgrenzen eingehalten werden.

Analog zu den oben beschriebenen Optimierung kann die Länge statischer Zeitschlitze $320_k$ an den tatsächlich stattfindenden Wettbewerb angepasst werden, so dass die Anzahl ungenutzter Minizeitschlitze reduziert wird.

Definition 4 (vgl. Definition 2): Die Funktion $mslt_2$: $M \times S \to \mathbb{N}_0$ ordnet jedem Modus eines Zeitschlitzes $s \in S$ eine Minizeitschlitznummer zu und ist wie folgt definiert:

$$\forall m \in M, \; \forall s \in S \text{ mit } SA(s,m) \text{ definiert: } mslt_2(m,s) = | M_s \setminus M_{s,m} | \text{ mit:}$$

$$M_s =_{\mathrm{df}} \{ m \in M \mid SA(s,m) \text{ definiert} \}$$

$$M_{s,m} =_{\mathrm{df}} \{ n \in M_s \mid mp(m) < mp(n) \}$$

Durch diese veränderte Zuordnung von Minizeitschlitznummern wird die maximale Dauer der Wettbewerbsphase in jedem statischen Zeitschlitz $320_k$ minimiert. Aufgrund der Einschränkung, dass alle statischen Zeitschlitze $320_k$ dieselbe Länge haben, kann das daraus resultierende Optimierungspotential aber nur teilweise genutzt werden:

Forderung 6 (vgl. Forderung 4): Sei $p_{max,t}$ die Anzahl der Minizeitschlitze, die zur Übertragung eines Rahmens $330_k$ mit der maximalen erlaubten Nutzlast $p_{max,s}$ gemäß der FlexRay-Spezifikation, Randbedingung (engl.: constraint) 21, Bez. 13 benötigt werden. Sei ferner $p = max \{ mslt_2(m,s) \mid m \in M, s \in S \text{ mit } SA(s,m) \text{ definiert} \} - 1$. Dann beträgt bei einigen Ausführungsbeispielen die Länge jedes statischen Zeitschlitzes $320_k$ mindestens $p + p_{max,t}$ Minizeitschlitze + $2 \cdot gdActionPointOffset$ Makroticks (vgl. FlexRay-Spezifikation, Randbedingung (engl.: constraint) 15: *gdStatic*).

Eine Realisierungsvariante wäre hier, die Anzahl der pro statischem Zeitschlitz $320_k$ einplanbaren Rahmen 330 insgesamt zu begrenzen, so dass eine globale Beschränkung des Wettbewerbs besteht und damit die maximale Dauer der Wettbewerbsphase auf ein Minimum reduziert wird.

Die bis zu diesem Punkt beschriebenen Realisierungen mit FlexRay erfordern lediglich die Abschwächung der Einschränkung 1. Eine weitere Verbesserung der Effizienz ist bei zusätzlicher Abschwächung der Einschränkung 2 erzielbar, die vorsieht, dass die Länge statischer Zeitschlitze $320_k$ verschieden gewählt werden kann. Dazu genügt es, die Forderung 6 geringfügig zu modifizieren:

Forderung 7 (vgl. Forderung 4): Sei $p_{max,t}$ die Anzahl der Minizeitschlitze 322, die zur Übertragung eines Rahmens 330 mit der maximalen erlaubten Nutzlast $p_{max,s}$ gemäß der FlexRay-Spezifikation, Randbedingung (engl.: constraint) 21, Bez. 13 benötigt werden. Sei ferner $p_s = max\ \{mslt_2(m,s)\ |\ m \in M\ mit\ SA(s,m)\ definiert\}$ - 1, für alle $m \in M$, $s \in S$ mit $SA(s,m)$ definiert. Dann beträgt bei einigen Ausführungsbeispielen die Länge des statischen Zeitschlitzes s, für den es einen Modus $m$ gibt, so dass $SA(s,m)$ definiert ist, mindestens $p_s + p_{max,t}$ Minizeitschlitze + 2 · $gdActionPointOffset$ Makroticks (vgl. FlexRay-Spezifikation, Randbedingung (engl.: constraint) 15: $gdStatic$).

Die oben beschriebenen Realisierungen und Optimierungen der schnellen Modussignalisierung basieren auf einem FTDMA-Verfahren. Eine alternative Umsetzung ist auf Basis der zur Kommunikation verwendeten elektrischen Buspegel möglich. Die FlexRay-EPL-Spezifikation [FlexRay Communications System Electrical Physical Layer Specification, Revision 2.1B, 2006] spezifiziert drei unterschiedliche elektrische Pegel: Leerlauf-Pegel (engl.: idle), Eins-Pegel (engl.: high) und Null-Pegel (engl.: low) sowie das Verhalten bei der Überlagerung unterschiedlicher anliegender Pegel (siehe FlexRay-EPL-Spezifikation, Kapitel 2.5 und 6.3-6.6). Ein an dem Bus anliegender Leerlauf-Pegel wird sowohl von einem Eins- als auch einem Null-Pegel überlagert. Das Verhalten bei gleichzeitig anliegenden Eins- und Null-Pegeln ist undefiniert.

Zur Umsetzung der schnellen Modussignalisierung treten die Knoten 100, denen der jeweilige statische Zeitschlitz $320_k$ für einen gegebenen Modus zugeordnet wurde und die über einen sendebereiten Rahmen 330 verfügen, zu Beginn des statischen Zeitschlitzes $320_k$ (engl.: action point) in einen Wettbewerb ein. Hierzu sendet jeder Knoten 100 seine Modus-Präferenz, wobei z. B. niedrigere Werte eine höhere Priorität bedeuten. Die binäre Kodierung der Modus-Präferenzen kann dann z. B. so erfolgen, dass logische Null-Pegel zur Kodierung einer logischen Null und Leerlauf-Pegel zur Kodierung einer logischen Eins verwendet werden (siehe FlexRay-EPL-Spezifikation, Kapitel 8.4.3 und Tabelle 8-3). Jeder an dem Wettbewerb beteiligte Knoten 100 nutzt eine Bit-Überwachung (eng.: bit monitoring) und zieht sich von dem Wettbewerb zurück, falls der am Bus 300 anliegende Pegel nicht mit dem von ihm gesendeten Pegel übereinstimmt.

Die zur schnellen Modussignalisierung benötigte Anzahl von Bits ergibt sich aus der Anzahl verwendeter Prioritäten zu $\lceil log_2\ |M| \rceil$ Bits bzw. alternativ aus der niedrigsten verwendeten Priorität zu $\lceil log_2\ max_{m \in M}\ (mp(m)) \rceil$. Die Anzahl erforderlicher Bits könnte in einer weiteren Lösung optimiert werden, indem die maximale Anzahl der in einem Zeitschlitz $320_k$ eingeplanten Nachrichten zugrunde gelegt wird. Eine weitere Verbesserung wäre z. B. dadurch möglich, dass die Anzahl erforderlicher Bits für jeden Zeitschlitz $320_k$ separat aufgrund der in diesem Zeitschlitz $320_k$ eingeplanten Nachrichten bestimmt wird.

Anhand der Fig. 8 bis 15 wurde aufgezeigt, wie FlexRay in Verbindung mit modusbasierter Zeitplanung (engl.: mode-based scheduling) und der schnellen Modussignalisierung (engl: fast mode-signaling) eingesetzt werden kann, wobei zwischen zwei technischen Realisierungen unterschieden wurde. Anhand der Fig. 8 bis 14 wurde die Umsetzung der modusbasierten Zeitplanung innerhalb des dynamischen FlexRay-Segments 314 beschrieben, die konform zum aktuellen FlexRay-Standard 2.1A gemäß der FlexRay-Spezifikation ist und für die schnelle Modussignalisierung den Minizeitschlitz-Mechanismus nutzt. Eine Implementierung ist unter Verwendung aktueller verfügbarer Hardware möglich, aber ohne Erweiterungen mit Performance-Einbußen verbunden. Anhand der Fig. 15 wurde die Umsetzung der modusbasierten Zeitplanung innerhalb des Zeitschlitzes des statischen FlexRay-Segments 312 beschrieben, einschließlich der für die Realsierung notwendigen Erweiterungen bzw. Einschränkungen des FlexRay-Standards 2.1A gemäß der FlexRay-Spezifikation. Zusätzlich wurden die Realisierungen für die schnelle Modussignalisierung im statischen Segment 312 erläutert. Diese basieren auf der Nutzung des Minizeitschlitz-Mechanismus innerhalb statischer Zeitschlitze $320_k$. Alternativ kann die schnelle Modussignalisierung unter Ausnutzung der Eigenschaften der FlexRay-EPL-Spezifikation erfolgen. Hierzu erfolgt die Kodierung der Moduspräferenzen mittels dominanter und rezessiver Buspegel unter Einführung einer Wettbewerbsphase zu Beginn des statischen Zeitschlitzes $320_k$ unter Nutzung von Bit-Überwachung (engl.: bit-monitoring).

Im folgenden werden Realisierungen der modusbasierten Zeitplanung mit LIN betrachtet, wobei der LIN-Standard 2.1 gemäß der LIN-Spezifikation [LIN Consortium: LIN Protocol Specification, Revision 2.1, Nov 24, 2006] zugrunde gelegt wird. Zum besseren Verständnis wird zunächst auf die grundlegende Funktionsweise von LIN eingegangen. Daraufhin werden Realisierungen betrachtet, die mit dem bestehenden LIN-Standard 2.1 verträglich sind. Anschließend werden flexible Realisierungen der modusbasierten Zeitplanung erörtert, die eine Verallgemeinerung des LIN-Standards erfordern.

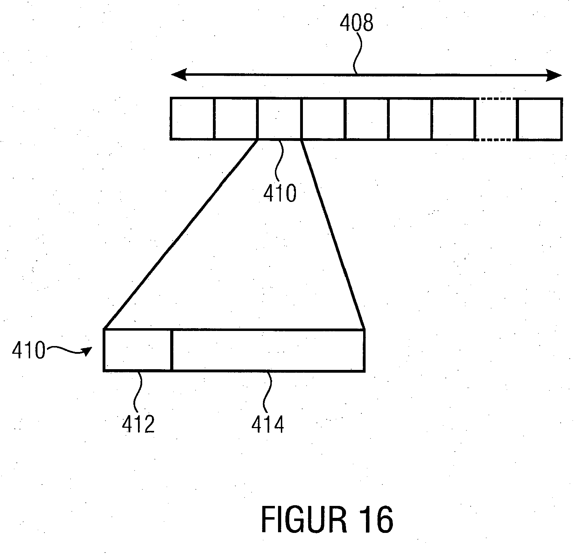

Fig. 16 zeigt eine schematische Ansicht einer zeitlichen Strukturierung der Belegung des LIN-Datenbusses 400 gemäß der LIN-Spezifikation. LIN ist ein Fahrzeugbus, der seit Ende der 90er Jahre durch ein Industriekonsortium entwickelt und standardisiert wurde und zur preisgünstigen Vernetzung von Steuergeräten im Fahrzeug eingesetzt wird. Die maximale Übertragungsrate ist mit 19,2 Kbps vergleichsweise niedrig. Die Mediumarbitrierung wird zentral durch einen Masterknoten gesteuert, der die bis zu 16 Slaves eines LIN-Busses abfragt (engl.: polling). Dazu strukturiert der Masterknoten die Zeit in Zeitschlitze 410 (engl.: LIN frame slots) (siehe LIN-Spezifikation, Kapitel 2.4.2) fester Dauer. In jedem Zeitschlitz 410 sendet er eine Kennung gemäß einem statisch konfigurierten, periodischen Zeitplan (engl, header); dieser Vorgang wird als LIN-Master-Aufgabe (engl.: LIN master task) bezeichnet. In demselben Zeitschlitz 410 antwortet der Knoten 100 (Master oder Slave), der für die betreffende Kennung als Sender vorgesehen ist; dieser Vorgang wird als LIN-Slave-Aufgabe (engl.: LIN slave task) bezeichnet. Die Antwort wird durch einen oder mehrere Knoten 100, die für die betreffende Kennung als Empfänger vorgesehen sind (Master und/oder Slaves) verarbeitet. Die Abfolge von Kennung 412 (engl.: header) und Antwort 414 (engl.: response) wird als LIN-Rahmen (engl.: LIN frame) bezeichnet.

Das bei LIN eingesetzte Übertragungsverfahren sieht eine zeichenweise Übertragung von LIN-Rahmen (engl.: frames) vor. Ein Zeichen besteht aus 8 Bit Nutzdaten, denen zur Synchronisation ein Startbit vorangestellt ist und die durch ein Stopbit abgeschlossen werden. Jeder LIN-Rahmen beginnt mit der Signalisierung der Busbelegung durch den Master, der dazu eine Folge dominanter Bits sendet, gefolgt von einem rezessiven Bit (siehe LIN-Spezifikation, Kapitel 2.3.1 und 6.5.3). Danach folgen eine Synchronisationssequenz sowie die Kennung, die in diesem Zeitschlitz 410 eingeplant ist. Der vorgesehene Sender antwortet mit bis zu 8 Datenbytes und einer Prüfsumme.

Durch die zentrale Steuerung des Mediumzugriffs ist das Verfahren prinzipiell kollisionsfrei. Eine Ausnahme bilden sog. ereignisgetriggerte Rahmen, bei denen dieselbe Kennung zum gleichzeitigen Sendeaufruf (engl.: polling) mehrerer Knoten 100 verwendet werden kann. Antworten mehrere Knoten 100, kommt es hier zu einer Kollision, die durch das Mithören während des Sendens erkannt werden kann. Dazu wird ein Bit-Überwachung (engl.: bit monitoring) durchgeführt, bei dem jeder Sender den gesendeten Buspegel mit dem empfangenen Buspegel vergleicht. Wird eine Abweichung festgestellt, bricht der Sender seinen Sendevorgang spätestens am Ende des aktuell übertragenen Zeichens ab (siehe LIN-Spezifikation, Kapitel 2.5.2.2). Der Masterknoten erkennt die Kollision am Ende der Antwort (engl.: response), z. B. aufgrund eines Prüfsummenfehlers, und kann eine Kollisionsbehandlung durchführen, z. B. durch Einzelabfrage von Knoten 100 bzw. Wechsel auf einen kollisionsfreien Zeitplan.

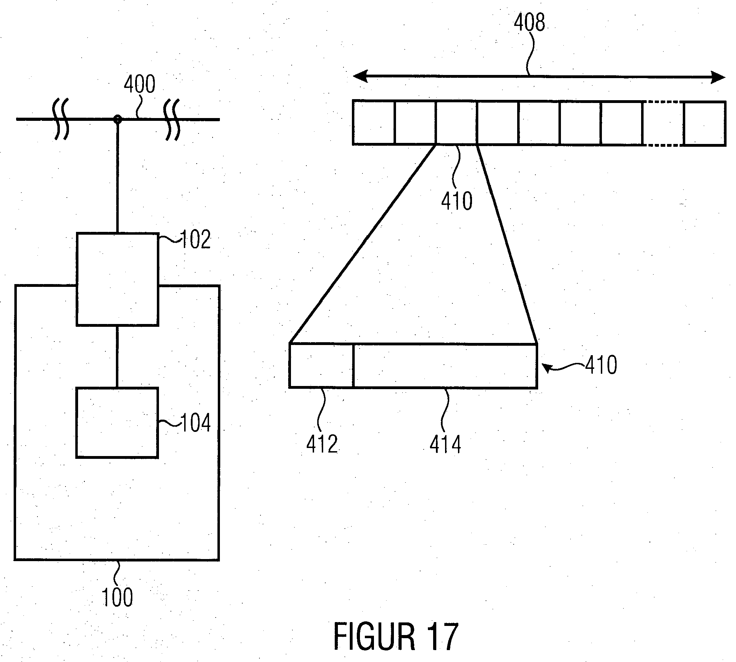

Fig. 17 zeigt eine schematische Ansicht eines Sende/Empfangsknotens 100 mit einer Schnittstelle 102 zum Verbinden mit einem LIN-Datenbus 400 sowie eine zeitliche Strukturierung der Belegung des LIN-Datenbusses 400 gemäß einem Ausführungsbeispiel der vorliegenden Erfindung. Der Sende/Empfangsknoten 100 ist ausgebildet, um bei einer Abfolge von Zeitabschnitten 108 das Auftreten einer ersten Bedingung und einer zweiten Bedingung zu erfassen und, falls die erste und die zweite Bedingung für einen zugeordneten Zeitabschnitt 110 erfüllt sind, um den LIN-Datenbus 400 während des zugeordneten Zeitabschnitts 110 einen Rahmen einer verfügbaren Nachricht über die Schnittstelle bereit zu stellen, wobei die erste Bedingung gemäß einem Zeitplan den zugeordneten Zeitabschnitt 110 zum Bereitstellen des Rahmens der verfügbaren Nachricht angibt, und wobei die zweite Bedingung angibt, dass die Nachricht zugeordnete Sendepriorität für den zugeordneten Zeitabschnitt 110 höher ist als eine weitere Sendepriorität einer weiteren verfügbaren Nachricht eines weiteren, mit dem LIN-Datenbus 400 verbundenen Sende/Empfangsknotens für denselben zugeordneten Zeitabschnitt. Dabei ist die Abfolge von Zeitabschnitten 108 eine Abfolge von Zeitschlitzen 408 des LIN-Datenbusses 400, wobei der zugeordnete Zeitabschnitt 110 ein zugeordneter Zeitschlitz 410 der Abfolge von Zeitschlitzen 408 ist.

Bei Ausführungsbeispielen kann die erste und zweite Bedingung so vorgegeben sein, dass das Auftreten der ersten und zweiten Bedingung derart in Form einer Matrix darstellbar ist, dass eine erste Dimension der Matrix die Zeitabschnitte des Zeitplans zum Bereitstellen der Rahmen aufweist und eine zweite Dimension der Matrix die vorgegebenen Sendeprioritäten der Nachrichten aufweist, wobei in der ersten Dimension der Matrix Nachrichten gleicher Sendepriorität vorhanden sind, und wobei die in der zweiten Dimension der Matrix auftretenden vorgegebenen Sendeprioritäten der Nachrichten unterschiedlich sind.

Beispielsweise kann die modusbasierte Zeitplanung mit LIN auf der Basis des bestehenden LIN-Standards 2.1 realisiert werden. Eine wichtige Voraussetzung für die Umsetzung ist mit der Strukturierung der Zeit in LIN-Zeitschlitze 410 fester Länge gegeben. Allerdings ist der Lösungsraum durch die bei LIN verwendete zentrale Mediumarbitrierung eingeschränkt. In einer möglichen Lösung verfügt der Masterknoten über einen zentralen modusbasierten Zeitplan. Dieser Zeitplan legt für jeden Zeitschlitz 410 eine Anzahl von Kennungen fest, denen jeweils ein Modus zugeordnet ist, wobei ein Modus in einem Zeitschlitz 410 höchstens einer Kennung zugeordnet sein darf. Über die Moduspräferenz sind die Kennungen eines Zeitschlitzes 410 nach Priorität geordnet. In jedem Zeitschlitz 410 entscheidet der Masterknoten, welche Modi aktuell gültig sind, und sendet dann die zum Modus mit der höchsten Priorität gehörende Kennung.

Die beschriebene Lösung wird im LIN-Standard durch das Konzept der sporadischen Rahmen (siehe LIN-Spezifikation, Kap. 2.3.3.3) direkt unterstützt. Bei sporadischen Rahmen ist vorgesehen, dass derselbe Zeitschlitz 410 mehreren nach Prioritäten geordneten Kennungen zugeordnet wird. Die dynamische Entscheidung über die tatsächliche Zeitschlitznutzung obliegt dem Masterknoten und wird z. B. aufgrund der lokal vorliegenden Information bzw. der Daten zuvor empfangener Rahmen getroffen. Die Signalisierung der getroffenen Entscheidung erfolgt über die Kennung im ersten Teil des LIN Rahmens. Auf diese Weise ist die schnelle Signalisierung des aktuellen Modus direkt und effizient umgesetzt, ohne dass zusätzliche Verwaltungsnachrichten versendet werden müssen.

Gegenüber der im allgemeinen Abschnitt beschriebenen modusbasierten Zeitplanung weist die beschriebene Lösung Einschränkungen auf. So ist es z. B. nicht möglich, in jedem Zeitschlitz 410 eine dezentrale Entscheidung zu treffen, welcher Rahmen gesendet werden darf. Vielmehr ist es Aufgabe des Masterknotens, den für den Zeitschlitz gültigen Modus festzulegen und allen Slaves über die Kennung zu signalisieren. Ferner ist es gemäß LIN-Standard nur dem Masterknoten gestattet, sporadische Rahmen zu versenden (vgl. LIN-Spezifikation, Kapitel 2.3.3.3). Diese Einschränkung erscheint allerdings nicht zwingend; denkbar wären auch Lösungen, bei denen der Masterknoten aufgrund ihm vorliegender Informationen einen Modus auswählt und über eine Kennung signalisiert. In diesem Fall kann es jedoch passieren, dass zu der durch den Masterknoten signalisierten Kennung keine sporadische Nachricht zu versenden ist, so dass der Zeitschlitz 410 nicht genutzt wird, obwohl zu einer anderen Kennung eine Nachricht versandfähig vorliegt.

Die Möglichkeiten zur Realisierung der modusbasierten Zeitplanung und der schnellen Modussignalisierung mit LIN sind durch den bestehenden LIN-Standard gemäß der LIN-Spezifikation eingeschränkt. Insbesondere lässt der Standard keine dezentrale Entscliedung darüber zu, welcher Rahmen gesendet werden darf. Jedoch würden vergleichsweise geringfügige Verallgemeinerungen des Standards auch dezentrale Realisierungen ermöglichen.

Beispielsweise kann der Sende/Empfangsknoten 100 ausgebildet sein, um von einem Masterknoten des LIN-Datenbusses 400 einen Rahmen mit einer Kennung, die den aktuellen Zeitschlitz 410 der Abfolge von Zeitschlitzen 408 angibt, zu erhalten, wobei der Sende/Empfangsknoten 100 ausgebildet ist, um basierend auf der Kennung das Auftreten der ersten Bedingung zu erfassen. Ferner kann der Sende/Empfangsknoten 100 ausgebildet sein, um in einer Antwort-Phase des zugeordneten Zeitschlitzes 410 die Sendepriorität der verfügbaren Nachricht dem LIN-Datenbus 400 über die Schnittstelle 102 bereit zu stellen.

Wie oben beschrieben besteht in LIN über die Bit-Überwachung die Möglichkeit, Kollisionen zu erkennen. Dazu vergleicht der Sender den gesendeten Buspegel mit dem empfangenen Buspegel. Wurde ein rezessiver Buspegel gesendet, aber ein dominanter Buspegel empfangen, so handelt es sich um eine Kollision. Kollisionen können nur von Knoten 100 erkannt werden, die rezessiv senden. Der Standard legt fest, dass die Übertragung bei Erkennung von Kollisionen spätestens am Ende des aktuell übertragenen Zeichens abgebrochen werden muss (siehe LIN-Spezifikation, Kapitel 2.5.2.2).

In einer Variante könnte diese Einschränkung dahingehend konkretisiert werden, dass die Übertragung abgebrochen wird, sobald eine Kollision auftritt. Diese Festlegung könnte dann dazu genutzt werden, zu Beginn der Antwort-Phase einen Wettbewerb zwischen mehreren Sendern (Master und/oder Slaves) durchzuführen. Der Ablauf zur modusbasierten Zeitplanung und schnellen Modussignalisierung könnte dann z. B. so gestaltet werden, dass zunächst der Masterknoten eine Kennung sendet, die den aktuellen Zeitschlitz 410 identifiziert. Auf Basis dieser Kennung können dann diejenigen Knoten 100, denen dieser Zeitschlitz 410 für einen gegebenen Modus zugeteilt ist und die über einen sendebereiten Rahmen verfügen, zu Beginn der Antwort-Phase in einen Wettbewerb eintreten. Dazu sendet jeder Knoten 100 seine Moduspräferenz, wobei z. B. niedrigere Werte eine höhere Priorität bedeuten. Die binäre Kodierung der Moduspräferenzen kann dann z. B. so erfolgen, dass dominante Pegel zur Kodierung einer logischen Null und rezessive Pegel zur Kodierung einer logischen Eins verwendet werden. Sobald ein Knoten 100 per Bit-Überwachung eine Kollision erkennt, bedeutet dies, dass ein anderer Knoten eine höhere Moduspräferenz besitzt. In diesem Fall beendet der Knoten 100, der die Kollision erkannt hat, seine Übertragung sofort.

Die zur schnellen Modussignalisierung benötigte Anzahl von Bits ergibt sich aus der Anzahl verwendeter Prioritäten zu $\lceil \log_2 |M| \rceil$ Bits bzw. alternativ aus der niedrigsten verwendeten Priorität zu $\lceil \log_2 max_{m \in M} (mp(m)) \rceil$. Die Anzahl erforderlicher Bits könnte in einer weiteren Lösung optimiert werden, indem die maximale Anzahl der in einem Zeitschlitz 410 eingeplanten Nachrichten zugrunde gelegt wird. Eine weitere Verbesserung wäre z. B. dadurch möglich, dass die Anzahl erforderlicher Bits für jeden Zeitschlitz 410 separat aufgrund der in diesem Zeitschlitz 410 eingeplanten Nachrichten bestimmt wird.

Anhand der Fig. 16 wurde die Umsetzung der modusbasierten Zeitplanung und der schnellen Modussignalisierung für den LIN-Datenbus 400 beschrieben. Auch hier wurde zunächst eine Lösung beschrieben, die mit aktueller Hardware und geringfügiger Abschwächung der LIN-Nonn 2.1 gemäß der LIN-Spezifikation direkt umsetzbar ist. Die schnelle Modussignalisierung erfolgt durch den Master des LIN-Datenbusses im Rahmen der LIN-Master-Anwendung. Eine zweite Realisierung der schnellen Modussignalisierung erfordert eine Konkretisierung der LIN-Norm und nutzt die Bit-Überwachung sowie die dominanten und rezessiven Buspegel zur Kodierung der Moduspräferenzen durch Einführung einer Wettbewerbsphase zu Beginn der LIN-Slave-Aufgabe (engl.: LIN slave task).

Weitere Ausführungsbeispiele der vorliegenden Erfindung schaffen ein Verfahren zum Betreiben eines Sende/Empfangsknotens, der eine Schnittstelle zum Herstellen einer Verbindung mit einem FlexRay-Datenbus aufweist. In einem ersten Schritt wird das Auftreten einer ersten Bedingung und einer zweiten Bedingung für einen zugeordneten Zeitabschnitt einer Abfolge von Zeitabschnitten erfasst. In einem zweiten Schritt wird ein Rahmen einer verfügbaren Nachricht dem Übertragungsmedium während des zugeordneten Zeitabschnitts über die Schnittstelle bereitgestellt, falls die erste und die zweite Bedingung für den zugeordneten Zeitabschnitt erfüllt sind, wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der Nachricht zugeordnete Sendepriorität für den zugeordneten Zeitabschnitt höher ist als eine weitere Sendepriorität einer weiteren verfügbaren Nachricht eines weiteren, mit dem FlexRay-Datenbus verbundenen Sende/Empfangsknotens für den selben zugeordneten Zeitabschnitt. Dabei ist die Abfolge von Zeitabschnitten eine Abfolge von Kommunikationszyklen des FlexRay-Datenbusses, wobei der zugeordnete Zeitabschnitt ein zugeordneter Kommunikationszyklus der Abfolge von Kommunikationszyklen ist, wobei der zugeordnete Kommunikationszyklus ein dynamisches Segment mit dynamischen Zeitschlitzen aufweist, wobei einem dynamischen Zeitschlitz die Sendepriorität der verfügbaren Nachricht und einem weiteren dynamischen Zeitschlitz die Sendepriorität der weiteren verfügbaren Nachricht zugeordnet ist, wobei der Sende/Empfangsknoten ausgebildet ist, um den Rahmen der verfügbaren Nachricht in dem dynamischen Zeitschlitz zu übertragen, dem die Sendepriorität der verfügbaren Nachricht zugeordnet ist.

Weitere Ausführungsbeispiele der vorliegenden Erfindung schaffen ein Verfahren zum Betreiben eines Sende/Empfangsknotens, der eine Schnittstelle zum Herstellen einer Verbindung mit einem FlexRay-Datenbus aufweist. In einem ersten Schritt wird das Auftreten einer ersten Bedingung und einer zweiten Bedingung für einen zugeordneten Zeitabschnitt einer Abfolge von Zeitabschnitten erfasst. In einem zweiten Schritt wird ein Rahmen einer verfügbaren Nachricht dem Übertragungsmedium während des zugeordneten Zeitabschnitts über die Schnittstelle bereitgestellt, falls die erste und die zweite Bedingung für den zugeordneten Zeitabschnitt erfüllt sind, wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der Nachricht zugeordnete Sendepriorität für den zugeordneten Zeitabschnitt höher ist als eine weitere Sendepriorität einer weiteren verfügbaren Nachricht eines weiteren, mit dem FlexRay-Datenbus verbundenen Sende/Empfangsknotens für den selben zugeordneten Zeitabschnitt. Dabei ist die Abfolge von Zeitabschnitten eine Abfolge von dynamischen Zeitschlitzen eines dynamischen Segments eines Kommunikationszyklus des FlexRay-Datenbusses, wobei jeder dynamische Zeitschlitz der Abfolge von dynamischen Zeitschlitzen eine vorgegebene Artzahl von Minizeitschlitzen aufweist, so dass jeder dynamische Zeitschlitz der Abfolge von dynamischen Zeitschlitzen in einem vorgegebenen Minizeitschlitz beginnt, wobei der zugeordnete Zeitabschnitt ein zugeordneter dynamischer Zeitschlitz der Abfolge von dynamischen Zeitschlitzen ist.

Weitere Ausführungsbeispiele der vorliegenden Erfindung schaffen ein Verfahren zum Betreiben eines Sende/Empfangsknotens, der eine Schnittstelle zum Herstellen einer Verbindung mit einem FlexRay-Datenbus aufweist. In einem ersten Schritt wird das Auftreten einer ersten Bedingung und einer zweiten Bedingung für einen zugeordneten Zeitabschnitt einer Abfolge von Zeitabschnitten erfasst. In einem zweiten Schritt wird ein Rahmen einer verfügbaren Nachricht dem Übertragungsmedium während des zugeordneten Zeitabschnitts über die Schnittstelle bereitgestellt, falls die erste und die zweite Bedingung für den zugeordneten Zeitabschnitt erfüllt sind, wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der Nachricht zugeordnete Sendepriorität für den zugeordneten Zeitabschnitt höher ist als eine weitere Sendepriorität einer weiteren verfügbaren Nachricht eines weiteren, mit dem FlexRay-Datenbus verbundenen Sende/Empfangsknotens für den selben zugeordneten Zeitabschnitt. Dabei ist die Abfolge von Zeitabschnitten eine Abfolge von statischen Zeitschlitzen eines statischen Segments eines Kommunikationszyklus des Flex-Ray-Datenbusses, wobei der zugeordnete Zeitabschnitt ein zugeordneter statischer Zeitschlitz der Abfolge von statischen Zeitschlitzen ist.

Weitere Ausführungsbeispiele der vorliegenden Erfindung schaffen ein Verfahren zum Betreiben eines Sende/Empfangsknotens, der eine Schnittstelle zum Herstellen einer Verbindung mit einem LIN-Datenbus aufweist. In einem ersten Schritt wird das Auftreten einer ersten Bedingung und einer zweiten Bedingung für einen zugeordneten Zeitabschnitt einer Abfolge von Zeitabschnitten erfasst. In einem zweiten Schritt wird ein Rahmen einer verfügbaren Nachricht dem Übertragungsmedium während des zugeordneten Zeitabschnitts über die Schnittstelle bereitgestellt, falls die erste und die zweite Bedingung für den zugeordneten Zeitabschnitt erfüllt sind, wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der Nachricht zugeordnete Sendepriorität für den zugeordneten Zeitabschnitt höher ist als eine weitere Sendepriorität einer weiteren verfügbaren Nachricht eines weiteren, mit dem LIN-Datenbus verbundenen Sende/Empfangsknotens für den selben zugeordneten Zeitabschnitt. Dabei ist die Abfolge von Zeitabschnitten eine Abfolge von Zeitschlitzen des LIN-Datenbusses, wobei der zugeordnete Zeitabschnitt ein zugeordneter Zeitschlitz der Abfolge von Zeitschlitzen ist.

Ausführungsbeispiele der vorliegenden Erfindung nutzen die in dem allgemeinen Abschnitt beschriebene Erweiterung des Suchraums zum Auffinden optimaler Zeitpläne (engl.: schedules) bei gegebenen Realzeitanforderungen für Zeitschlitz-basierte Datenbusse mit Mehrfachzugriff. Hierzu wird das Konzept der Übertragungsmodi (engl.: modes), wie z. B. *Notfall, Sicherheit, Regulär* und *Datenstrom,* als Grundlage für die Datenübertragung eingeführt. Diese Modi werden nach Präferenz geordnet und definieren damit die Prioritäten von Nachrichtenströmen, die diesen Modi zugeordnet sind. Ausführungsbeispiele der vorliegenden Erfindung zeigen technische Umsetzungen dieser Konzepte für FlexRay und LIN-Busse.

Ferner verbessern Ausführungsbeispiele der vorliegenden Erfindung die Auslastbarkeit von FlexRay und LIN-Bussen unter Beibehaltung der jeweiligen gewährten Garantien im Echtzeitbereich. Die mangelnde Auslastbarkeit dieser Datenbusse ist derzeit vor allem im Automotive-Bereich ein Problem und führt dazu, dass immer mehr Bussysteme unterschiedlicher Typen installiert werden müssen, um den anfallenden Datenverkehr mit den geforderten Echtzeitgarantien zu bewältigen. Die Erfindung reduziert die erforderliche Anzahl und Typenvielfalt der Datenbusse. Dies spart zum einen Gewicht, zum anderen Kosten in einer Industriebranche mit sehr hohen Stückzahlen und Stückkosten.

Des Weiteren schaffen Ausführungsbeispiele der vorliegenden Erfindung eine deutlich verbesserte Auslastbarkeit von FlexRay- und LIN-Bussen im Echtzeitbereich. Diese Maßnahmen umfassen die Verwendung von Übertragungsmodi, die modusbasierte Zeitplanung und die schnelle Modussignalisierung. Im Ergebnis liefert diese Kombination eine echtzeitfähige Lösung für beide Kommunikationstechnologien. Sie beruht im Kern auf einem statischen Zeitplan (engl.: schedule) mit Zeitschlitzweise kontrolliertem Wettbewerb sowie auf einer sehr schnellen dynamischen Signalisierung des aktuellen Modus mit der höchsten Präferenz, angepasst an die Erfordernisse und Eigenschaften von FlexRay bzw. LIN.

Ausführungsbeispiele der vorliegenden Erfindung schaffen unmittelbare Vorteile im Automotive-Bereich. Über die Jahrzehnte hat die Kommunikation in Fahrzeugen stark zugenommen. Der 1946 erfundene Kabelbaum bildete bis in die 80er und 90er Jahre dafür die technische Grundlage. Aufgrund des zunehmenden Gewichts und der geringen Flexibilität wurde diese Lösung ab 1991 durch digitale Datenbussysteme abgelöst. Mittlerweile sind in einem Automobil bis zu 8 Datenbusse unterschiedlicher Typen installiert, eine weitere Zunahme wird allgemein erwartet. Die Erfindung trägt dazu bei, die Anzahl der erforderlichen Datenbusse im Echtzeitbereich zu reduzieren, in dem sie zeigt, wie FlexRay- und LIN-Busse unter Verwendung der modusbasierten Zeitplanung und der schnellen Modussignalisierung deutlich besser ausgelastet und einem breiteren Anwendungsbereich zugänglich gemacht werden können. Beide von der Erfindung abgedeckten Bussysteme werden bereits im Automotive-Bereich erfolgreich eingesetzt und decken unterschiedliche Anforderungen ab. Der FlexRay-Bus adressiert primär sicherheitskritische Anwendungsbereiche mit hohen Datenraten, während der kostengünstige LIN-Bus für die Realisierung von Sensor-Aktor-Anwendungen mit niedrigen Datenraten genutzt wird. Durch eine effizientere Nutzung und breitere Anwendungsbereiche genügen zwei Bustechnologien zur Abdeckung der wesentlichen Funktionalitäten und Anforderungen in technischer und ökonomischer Sicht. Zudem reduziert sich die Anzahl unterschiedlicher Netzkoppler (engl.: Gateways), ebenso wird deren Anzahl durch eine Reduktion der Gesamtanzahl von getrennten Bussen verringert. Aus wirtschaftlicher Sicht bedeutet das sowohl Gewichts- als auch Kostenersparnis in einem industriellen Bereich mit sehr hohen Stückzahlen.

Ein Vorteil der vorliegenden Erfindung ist, dass die Einführung von Übertragungsmodi (engl.: modes), wie z. B. *Notfall, Sicherheit, Regulär* und *Datenstrom,* einerseits Potential zur Verbesserung der Systemstrukturierung eröffnet und anderseits die Grundlage für die modusbasierte Zeitplanung bildet.

Ferner ist ein Vorteil der vorliegenden Erfindung, dass die modusbasierte Zeitplanung für FlexRay und LIN, wie bei den zurzeit im Automotive-Bereich eingesetzten ZeitplanungsVerfahren, vor Ausführung (engl.: offline) erfolgt, so dass die erforderliche Planbarkeit weiterhin gegeben ist und zur Laufzeit kein zusätzlicher Verwaltungsdaten (engl.: overhead) entsteht.

Ein weiterer Vorteil ist, dass die vorliegende Erfindung die Nutzung der modusbasierten Zeitplanung für FlexRay und LIN erlaubt und somit eine kontrollierte Mehrfachbelegung desselben Zeitschlitze ermöglicht. Dadurch werden die verfügbaren Zeitschlitze besser genutzt, was zu einer erhöhten Auslastbarkeit der Kommunikationsressourcen führt.

Darüber hinaus ist ein Vorteil der vorliegenden Erfindung, dass die kontrollierte Mehrfachbelegung von Zeitschlitzen die Echtzeitfähigkeit der zeitgetriggerten Kommunikation nicht beeinflusst, sofern nur die Zeitschlitz-Zuweisung mit der jeweils höchsten Priorität Echtzeitfähigkeit erfordert oder die in einem gegebenen Zeitschlitz verwendeten Übertragungsmodi orthogonal sind.

Ferner ermöglicht die vorliegende Erfindung die Umsetzung der schnellen Modussignalisierung für die Kommunikationstechnologien FlexRay und LIN. Die schnelle Modussignalisierung erlaubt die busweite, deterministische Signalisierung des aktuellen Modus mit der höchsten Priorität unmittelbar zu Beginn eines Zeitschlitzes und ist damit echtzeitfähig.

Darüber hinaus ist ein Vorteil der vorliegenden Erfindung, dass die Umsetzungen der schnellen Modussignalisierung auf zusätzliche Management-Nachrichten verzichten und weitere Optimierungen aufzeigen, die auf Anpassungen der jeweiligen Protokollstandards beruhen.

Ein Vorteil der vorliegenden Erfindung ist, dass die Unterstützung der schnellen Modussignalisierung in FlexRay bzw. LIN die Robustheit von FlexRay bzw. LIN in Bezug auf den Ausfall eines Knotens im Vergleich zu einer konventionellen Nutzung der jeweiligen Kommunikationstechnologie nicht negativ beeinflusst.

Ein weiterer Vorteil der vorliegenden Erfindung ist, dass die Kombination von modusbasierter Zeitplanung und schneller Modussignalisierung bei Beachtung der genannten Voraussetzungen zu einer deutlich höheren Auslastbarkeit von FlexRay bzw. LIN-Bussen führt, ohne Verlust der Echtzeitfähigkeit. Dadurch ist es je nach Anwendungsbereich möglich, die Anzahl erforderlicher Bussysteme zu reduzieren bzw. mit weniger Busvarianten auszukommen.

Darüber hinaus ist ein Vorteil der vorliegenden Erfindung, dass das Verfahren verträglich (engl. compliant) mit derzeit üblichen Zeitplanungsverfahren ist und daher Schritt für Schritt eingeführt werden kann. Ebenso zeigt die Erfindung, dass eine Umsetzung bereits mit der verfügbaren Hardware standardkonform möglich ist, wenn auch nicht unter Ausnutzung aller beschriebenen Optimierungsmöglichkeiten.

Gemäß einem Aspekt ist ein Sende/Empfangsknoten 100 mit einer Schnittstelle 102 zum Herstellen einer Verbindung mit einem FlexRay-Datenbus 300 ausgebildet, um bei einer Abfolge von Zeitabschnitten 108 das Auftreten einer ersten Bedingung und einer zweiten Bedingung zu erfassen und, falls die erste und die zweite Bedingung für einen zugeordneten Zeitabschnitt 110 erfüllt sind, um dem FlexRay-Datenbus 300 während des zugeordneten Zeitabschnitts 110 einen Rahmen einer verfügbaren Nachricht über die Schnittstelle 102 bereitzustellen, wobei die erste Bedingung gemäß einem Zeitplan den zugeordneten Zeitabschnitt 110 zum Bereitstellen des Rahmens der verfügbaren Nachricht angibt, und wobei die zweite Bedingung angibt, dass die der Nachricht zugeordnete Sendepriorität für den zugeordneten Zeitabschnitt 110 höher ist als eine weitere Sendepriorität einer weiteren verfügbaren Nachricht eines weiteren, mit dem FlexRay-Datenbus 300 verbundenen Sende/Empfangsknotens 100 für denselben zugeordneten Zeitabschnitt 110; wobei die Abfolge von Zeitabschnitten 108 eine Abfolge von Kommunikationszyklen des FlexRay-Datenbusses 300 ist, wobei der zugeordnete Zeitabschnitt 110 ein zugeordneter Kommunikationszyklus 310 der Abfolge von Kommunikationszyklen ist, wobei der zugeordnete Kommunikationszyklus 310 ein dynamisches Segment 314 mit dynamischen Zeitschlitzen $320_d$ aufweist, wobei einem dynamischen Zeitschlitz die Sendepriorität der verfügbaren Nachricht und einem weiteren dynamischen Zeitschlitz die Sendepriorität der weiteren verfügbaren Nachricht zugeordnet ist, wobei der Sende/Empfangsknoten 100 ausgebildet ist, um den Rahmen der verfügbaren Nachricht in dem dynamischen Zeitschlitz zu übertragen, dem die Sendepriorität der verfügbaren Nachricht zugeordnet ist.

Die die erste und zweite Bedingung können hierbei so vorgegeben sein, dass das Auftreten der ersten und zweiten Bedingung derart in Form einer Matrix darstellbar ist, dass eine erste Dimension der Matrix die Zeitabschnitte des Zeitplans zum Bereitstellen der Rahmen aufweist und eine zweite Dimension der Matrix die vorgegebenen Sendeprioritäten der Nachrichten aufweist, wobei in der ersten Dimension der Matrix Nachrichten gleicher Sendepriorität vorhanden sind, und wobei die in der zweiten Dimension der Matrix auftretenden vorgegebenen Sendeprioritäten der Nachrichten unterschiedlich sind.

Die dynamischen Zeitschlitze $320_d$ können hierbei entsprechend ihrem zeitlichen Auftreten in dem dynamischen Segment 312 fortlaufend nummeriert sein, wobei zumindest zwei dynamischen Zeitschlitzen Sendeprioritäten derart zugeordnet sind, dass einem dynamischen Zeitschlitz, der eine geringere Nummerierung aufweist, eine höhere Sendepriorität zugeordnet ist, als einem dynamischen Zeitschlitz, der eine höhere Nummerierung aufweist, wobei die zumindest zwei dynamischen Zeitschlitze den dynamischen Zeitschlitz, dem die Sendepriorität der verfügbaren Nachricht zugeordnet ist, und den weiteren dynamischen Zeitschlitz, dem die Sendepriorität der weiteren verfügbaren Nachricht zugeordnet ist, umfassen.

Hierbei können die zumindest zwei dynamischen Zeitschlitze bezogen auf ihr zeitliches Auftreten an einem Anfang des dynamischen Segments 314 angeordnet sein. Außerdem kann die zweite Bedingung erfüllt sein, wenn in dem dynamischen Segment 314 vor dem Auftreten des dynamischen Zeitschlitzes, dem die Sendepriorität der verfügbaren Nachricht zugeordnet ist, der Rahmen der weiteren verfügbaren Nachricht nicht übertragen wurde. Ferner kann das dynamische Segment 314 eine vorgegebene Anzahl von Minizeitschlitzen 322 aufweisen, die entsprechend ihrem Auftreten in dem dynamischen Segment 314 fortlaufend nummeriert sind, wobei die dynamischen Zeitschlitze $320_d$ des dynamischen Segments 314 jeweils zumindest einen Minizeitschlitz umfassen, wobei der Sende/Empfangsknoten 100 ausgebildet ist, um, falls der dynamische Zeitschlitz, dem die Sendepriorität der verfügbaren Nachricht zugeordnet ist, zeitlich nach einem letztmöglichen Minizeitschlitz, der den letztmöglichen Beginn der Übertragung des Rahmens der verfügbaren Nachricht angibt, auftritt, den Rahmen der verfügbaren Nachricht zu verwerfen oder zu einem späteren zugeordneten Kommunikationszyklus dem FlexRay-Datenbus 300 bereit zu stellen.

Ferner kann hierbei die zweite Bedingung erfüllt sein, wenn in dem dynamischen Segment 314 vor dem Auftreten des dynamischen Zeitschlitzes, dem die Sendepriorität der verfügbaren Nachricht zugeordnet ist, der Rahmen der weiteren verfügbaren Nachricht übertragen wurde und der dynamische Zeitschlitz, dem die Sendepriorität der verfügbaren Nachricht zugeordnet ist, zeitgleich mit dem letztmöglichen Minizeitschlitz, der den letztmöglichen Beginn der Übertragung des Rahmens der verfügbaren Nachricht angibt, auftritt oder vor dem letztmöglichen Minizeitschlitz auftritt. Außerdem kann hierbei der Sende/Empfangsknoten 100 ausgebildet sein, um, falls der Rahmen der verfügbaren Nachricht eine vorgegebene Länge unterschreitet, den Rahmen der verfügbaren Nachricht vor der Übertagung mit Fülldaten aufzufüllen oder an den Rahmen der verfügbaren Nachricht Fülldaten anzuhängen, so dass eine Übertragung des Rahmens der verfügbaren Nachricht oder der Fülldaten erst nach dem Auftreten des letztmöglichen Minizeitschlitzes endet.

Gemäß einem weiteren Aspekt weist der Sende/Empfangsknoten 100 einen Kommunikationscontroller mit einem Sendepuffer zum Puffern des Rahmens der verfügbaren Nachricht und/oder einen Empfangspuffer zum Puffern des Rahmens der weiteren verfügbaren Nachricht auf. Hierbei kann der Sende/Empfangsknoten 100 ausgebildet sein, um in dem zugeordneten Kommunikationszyklus 310 durch setzen eines Flags des Sendepuffers das Erfüllen der ersten Bedingung zu signalisieren, und um, falls die zweite Bedingung während des zugeordneten Kommunikationszyklus 310 nicht erfüllt ist, das Flag vor dem Auftreten eines nachfolgenden Kommunikationszyklus zu löschen. Außerdem kann hierbei der Sendepuffer dem zugeordneten Kommunikationszyklus 310 und der Sendepriorität der verfügbaren Nachricht zugeordnet sein.

Gemäß einem weiteren Aspekt ist ein Sende/Empfangsknoten 100 mit einer Schnittstelle 102 zum Herstellen einer Verbindung mit einem FlexRay-Datenbus 300 ausgebildet, um bei einer Abfolge von Zeitabschnitten 108 das Auftreten einer ersten Bedingung und einer zweiten Bedingung zu erfassen und, falls die erste und die zweite Bedingung für einen zugeordneten Zeitabschnitt 110 erfüllt sind, um dem FlexRay-Datenbus 300 während des zugeordneten Zeitabschnitts 110 einen Rahmen einer verfügbaren Nachricht über die Schnittstelle 102 bereit zu stellen, wobei die erste Bedingung gemäß einem Zeitplan den zugeordneten Zeitabschnitt 110 zum Bereitstellen des Rahmens der verfügbaren Nachricht angibt, und wobei die zweite Bedingung angibt, dass die der Nachricht zugeordnete Sendepriorität für den zugeordneten Zeitabschnitt 110 höher ist als eine weitere Sendepriorität einer weiteren verfügbaren Nachricht eines weiteren, mit dem FlexRay-Datenbus 300 verbundenen Sende/Empfangsknotens 100 für denselben zugeordneten Zeitabschnitt 110; wobei die Abfolge von Zeitabschnitten 108 eine Abfolge von dynamischen Zeitschlitzen 340 eines dynamischen Segments 314 eines Kommunikationszyklus 310 des FlexRay-Datenbusses 300 ist, wobei jeder dynamische Zeitschlitz $320_d$ der Abfolge von dynamischen Zeitschlitzen 340 eine vorgegebene Anzahl von Minizeitschlitzen 322 aufweist, so dass jeder dynamische Zeitschlitz $320_d$ der Abfolge von dynamischen Zeitschlitzen 340 in einem vorgegebenen Minizeitschlitz beginnt, wobei der zugeordnete Zeitabschnitt 110 ein zugeordneter dynamischer Zeitschlitz $320_d$ der Abfolge von dynamischen Zeitschlitzen 340 ist.

Die erste und zweite Bedingung können hierbei so vorgegeben sein, dass das Auftreten der ersten und zweiten Bedingung derart in Form einer Matrix darstellbar ist, dass eine erste Dimension der Matrix die Zeitabschnitte des Zeitplans zum Bereitstellen der Rahmen aufweist und eine zweite Dimension der Matrix die vorgegebenen Sendeprioritäten der Nachrichten aufweist, wobei in der ersten Dimension der Matrix Nachrichten gleicher Sendepriorität vorhanden sind, und wobei die in der zweiten Dimension der Matrix auftretenden vorgegebenen Sendeprioritäten der Nachrichten unterschiedlich sind. Außerdem kann hierbei nach zumindest einem dynamischen Zeitschlitz $320_d$ der Abfolge von dynamischen Zeitschlitzen 340 ein zusätzlicher dynamischer Zeitschlitz mit Fülldaten angehängt sein, so dass ein nachfolgender dynamischer Zeitschlitz der Abfolge von dynamischen Zeitschlitzen 340 zu dem vorgegebenen Minizeitschlitz beginnt. Ferner können hierbei die Minizeitschlitze 322 des zugeordneten dynamischen Zeitschlitzes $320_d$ entsprechend ihres zeitlichen Auftretens in dem zugeordneten dynamischen Zeitschlitz 320d fortlaufend nummeriert sein, wobei zumindest zwei Minizeitschlitzen Sendeprioritäten derart zugeordnet werden, dass einem Minizeitschlitz, der eine geringere Nummerierung aufweist, eine höhere Sendepriorität zugeordnet wird, als einem Minizeitschlitz, der eine höhere Nummerierung aufweist, wobei einem der zumindest zwei Minizeitschlitze die Sendepriorität der verfügbaren Nachricht und einem weiteren der zumindest zwei Minizeitschlitze die Sendepriorität der weiteren verfügbaren Nachricht zugeordnet wird.

Gemäß einem weiteren Aspekt ist ein Sende/Empfangsknoten 100 mit einer Schnittstelle 102 zum Herstellen einer Verbindung mit einem FlexRay-Datenbus 300 ausgebildet, um bei einer Abfolge von Zeitabschnitten 108 das Auftreten einer ersten Bedingung und einer zweiten Bedingung zu erfassen und, falls die erste und die zweite Bedingung für einen zugeordneten Zeitabschnitt 110 erfüllt sind, um dem FlexRay-Datenbus 300 während des zugeordneten Zeitabschnitts 110 einen Rahmen einer verfügbaren Nachricht über die Schnittstelle 102 bereit zu stellen, wobei die erste Bedingung gemäß einem Zeitplan den zugeordneten Zeitabschnitt 110 zum Bereitstellen des Rahmens der verfügbaren Nachricht angibt, und wobei die zweite Bedingung angibt, dass die der Nachricht zugeordnete Sendepriorität für den zugeordneten Zeitabschnitt 110 höher ist als eine weitere Sendepriorität einer weiteren verfügbaren Nachricht eines weiteren, mit dem FlexRay-Datenbus 300 verbundenen Sende/Empfangsknotens 100 für denselben zugeordneten Zeitabschnitt 110; wobei die Abfolge von Zeitabschnitten 108 eine Abfolge von statischen Zeitschlitzen 342 eines statischen Segments 312 eines Kommunikationszyklus 310 des FlexRay-Datenbusses 300 ist, wobei der zugeordnete Zeitabschnitt 110 ein zugeordneter statischer Zeitschlitz 320k der Abfolge von statischen Zeitschlitzen 342 ist.

Die erste und zweite Bedingung können hierbei so vorgegeben sein, dass das Auftreten der ersten und zweiten Bedingung derart in Form einer Matrix darstellbar ist, dass eine erste Dimension der Matrix die Zeitabschnitte des Zeitplans zum Bereitstellen der Rahmen aufweist und eine zweite Dimension der Matrix die vorgegebenen Sendeprioritäten der Nachrichten aufweist, wobei in der ersten Dimension der Matrix Nachrichten gleicher Sendepriorität vorhanden sind, und wobei die in der zweiten Dimension der Matrix auftretenden vorgegebenen Sendeprioritäten der Nachrichten unterschiedlich sind. Ferner kann jeder statische Zeitschlitz $320_k$ der Abfolge von statischen Zeitschlitzen 342 eine vorgegebene Anzahl von Minizeitschlitzen 322 aufweisen.

Außerdem können hierbei die Minizeitschlitze 322 des zugeordneten statischen Zeitschlitzes $320_k$ entsprechend ihres zeitlichen Auftretens fortlaufend nummeriert sein, wobei zumindest zwei Minizeitschlitzen Sendeprioritäten derart zugeordnet werden, dass einem Minizeitschlitz, der eine geringere Nummerierung aufweist, eine höhere Sendepriorität zugeordnet wird, als einem Minizeitschlitz, der eine höhere Nummerierung aufweist, wobei einem der zumindest zwei Minizeitschlitze die Sendepriorität der verfügbaren Nachricht und einem weiteren der zumindest zwei Minizeitschlitze die Sendepriorität der weiteren verfügbaren Nachricht zugeordnet wird.

Hierbei kann die zweite Bedingung erfüllt sein, wenn in dem statischen Zeitschlitz $320_k$ vor dem Auftreten des Minizeitschlitzes, dem die Sendepriorität der verfügbaren Nachricht zugeordnet ist, der Rahmen der weiteren verfügbaren Nachricht nicht übertragen wurde. Hierbei kann der Sende/Empfangsknoten 100 ausgebildet sein, um, falls der Minizeitschlitz, dem die Sendepriorität der verfügbaren Nachricht zugeordnet ist, zeitlich nach einem letztmöglichen Minizeitschlitz, der den letztmöglichen Beginn der Übertragung des Rahmens der verfügbaren Nachricht angibt, auftritt, den Rahmen der verfügbaren Nachricht zu verwerfen oder zu einem späteren zugeordneten statistischen Zeitschlitz dem FlexRay-Datenbus 300 bereitzustellen.

Außerdem kann hierbei die zweite Bedingung ferner erfüllt sein, wenn in dem statischen Zeitschlitz vor dem Auftreten des Minizeitschlitzes, dem die Sendepriorität der verfügbaren Nachricht zugeordnet ist, der Rahmen der weiteren verfügbaren Nachricht übertragen wurde und der Minizeitschlitz, dem die Sendepriorität der verfügbaren Nachricht zugeordnet ist, zeitgleich mit dem letztmöglichen Minizeitschlitz auftritt oder vor dem letztmöglichen Minizeitschlitz auftritt, und der Sende/Empfangsknoten 100 kann ausgebildet sein, um, falls der Rahmen der verfügbaren Nachricht eine vorgegebene Länge unterschreitet, den Rahmen der verfügbaren Nachricht vor der Übertagung mit Fülldaten aufzufüllen oder an den Rahmen der verfügbaren Nachricht Fülldaten anzuhängen, so dass eine Übertragung des Rahmens der verfügbaren Nachricht oder der Fülldaten erst nach dem Auftreten des letztmöglichen Minizeitschlitzes endet.

Gemäß einem weiteren Aspekt ist ein Sende/Empfangsknoten 100 mit einer Schnittstelle 102 zum Herstellen einer Verbindung mit einem LIN-Datenbus 400 ausgebildet, um bei einer Abfolge von Zeitabschnitten das Auftreten einer ersten Bedingung und einer zweiten Bedingung zu erfassen und, falls die erste und die zweite Bedingung für einen zugeordneten Zeitabschnitt erfüllt sind, um dem LIN-Datenbus 400 während des zugeordneten Zeitabschnitts einen Rahmen einer verfügbaren Nachricht über die Schnittstelle 102 bereit zu stellen, wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der Nachricht zugeordnete Sendepriorität für den zugeordneten Zeitabschnitt höher ist als eine weitere Sendepriorität einer weiteren verfügbaren Nachricht eines weiteren, mit dem LIN-Datenbus 400 verbundenen Sende/Empfangsknotens für denselben zugeordneten Zeitabschnitt; wobei die Abfolge von Zeitabschnitten 108 eine Abfolge von Zeitschlitzen 408 des LIN-Datenbusses 400 ist, wobei der zugeordnete Zeitabschnitt 110 ein zugeordneter Zeitschlitz 410 der Abfolge von Zeitschlitzen 400 ist.

Hierbei können die erste und zweite Bedingung so vorgegeben sein, dass das Auftreten der ersten und zweiten Bedingung derart in Form einer Matrix darstellbar ist, dass eine erste Dimension der Matrix die Zeitabschnitte des Zeitplans zum Bereitstellen der Rahmen aufweist und eine zweite Dimension der Matrix die vorgegebenen Sendeprioritäten der Nachrichten aufweist, wobei in der ersten Dimension der Matrix Nachrichten gleicher Sendepriorität vorhanden sind, und wobei die in der zweiten Dimension der Matrix auftretenden vorgegebenen Sendeprioritäten der Nachrichten unterschiedlich sind. Außerdem kann der Sende/Empfangsknoten 100 ausgebildet sein, um von einem Masterknoten des LIN-Datenbusses einen Rahmen mit einer Kennung, die den aktuellen Zeitschlitz der Abfolge von Zeitschlitzen 408 angibt, zu erhalten, wobei der Sende/Empfangsknoten 100 ausgebildet ist, um basierend auf der Kennung das Auftreten der ersten Bedingung zu erfassen. Ferner kann hierbei der Sende/Empfangsknoten 100 ausgebildet sein, um in einer Antwort-Phase des zugeordneten Zeitschlitzes 410 die Sendepriorität der verfügbaren Nachricht und, falls die zweite Bedingung erfüllt ist, den Rahmen der verfügbaren Nachricht dem LIN-Datenbus 400 über die Schnittstelle 102 bereit zu stellen.

Gemäß einem weiteren Aspekt weist ein Verfahren zum Betreiben eines Sende/Empfangsknotens, der eine Schnittstelle zum Herstellen einer Verbindung mit einem FlexRay-Datenbus aufweist, folgende Schritte auf: Erfassen des Auftretens einer ersten Bedingung und einer zweiten Bedingung für einen zugeordneten Zeitabschnitt einer Abfolge von Zeitabschnitten; und Bereitstellen eines Rahmens einer verfügbaren Nachricht dem Übertragungsmedium während des zugeordneten Zeitabschnitts über die Schnittstelle, falls die erste und die zweite Bedingung für den zugeordneten Zeitabschnitt erfüllt ist, wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der Nachricht zugeordnete Sendepriorität für den zugeordneten Zeitabschnitt höher ist als eine weitere Sendepriorität einer weiteren verfügbaren Nachricht eines weiteren, mit dem FlexRay-Datenbus verbundenen Sende/Empfangsknotens für den selben zugeordneten Zeitabschnitt; und wobei die Abfolge von Zeitabschnitten eine Abfolge von Kommunikationszyklen des FlexRay-Datenbusses ist, wobei der zugeordnete Zeitabschnitt ein zugeordneter Kommunikationszyklus der Abfolge von Kommunikationszyklen ist, wobei der zugeordnete Kommunikationszyklus ein dynamisches Segment mit dynamischen Zeitschlitzen aufweist, wobei einem dynamischen Zeitschlitz die Sendepriorität der verfügbaren Nachricht und einem weiteren dynamischen Zeitschlitz die Sendepriorität der weiteren verfügbaren Nachricht zugeordnet ist, wobei der Sende/Empfangsknoten ausgebildet ist, um den Rahmen der verfügbaren Nachricht in dem dynamischen Zeitschlitz zu übertragen, dem die Sendepriorität der verfügbaren Nachricht zugeordnet ist.

**EP 2 614 996 B1**

Gemäß einem weiteren Aspekt weist ein Verfahren zum Betreiben eines Sende/Empfangsknotens, der eine Schnittstelle zum Herstellen einer Verbindung mit einem FlexRay-Datenbus aufweist, folgende Schritte auf: Erfassen des Auftretens einer ersten Bedingung und einer zweiten Bedingung für einen zugeordneten Zeitabschnitt einer Abfolge von Zeitabschnitten; und Bereitstellen eines Rahmens einer verfügbaren Nachricht dem Übertragungsmedium während des zugeordneten Zeitabschnitts über die Schnittstelle, falls die erste und die zweite Bedingung für den zugeordneten Zeitabschnitt erfüllt ist, wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der Nachricht zugeordnete Sendepriorität für den zugeordneten Zeitabschnitt höher ist als eine weitere Sendepriorität einer weiteren verfügbaren Nachricht eines weiteren, mit dem FlexRay-Datenbus verbundenen Sende/Empfangsknotens für den selben zugeordneten Zeitabschnitt; und wobei die Abfolge von Zeitabschnitten eine Abfolge von dynamischen Zeitschlitzen eines dynamischen Segments eines Kommunikationszyklus des FlexRay-Datenbusses ist, wobei jeder dynamische Zeitschlitz der Abfolge von dynamischen Zeitschlitzen eine vorgegebene Anzahl von Minizeitschlitzen aufweist, so dass jeder dynamische Zeitschlitz der Abfolge von dynamischen Zeitschlitzen in einem vorgegebenen Minizeitschlitz beginnt, wobei der zugeordnete Zeitabschnitt ein zugeordneter dynamischer Zeitschlitz der Abfolge von dynamischen Zeitschlitzen ist.

Gemäß einem weiteren Aspekt weist ein Verfahren zum Betreiben eines Sende/Empfangsknotens, der eine Schnittstelle zum Herstellen einer Verbindung mit einem FlexRay-Datenbus aufweist, folgende Schritte auf: Erfassen des Auftretens einer ersten Bedingung und einer zweiten Bedingung für einen zugeordneten Zeitabschnitt einer Abfolge von Zeitabschnitten; und Bereitstellen eines Rahmens einer verfügbaren Nachricht dem Übertragungsmedium während des zugeordneten Zeitabschnitts über die Schnittstelle, falls die erste und die zweite Bedingung für den zugeordneten Zeitabschnitt erfüllt ist, wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der Nachricht zugeordnete Sendepriorität für den zugeordneten Zeitabschnitt höher ist als eine weitere Sendepriorität einer weiteren verfügbaren Nachricht eines weiteren, mit dem FlexRay-Datenbus verbundenen Sende/Empfangsknotens für den selben zugeordneten Zeitabschnitt; und wobei die Abfolge von Zeitabschnitten eine Abfolge von statischen Zeitschlitzen eines statischen Segments eines Kommunikationszyklus des FlexRay-Datenbusses ist, wobei der zugeordnete Zeitabschnitt ein zugeordneter statischer Zeitschlitz der Abfolge von statischen Zeitschlitzen ist.

Gemäß einem weiteren Aspekt weist ein Verfahren zum Betreiben eines Sende/Empfangsknotens, der eine Schnittstelle zum Herstellen einer Verbindung mit einem LIN-Datenbus aufweist, folgende Schritte auf: Erfassen des Auftretens einer ersten Bedingung und einer zweiten Bedingung für einen zugeordneten Zeitabschnitt einer Abfolge von Zeitabschnitten; und Bereitstellen eines Rahmens einer verfügbaren Nachricht dem Übertragungsmedium während des zugeordneten Zeitabschnitts über die Schnittstelle, falls die erste und die zweite Bedingung für den zugeordneten Zeitabschnitt erfüllt ist, wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der Nachricht zugeordnete Sendepriorität für den zugeordneten Zeitabschnitt höher ist als eine weitere Sendepriorität einer weiteren verfügbaren Nachricht eines weiteren, mit dem LIN-Datenbus verbundenen Sende/Empfangsknotens für den selben zugeordneten Zeitabschnitt; und wobei die Abfolge von Zeitabschnitten eine Abfolge von Zeitschlitzen des LIN-Datenbusses ist, wobei der zugeordnete Zeitabschnitt ein zugeordneter Zeitschlitz der Abfolge von Zeitschlitzen ist.

Obige Verfahren können durch ein Computerprogramm ausgeführt werden, wenn das Computerprogramm auf einem Computer oder einem Mikroprozessor abläuft.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterfeld, ein FPGA) dazu verwendet werden, manche oder alle Funktionalitäten der hierin beschriebenen Verfahren durchzuführen. Bei manchen Ausführungsbeispielen kann ein feldprogrammierbares Gatterfeld mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Übersicht der verwendeten Bezeichner

| Bezeichner | Bedeutung |
|---|---|
| $V = \{v_1, ..., v_n\}$ | Endliche Menge von Sende/Empfangsknoten |
| n | Anzahl der Sende/Empfangsknoten |
| $v_n$ | Sende/Empfangsknoten mit der Nummer n |
| $S^* = (S_1, S_2, ...)$ | Kontinuierliche Sequenz von Makrozeitabschnitten |
| $j$ | Index zur Identifikation eines Makrozeitabschnitts |
| $S_j$ | Makrozeitabschnitt mit dem Indexe $j$ |
| $S = (s_1, ..., s_z)$ | Makrozeitabschnitt als endliche Sequenz von Zeitabschnitten |
| z | Anzahl der Zeitabschnitte innerhalb eines Makrozeitabschnitts |
| $r$ | Index zur Identifikation eines Zeitabschnittes in der Sequenz der Zeitabschnitte |
| $s_r$ | Zeitabschnitt mit dem Index $r$ |

(fortgesetzt)

| Bezeichner | Bedeutung |
|---|---|
| $s_{j,r}$ | Zeitabschnitt $s_r$ im Makrozeitabschnitt $S_j$ |
| $S$ | Bezeichner für einen Zeitabschnitt |
| $M = \{m_1, ..., m_l\}$ | Nicht-leere, endliche Menge der Modi |
| $l$ | Anzahl der Modi |
| $g$ | Index zur Identifikation eines Modus in der Menge der Modi |
| $m_g$ | Modus mit dem Index $g$ |
| $m$ | Bezeichner für einen Modus aus der Menge der Modi $M$ |
| $F$ | Menge von Rahmen verfügbarer Nachrichten |
| $Fm$ | Menge aller Rahmen verfügbarer Nachrichten eines Modus $m$ |
| $f$ | Bezeichner für einen Rahmen aus $F$ |
| $f_{x,y}$ | Eingeplanter Rahmen des Knoten mit dem Index $x$. Index $y$ ist eine fortlaufende Nummerierung. |
| $k$ | Index zur Identifikation der Rahmen oder Schlitze des statischen Segments (FlexRay) |
| $i$ | Nummer des letzten statischen Zeitschlitzes (FlexRay) |
| $i + 1$ | Nummer des ersten dynamischen Zeitschlitzes (FlexRay) |
| $i + w$ | Nummer des letzten dynamischen Zeitschlitzes. Der Wert von $w$ hängt von den Anforderungen zur Laufzeit und dem jeweiligen Kommunikationszyklus ab (FlexRay) |
| $d$ | Index zur Identifikation der Rahmen oder dynamischen Zeitschlitze des dynamischen Segments (FlexRay) |
| $q$ | Anzahl der modusbasierten Zeitschlitze pro modusbasiertem Makrozeitschlitz (FlexRay) |
| $u$ | Bezeichner für einen modusbasierten Zeitschlitz (FlexRay) |
| $t \in \{0,...,63\}$ | Nummer eines FlexRay-Kommunikationszyklus |
| $c$ | Identifier eines Rahmens im dynamischem Segment (FlexRay) |

## Patentansprüche

1. Sende/Empfangsknoten (100) mit einer Schnittstelle (102) zum Herstellen einer Verbindung mit einem FlexRay-Datenbus (300) oder einem LIN-Datenbus (400), wobei der Sende/Empfangsknoten (100) ausgebildet ist, um bei einer Abfolge von Zeitabschnitten (108) das Auftreten einer ersten Bedingung und einer zweiten Bedingung zu erfassen und, falls die erste und die zweite Bedingung für einen einer verfügbaren Nachricht zugeordneten Zeitabschnitt (110) erfüllt sind, um dem FlexRay-Datenbus (300) oder dem LIN-Datenbus (400) während des zugeordneten Zeitabschnitts (110) einen Rahmen der verfügbaren Nachricht über die Schnittstelle (102) bereit zu stellen, wobei die erste Bedingung gemäß einem Zeitplan den zugeordneten Zeitabschnitt (110) zum Bereitstellen des Rahmens der verfügbaren Nachricht angibt, und wobei die zweite Bedingung angibt, dass die der Nachricht zugeordnete Sendepriorität für den zugeordneten Zeitabschnitt (110) die höchste Sendepriorität unter den Sendeprioritäten der verfügbaren Nachrichten der mit dem FlexRay-Datenbus (300) oder dem LIN-Datenbus (400) verbundenen Sende/Empfangsknoten (100) für denselben zugeordneten Zeitabschnitt (110) ist, wobei pro Zeitabschnitt (110) höchstens eine Nachricht pro Sendepriorität eingeplant wird;
wobei die erste und zweite Bedingung über einen Zeitplan vorgegeben sind, der vor Ausführung ermittelt wird;
wobei der Zeitplan ein modusbasierter Zeitplan ist, der für jeden Zeitabschnitt eine Anzahl potentiell bereit zu stellender Nachrichten bestimmt, wobei pro Zeitabschnitt höchstens eine Nachricht pro Ausführungsmodus eingeplant wird, so dass jeder Zeitabschnitt einen begrenzten Wettbewerb aufweist, der nach Prioritäten geordnet ist;
wobei Ausführungsmodi nach Präferenzen geordnet sind und die Sendeprioritäten von Nachrichten definieren, die diesen Ausführungsmodi zugeordnet sind; und
wobei ein Zeitabschnitt mehreren Sende/Empfangsknoten für unterschiedliche Ausführungsmodi zugeordnet wird, wobei dieser Zeitabschnitt bei jedem Auftreten nur einmal pro Ausführungsmodus zugeordnet ist.

2. Sende/Empfangsknoten (100) nach Anspruch 1 zum Herstellen einer Verbindung mit dem FlexRay-Datenbus (300), wobei die Abfolge von Zeitabschnitten (108) eine Abfolge von Kommunikationszyklen des FlexRay-Datenbusses (300) ist, wobei der zugeordnete Zeitabschnitt (110) ein zugeordneter Kommunikationszyklus (310) der Abfolge von Kommunikationszyklen ist, wobei der zugeordnete Kommunikationszyklus (310) ein dynamisches Segment (314) mit dynamischen Zeitschlitzen ($320_d$) aufweist, wobei einem dynamischen Zeitschlitz die Sendepriorität der verfügbaren Nachricht und einem weiteren dynamischen Zeitschlitz die Sendepriorität einer weiteren verfügbaren Nachricht zugeordnet ist, wobei der Sende/Empfangsknoten (100) ausgebildet ist, um den Rahmen der verfügbaren Nachricht in dem dynamischen Zeitschlitz zu übertragen, dem die Sendepriorität der verfügbaren Nachricht zugeordnet ist.

3. Sende/Empfangsknoten (100) nach Anspruch 2, wobei die dynamischen Zeitschlitze ($320_d$) entsprechend ihrem zeitlichen Auftreten in dem dynamischen Segment (312) fortlaufend nummeriert sind, wobei zumindest zwei dynamischen Zeitschlitzen Sendeprioritäten derart zugeordnet sind, dass einem dynamischen Zeitschlitz, der eine geringere Nummerierung aufweist, eine höhere Sendepriorität zugeordnet ist, als einem dynamischen Zeitschlitz, der eine höhere Nummerierung aufweist, wobei die zumindest zwei dynamischen Zeitschlitze den dynamischen Zeitschlitz, dem die Sendepriorität der verfügbaren Nachricht zugeordnet ist, und den weiteren dynamischen Zeitschlitz, dem die Sendepriorität der weiteren verfügbaren Nachricht zugeordnet ist, umfassen.

4. Sende/Empfangsknoten (100) nach Anspruch 3, wobei die zweite Bedingung erfüllt ist, wenn in dem dynamischen Segment (314) vor dem Auftreten des dynamischen Zeitschlitzes, dem die Sendepriorität der verfügbaren Nachricht zugeordnet ist, der Rahmen der weiteren verfügbaren Nachricht nicht übertragen wurde.

5. Sende/Empfangsknoten (100) nach einem der Ansprüche 3 oder 4, wobei das dynamische Segment (314) eine vorgegebene Anzahl von Minizeitschlitzen (322) aufweist, die entsprechend ihrem Auftreten in dem dynamischen Segment (314) fortlaufend nummeriert sind, wobei die dynamischen Zeitschlitze ($320_d$) des dynamischen Segments (314) jeweils zumindest einen Minizeitschlitz umfassen, wobei der Sende/Empfangsknoten (100) ausgebildet ist, um, falls der dynamische Zeitschlitz, dem die Sendepriorität der verfügbaren Nachricht zugeordnet ist, zeitlich nach einem letztmöglichen Minizeitschlitz, der den letztmöglichen Beginn der Übertragung des Rahmens der verfügbaren Nachricht angibt, auftritt, den Rahmen der verfügbaren Nachricht zu verwerfen oder zu einem späteren zugeordneten Kommunikationszyklus dem FlexRay-Datenbus (300) bereit zu stellen.

6. Sende/Empfangsknoten (100) nach Anspruch 5, wobei die zweite Bedingung ferner erfüllt ist, wenn in dem dynamischen Segment (314) vor dem Auftreten des dynamischen Zeitschlitzes, dem die Sendepriorität der verfügbaren Nachricht zugeordnet ist, der Rahmen der weiteren verfügbaren Nachricht übertragen wurde und der dynamische Zeitschlitz, dem die Sendepriorität der verfügbaren Nachricht zugeordnet ist, zeitgleich mit dem letztmöglichen Minizeitschlitz, der den letztmöglichen Beginn der Übertragung des Rahmens der verfügbaren Nachricht angibt, auftritt oder vor dem letztmöglichen Minizeitschlitz auftritt.

7. Sende/Empfangsknoten (100) nach Anspruch 1 zum Herstellen einer Verbindung mit dem FlexRay-Datenbus (300), wobei die Abfolge von Zeitabschnitten (108) eine Abfolge von dynamischen Zeitschlitzen (340) eines dynamischen Segments (314) eines Kommunikationszyklus (310) des FlexRay-Datenbusses (300) ist, wobei jeder dynamische Zeitschlitz ($320_d$) der Abfolge von dynamischen Zeitschlitzen (340) eine vorgegebene Anzahl von Minizeitschlitzen (322) aufweist, so dass jeder dynamische Zeitschlitz ($320_d$) der Abfolge von dynamischen Zeitschlitzen (340) in einem vorgegebenen Minizeitschlitz beginnt, wobei der zugeordnete Zeitabschnitt (110) ein zugeordneter dynamischer Zeitschlitz ($320_d$) der Abfolge von dynamischen Zeitschlitzen (340) ist.

8. Sende/Empfangsknoten (100) nach Anspruch 7, wobei nach zumindest einem dynamischen Zeitschlitz ($320_d$) der Abfolge von dynamischen Zeitschlitzen (340) ein zusätzlicher dynamischer Zeitschlitz mit Fülldaten angehängt ist, so dass ein nachfolgender dynamischer Zeitschlitz der Abfolge von dynamischen Zeitschlitzen (340) zu dem vorgegebenen Minizeitschlitz beginnt.

9. Sende/Empfangsknoten (100) nach Anspruch 7 oder 8, wobei die Minizeitschlitze (322) des zugeordneten dynamischen Zeitschlitzes ($320_d$) entsprechend ihres zeitlichen Auftretens in dem zugeordneten dynamischen Zeitschlitz ($320_d$) fortlaufend nummeriert sind, wobei zumindest zwei Minizeitschlitzen Sendeprioritäten derart zugeordnet werden, dass einem Minizeitschlitz, der eine geringere Nummerierung aufweist, eine höhere Sendepriorität zugeordnet wird, als einem Minizeitschlitz, der eine höhere Nummerierung aufweist, wobei einem der zumindest zwei Minizeitschlitze die Sendepriorität der verfügbaren Nachricht und einem weiteren der zumindest zwei Minizeitschlitze die Sendepriorität der weiteren verfügbaren Nachricht zugeordnet wird.

**10.** Sende/Empfangsknoten (100) nach Anspruch 1 zum Herstellen einer Verbindung mit dem FlexRay-Datenbus (300), wobei die Abfolge von Zeitabschnitten (108) eine Abfolge von statischen Zeitschlitzen (342) eines statischen Segments (312) eines Kommunikationszyklus (310) des FlexRay-Datenbusses (300) ist, wobei der zugeordnete Zeitabschnitt (110) ein zugeordneter statischer Zeitschlitz ($320_k$) der Abfolge von statischen Zeitschlitzen (342) ist.

**11.** Sende/Empfangsknoten (100) nach Anspruch 10, wobei jeder statische Zeitschlitz ($320_k$) der Abfolge von statischen Zeitschlitzen (342) eine vorgegebene Anzahl von Minizeitschlitzen (322) aufweist; und
wobei die Minizeitschlitze (322) des zugeordneten statischen Zeitschlitzes ($320_k$) entsprechend ihres zeitlichen Auftretens fortlaufend nummeriert sind, wobei zumindest zwei Minizeitschlitzen Sendeprioritäten derart zugeordnet werden, dass einem Minizeitschlitz, der eine geringere Nummerierung aufweist, eine höhere Sendepriorität zugeordnet wird, als einem Minizeitschlitz, der eine höhere Nummerierung aufweist, wobei einem der zumindest zwei Minizeitschlitze die Sendepriorität der verfügbaren Nachricht und einem weiteren der zumindest zwei Minizeitschlitze die Sendepriorität der weiteren verfügbaren Nachricht zugeordnet wird.

**12.** Sende/Empfangsknoten (100) nach Anspruch 11, wobei die zweite Bedingung erfüllt ist, wenn in dem statischen Zeitschlitz ($320_k$) vor dem Auftreten des Minizeitschlitzes, dem die Sendepriorität der verfügbaren Nachricht zugeordnet ist, der Rahmen der weiteren verfügbaren Nachricht nicht übertragen wurde.

**13.** Sende/Empfangsknoten (100) nach Anspruch 12, wobei der Sende/Empfangsknoten (100) ausgebildet ist, um, falls der Minizeitschlitz, dem die Sendepriorität der verfügbaren Nachricht zugeordnet ist, zeitlich nach einem letztmöglichen Minizeitschlitz, der den letztmöglichen Beginn der Übertragung des Rahmens der verfügbaren Nachricht angibt, auftritt, den Rahmen der verfügbaren Nachricht zu verwerfen oder zu einem späteren zugeordneten statischen Zeitschlitz dem FlexRay-Datenbus (300) bereit zu stellen; und
wobei die zweite Bedingung ferner erfüllt ist, wenn in dem statischen Zeitschlitz vor dem Auftreten des Minizeitschlitzes, dem die Sendepriorität der verfügbaren Nachricht zugeordnet ist, der Rahmen der weiteren verfügbaren Nachricht übertragen wurde und der Minizeitschlitz, dem die Sendepriorität der verfügbaren Nachricht zugeordnet ist, zeitgleich mit dem letztmöglichen Minizeitschlitz auftritt oder vor dem letztmöglichen Minizeitschlitz auftritt.

**14.** Sende/Empfangsknoten (100) nach Anspruch 1 zum Herstellen einer Verbindung mit dem LIN-Datenbus (400), wobei die Abfolge von Zeitabschnitten (108) eine Abfolge von Zeitschlitzen (408) des LIN-Datenbusses (400) ist, wobei der zugeordnete Zeitabschnitt (110) ein zugeordneter Zeitschlitz (410) der Abfolge von Zeitschlitzen (408) ist.

**15.** Sende/Empfangsknoten (100) nach Anspruch 14, wobei der Sende/Empfangsknoten (100) ausgebildet ist, um von einem Masterknoten des LIN-Datenbusses einen Rahmen mit einer Kennung, die den aktuellen Zeitschlitz der Abfolge von Zeitschlitzen (408) angibt, zu erhalten, wobei der Sende/Empfangsknoten (100) ausgebildet ist, um basierend auf der Kennung das Auftreten der ersten Bedingung zu erfassen.

**16.** Sende/Empfangsknoten (100) nach Anspruch 14 oder 15, wobei der Sende/Empfangsknoten (100) ausgebildet ist, um in einer Antwort-Phase des zugeordneten Zeitschlitzes (410) die Sendepriorität der verfügbaren Nachricht und, falls die zweite Bedingung erfüllt ist, den Rahmen der verfügbaren Nachricht dem LIN-Datenbus (400) über die Schnittstelle (102) bereit zu stellen.

**17.** Verfahren zum Betreiben eines Sende/Empfangsknotens (100), der eine Schnittstelle (102) zum Herstellen einer Verbindung mit einem FlexRay-Datenbus (300) oder einem LIN-Datenbus (400) aufweist, mit folgenden Merkmalen:

Erfassen des Auftretens einer ersten Bedingung und einer zweiten Bedingung für einen einer verfügbaren Nachricht zugeordneten Zeitabschnitt (110) einer Abfolge von Zeitabschnitten (108); und
Bereitstellen eines Rahmens einer verfügbaren Nachricht dem FlexRay-Datenbus (300) oder dem LIN-Datenbus (400) während des zugeordneten Zeitabschnitts (110) über die Schnittstelle (102), falls die erste und die zweite Bedingung für den zugeordneten Zeitabschnitt (110) erfüllt sind;
wobei die erste Bedingung gemäß einem Zeitplan den zugeordneten Zeitabschnitt (110) zum Bereitstellen des Rahmens der verfügbaren Nachricht angibt, und wobei die zweite Bedingung angibt, dass die der Nachricht zugeordnete Sendepriorität für den zugeordneten Zeitabschnitt (110) die höchste Sendepriorität unter den Sendeprioritäten der verfügbaren Nachrichten der mit dem FlexRay-Datenbus (300) oder dem LIN-Datenbus (400) verbundenen Sende/Empfangsknoten (100) für den selben zugeordneten Zeitabschnitt (110) ist, wobei pro Zeitabschnitt (110) höchstens eine Nachricht pro Sendepriorität eingeplant wird;
wobei die erste und zweite Bedingung über einen Zeitplan vorgegeben sind, der vor Ausführung ermittelt wird, so dass eine erforderliche Planbarkeit gegeben ist und zur Laufzeit keine zusätzlich zu übertragenden Daten entstehen;

wobei der Zeitplan ein modusbasierter Zeitplan ist, der für jeden Zeitabschnitt eine Anzahl potentiell bereit zu stellender Nachrichten bestimmt, wobei pro Zeitabschnitt höchstens eine Nachricht pro Ausführungsmodus eingeplant wird, so dass jeder Zeitabschnitt einen begrenzten Wettbewerb aufweist, der nach Prioritäten geordnet ist, wodurch eine flexible Nutzung des zugeordneten Zeitabschnitts während der Laufzeit gewährleistet wird;

wobei Ausführungsmodi nach Präferenzen geordnet sind und die Sendeprioritäten von Nachrichten definieren, die diesen Ausführungsmodi zugeordnet sind; und

wobei ein Zeitabschnitt mehreren Sende/Empfangsknoten für unterschiedliche Ausführungsmodi zugeordnet wird, wobei dieser Zeitabschnitt bei jedem Auftreten nur einmal pro Ausführungsmodus zugeordnet ist, so dass eine kontrollierte Mehrfachbelegung desselben Zeitabschnitts erfolgt.

18. Verfahren zum Betreiben eines Sende/Empfangsknotens (100) nach Anspruch 17 mit der Schnittstelle (102) zum Herstellen einer Verbindung mit dem FlexRay-Datenbus (300), wobei die Abfolge von Zeitabschnitten (108) eine Abfolge von Kommunikationszyklen des FlexRay-Datenbusses (300) ist, wobei der zugeordnete Zeitabschnitt (110) ein zugeordneter Kommunikationszyklus (310) der Abfolge von Kommunikationszyklen ist, wobei der zugeordnete Kommunikationszyklus (310) ein dynamisches Segment (314) mit dynamischen Zeitschlitzen ($320_d$) aufweist, wobei einem dynamischen Zeitschlitz die Sendepriorität der verfügbaren Nachricht und einem weiteren dynamischen Zeitschlitz die Sendepriorität einer weiteren verfügbaren Nachricht zugeordnet ist, wobei der Rahmen der verfügbaren Nachricht in dem dynamischen Zeitschlitz übertragen wird, dem die Sendepriorität der verfügbaren Nachricht zugeordnet ist.

19. Verfahren zum Betreiben eines Sende/Empfangsknotens (100) nach Anspruch 17 mit der Schnittstelle (102) zum Herstellen einer Verbindung mit dem FlexRay-Datenbus (300), wobei die Abfolge von Zeitabschnitten (108) eine Abfolge von dynamischen Zeitschlitzen (340) eines dynamischen Segments (314) eines Kommunikationszyklus (310) des FlexRay-Datenbusses (300) ist, wobei jeder dynamische Zeitschlitz ($320_d$) der Abfolge von dynamischen Zeitschlitzen (340) eine vorgegebene Anzahl von Minizeitschlitzen (322) aufweist, so dass jeder dynamische Zeitschlitz ($320_d$) der Abfolge von dynamischen Zeitschlitzen (340) in einem vorgegebenen Minizeitschlitz beginnt, wobei der zugeordnete Zeitabschnitt (110) ein zugeordneter dynamischer Zeitschlitz ($320_d$) der Abfolge von dynamischen Zeitschlitzen (340) ist.

20. Verfahren zum Betreiben eines Sende/Empfangsknotens (100) nach Anspruch 17 mit der Schnittstelle (102) zum Herstellen einer Verbindung mit dem FlexRay-Datenbus (300), wobei die Abfolge von Zeitabschnitten (108) eine Abfolge von statischen Zeitschlitzen (342) eines statischen Segments (312) eines Kommunikationszyklus (310) des FlexRay-Datenbusses (300) ist, wobei der zugeordnete Zeitabschnitt (110) ein zugeordneter statischer Zeitschlitz ($320_k$) der Abfolge von statischen Zeitschlitzen (342) ist.

21. Verfahren zum Betreiben eines Sende/Empfangsknotens (100) nach Anspruch 17 mit der Schnittstelle (102) zum Herstellen einer Verbindung mit dem LIN-Datenbus (400), wobei die Abfolge von Zeitabschnitten (108) eine Abfolge von Zeitschlitzen (408) des LIN-Datenbusses (400) ist, wobei der zugeordnete Zeitabschnitt (110) ein zugeordneter Zeitschlitz (410) der Abfolge von Zeitschlitzen (408) ist.

22. Computerprogramm zur Durchführung des Verfahrens gemäß einem der Ansprüche 17 bis 21, wenn das Computerprogramm auf einem Computer oder einem Mikroprozessor abläuft.

**Claims**

1. A transmit/receive node (100) comprising an interface (102) for producing a connection to a FlexRay data bus (300) or an LIN data bus (400), wherein the transmit/receive node (100) is configured to detect the occurrence of a first condition and a second condition in a sequence of time portions (108) and, in case the first and second conditions are fulfilled for a time portion (110) associated to an available message, to provide a frame of the available message to the FlexRay data bus (300) and the LIN data bus (400) via the interface (102) during the associated time portion (110), wherein the first condition, in accordance with a time schedule, indicates the associated time portion (110) for providing the frame of the available message, and wherein the second condition indicates that the transmit priority for the associated time portion (110) associated to the message is the highest transmit priority among the transmit priorities of the available messages of the transmit/receive nodes (100) connected to the FlexRay data bus (300) or the LIN data bus (400) for the same associated time portion (110), wherein at most one message per transmit priority is scheduled per time portion (110);

wherein the first and second conditions are predetermined by a schedule established before the execution;

wherein the schedule is a mode-based schedule which determines for each time portion a number of messages to be provided potentially, wherein at most one message per mode of execution is scheduled per time portion so that each time portion comprises a limited competition ordered in accordance with priorities;

wherein modes of execution are ordered according to preferences and define the transmit priorities of messages associated to these modes of execution; and

wherein a time portion is associated to several transmit/receive nodes for different modes of execution, wherein this time portion is associated, with each occurrence, only once per mode of execution.

2. The transmit/receive node (100) in accordance with claim 1, for producing a connection to a FlexRay data bus (300), wherein the sequence of time portions (108) is a sequence of communication cycles of the FlexRay data bus (300), wherein the associated time portion (110) is an associated communication cycle (310) of the sequence of communication cycles, wherein the associated communication cycle (310) comprises a dynamic segment (310) having dynamic time slots ($320_d$), wherein the transmit priority of the available message is associated to a dynamic time slot and the transmit priority of another available message is associated to another dynamic time slot, wherein the transmit/receive node (100) is configured to transmit the frame of the available message in the dynamic time slot which the transmit priority of the available message is associated to

3. The transmit/receive node (100) in accordance with claim 2, wherein the dynamic time slots ($320_d$) are numbered consecutively in accordance with their temporal occurrence in the dynamic segment (312), wherein transmit priorities are associated to at least two dynamic time slots such that higher a transmit priority is associated to a dynamic time slot having lower a numbering than to a dynamic time slot having higher a numbering, wherein the at least two dynamic time slots comprise the dynamic time slot which the transmit priority of the available message is associated to, and the other dynamic time slot which the transmit priority of the other available message is associated to.

4. The transmit/receive node (100) in accordance with claim 3, wherein the second condition is fulfilled when the frame of the other available message has not been transmitted in the dynamic segment (314) before the occurrence of the dynamic time slot which the transmit priority of the available message is associated to.

5. The transmit/receive node (100) in accordance with any of claims 3 or 4, wherein the dynamic segment (314) comprises a predetermined number of mini time slots (322) which are numbered consecutively in correspondence with their occurrence in the dynamic segment (314), wherein the dynamic time slots ($320_d$) of the dynamic segment (314) each comprise at least one mini time slot, wherein the transmit/receive node (100) is configured to discard the frame of the available message in case the dynamic time slot which the transmit priority of the available message is associated to occurs in time after a last possible mini time slot which indicates the last possible beginning of the transmission of the frame of the available message, or to provide same to the FlexRay data bus (300) at a later associated communication cycle.

6. The transmit/receive node (100) in accordance with claim 5, wherein the second condition is additionally fulfilled when, in the dynamic segment (314) before the occurrence of the dynamic time slot which the transmit priority of the available message is associated to, the frame of the other available message has been transmitted and the dynamic time slot which the transmit priority of the available message is associated to occurs at the same time as the last possible mini time slot which indicates the last possible beginning of the transmission of the frame of the available message, or before the last possible mini time slot.

7. The transmit/receive node (100) in accordance with claim 1, for producing a connection to the FlexRay data bus (300), wherein the sequence of time portions (108) is a sequence of dynamic time slots (340) of a dynamic segment (314) of a communication cycle (310) of the FlexRay data bus (300), wherein each dynamic time slot ($320_d$) of the sequence of dynamic time slots (340) comprises a predetermined number of mini time slots (322) so that each dynamic time slot ($320_d$) of the sequence of dynamic time lots (340) begins in a predetermined mini time slot, wherein the associated time portion (110) is an associated dynamic time slot ($320_d$) of the sequence of dynamic time slots (340).

8. The transmit/receive node (100) in accordance with claim 7, wherein an additional dynamic time slot having fill data is attached after at least one dynamic time slot ($320_d$) of the sequence of dynamic time slots (340) so that a subsequent dynamic time slot of the sequence of dynamic time slots (340) begins at the predetermined mini time slot.

9. The transmit/receive node (100) in accordance with claims 7 or 8, wherein the mini time slots (322) of the associated dynamic time slot ($320_d$) are numbered consecutively in accordance with their temporal occurrence in the associated dynamic time slot ($320_d$), wherein transmit priorities are associated to at least two mini time slots such that higher a transmit priority is associated to a mini time slot having lower a numbering than to a mini time slot having higher a numbering, wherein the transmit priority of the available message is associated to one of the at least two mini time slots and the transmit priority of the other available message is associated to another one of the at least two mini time slots.

10. The transmit/receive node (100) in accordance with claim 1, for producing a connection to the FlexRay data bus (300), wherein the sequence of time portions (108) is a sequence of static time slots (342) of a static segment (312) of a communication cycle (310) of the FlexRay data bus (300), wherein the associated time portion (110) is an associated static time slot ($320_k$) of the sequence of static time slots (342).

11. The transmit/receive node (100) in accordance with claim 10, wherein each static time slot ($320_k$) of the sequence of static time slots (342) comprises a predetermined number of mini time slots (322); and
wherein the mini time slots (322) of the associated static time slot ($320_k$) are numbered consecutively in accordance with their temporal occurrence, wherein transmit priorities are associated to at least two mini time slots such that higher a transmit priority is associated to a mini time slot having lower a numbering than to a mini time slot having higher a numbering, wherein the transmit priority of the available message is associated to one of the at least two mini time slots and the transmit priority of the other available message is associated to another one of the at least two mini time slots.

12. The transmit/receive node (100) in accordance with claim 11, wherein the second condition is fulfilled when the frame of the other available message has not been transmitted in the static time slot ($320_k$) before the occurrence of the mini time slot which the transmit priority of the available message is associated to.

13. The transmit/receive node (100) in accordance with claim 12, wherein the transmit/receive node (100) is configured, in case the mini time slot which the transmit priority of the available message is associated to occurs in time after a last possible mini time slot which indicates the last possible beginning of the transmission of the frame of the available message, to discard the frame of the available message or to provide same to the FlexRay data bus (300) at a later associated static time slot; and
wherein additionally the second condition is fulfilled when, in the static time slot before the occurrence of the mini time slot which the transmit priority of the available message is associated to, the frame of the other available message has been transmitted and the mini time slot which the transmit priority of the available message is associated to occurs at the same time as the last possible mini time slot or before the last possible mini time slot.

14. The transmit/receive node (100) in accordance with claim 1, for producing a connection to the LIN data bus (400), wherein the sequence of time portions (108) is a sequence of time portions (408) of the LIN data bus (400), wherein the associated time portion (110) is an associated time slot (410) of the sequence of time slots (408).

15. The transmit/receive node (100) in accordance with claim 14, wherein the transmit/receive node (100) is configured to obtain from a master node of the LIN data bus a frame having an identification indicating the current time slot of the sequence of time slots (408), wherein the transmit/receive node (100) is configured to detect the occurrence of the first condition based on the identification.

16. The transmit/receive node (100) in accordance with claims 14 or 15, wherein the transmit/receive node (100) is configured to provide, in a response phase of the associated time slot (410), the transmit priority of the available message and, in case the second condition is fulfilled, the frame of the available message to the LIN data bus (400) via the interface (102).

17. A method for operating a transmit/receive node (100) which comprises an interface (102) for producing a connection to a FlexRay data bus (300) or an LIN data bus (400), comprising:

detecting the occurrence of a first condition and a second condition for a time portion (110) of a sequence of time portions (108) associated to an available message; and
providing a frame of an available message to the FlexRay data bus (300) or the LIN data bus (400) via the interface (102) during the associated time portion (110) in case the first and second conditions for the associated time portion (110) are fulfilled;

wherein the first condition indicates, in accordance with a schedule, the associated time portion (110) for providing the frame of the available message, and wherein the second condition indicates that the transmit priority for the associated time portion (110) associated to the message is the highest transmit priority among the transmit priorities of the available messages of the transmit/receive nodes (100) connected to the FlexRay data bus (300) or the LIN data bus (400) for the same associated time portion (110), wherein at most one message per transmit priority is scheduled per time portion (110);

wherein the first and second conditions are predetermined by a schedule established before the execution so that there is a plannability required and no additional data to be transmitted formed at run time;

wherein the schedule is a mode-based schedule which determines for each time portion a number of messages to be provided potentially, wherein at most one message per mode of execution is scheduled per time portion so that each time portion comprises a limited competition ordered in accordance with priorities, thereby ensuring a flexible usage of the associated time portion during run time;

wherein modes of execution are ordered according to preferences and define the transmit priorities of messages associated to these modes of execution; and

wherein a time portion is associated to several transmit/receive nodes for different modes of execution, wherein this time portion is associated, with each occurrence, only once per mode of execution so that there is a controlled multi-occupation of the same time portion.

18. The method for operating a transmit/receive node (100) in accordance with claim 17 using the interface (102) for producing a connection to the FlexRay data bus (300), wherein the sequence of time portions (108) is a sequence of communication cycles of the FlexRay data bus (300), wherein the associated time portion (110) is an associated communication cycle (310) of the sequence of communication cycles, wherein the associated communication cycle (310) comprises a dynamic segment (314) having dynamic time slots ($320_d$), wherein the transmit priority of the available message is associated to a dynamic time slot and the transmit priority of another available message is associated to another dynamic time slot, wherein the frame of the available message is transmitted in the dynamic time slot which the transmit priority of the available message is associated to.

19. The method for operating a transmit/receive node (100) in accordance with claim 17 using the interface (102) for producing a connection to the FlexRay data bus (300), wherein the sequence of time portions (108) is a sequence of dynamic time slots (340) of a dynamic segment (314) of a communication cycle (310) of the FlexRay data bus (300), wherein each dynamic time slot ($320_d$) of the sequence of dynamic time slots (340) comprises a predetermined number of mini time slots (322) so that each dynamic time slot ($320_d$) of the sequence of dynamic time slots (340) begins in a predetermined mini time slot, wherein the associated time portion (110) is an associated dynamic time slot ($320_d$) of the sequence of dynamic time slots (340).

20. The method for operating a transmit/receive node (100) in accordance with claim 17 using the interface (102) for producing a connection to the FlexRay data bus (300), wherein the sequence of time portions (108) is a sequence of static time slots (342) of a static segment (312) of a communication cycle (310) of the FlexRay data bus (300), wherein the associated time portion (110) is an associated static time slot ($320_k$) of the sequence of static time slots (342).

21. The method for operating a transmit/receive node (100) in accordance with claim 17 using the interface (102) for producing a connection to the LIN data bus (400), wherein the sequence of time portions (108) is a sequence of time slots (408) of the LIN data bus (400), wherein the associated time portion (110) is an associated time slot (410) of the sequence of time slots (408).

22. A computer program for performing the method in accordance with any of claims 17 to 21 when the computer program runs on a computer or a microprocessor.

## Revendications

1. Noeud d'émission/de réception (100) avec une interface (102) destinée à établir une connexion avec un bus de données FlexRay (300) ou un bus de données LIN (400), dans lequel le noeud d'émission/de réception (100) est conçu pour détecter, dans le cas d'une séquence de segments temporels (108), l'occurrence d'une première condition et d'une deuxième condition et, au cas où la première et la deuxième condition sont remplies pour un segment de temps associé à un message disponible (110), pour mettre à disposition du bus de données FlexRay (300) ou du bus de données LIN (400) pendant le segment temporel associé (110) une trame du message disponible par l'intermédiaire de l'interface (102), où la première condition indique, selon un planning de temps, le segment de temps associé (110) pour la mise à disposition de la trame du message disponible, et où la deuxième condition indique que la priorité de transmission associée au message pour le segment de temps associé (110) est la priorité de transmission la plus haute parmi les priorités de transmission des messages disponibles du noeud d'émission/de réception (100) connecté au bus de données FlexRay (300) ou au bus de données LIN (400) pour le même segment de temps associé (110), dans lequel est planifié, par segment de temps (110), tout au plus un message par priorité de transmission;

dans lequel les première et deuxième conditions sont prédéterminées par un planning de temps qui est déterminé avant l'exécution;

dans lequel le planning de temps est un planning de temps à base de mode qui détermine, pour chaque segment de temps, un nombre de messages potentiellement à mettre à disposition, où il est prévu, par segment de temps, tout au plus un message par mode d'exécution, de sorte que chaque segment de temps présente une concurrence limitée qui est ordonnée selon les priorités;

dans lequel les modes d'exécution sont ordonnés selon les préférences et définissent les priorités de transmission des messages qui sont associés à ces modes d'exécution; et

dans lequel un segment de temps est associé à plusieurs noeuds d'émission/de réception pour différents modes d'exécution, dans lequel ce segment de temps n'est associé, à chaque occurrence, qu'une seule fois par mode d'exécution.

2. Noeud d'émission/de réception (100) selon la revendication 1 pour établir une connexion avec le bus de données FlexRay (300), dans lequel la séquence de segments temporels (108) est une séquence de cycles de communication du bus de données FlexRay (300), dans lequel le segment de temps associé (110) est un cycle de communication associé (310) de la séquence de cycles de communication, dans lequel le cycle de communication associé (310) présente un segment dynamique (314) avec des intervalles de temps dynamiques ($320_d$), dans lequel est associée, à un intervalle de temps dynamique, la priorité de transmission du message disponible et, à un autre intervalle de temps dynamique, le priorité de transmission d'un autre message disponible, dans lequel le noeud d'émission/de réception (100) est configuré pour transmettre la trame du message disponible dans l'intervalle de temps dynamique auquel est associée la priorité de transmission du message disponible.

3. Noeud d'émission/de réception (100) selon la revendication 2, dans lequel les intervalles de temps dynamiques ($320_d$) sont numérotés consécutivement de manière séquentielle selon leur occurrence dans le temps dans le segment dynamique (312), dans lequel sont associées à au moins deux intervalles de temps dynamiques des priorités de transmission de sorte qu'à une intervalle de temps dynamique qui présente une numérotation inférieure soit associée une priorité de transmission plus haute qu'à un intervalle de temps dynamique qui présente une numérotation supérieure, dans lequel les au moins deux intervalles de temps dynamiques comportent l'intervalle de temps dynamique auquel est associée la priorité de transmission du message disponible et l'autre intervalle de temps dynamique auquel est associée la priorité de transmission de l'autre message disponible.

4. Noeud d'émission/de réception (100) selon la revendication 3, dans lequel la deuxième condition est remplie lorsque dans le segment dynamique (314) avant l'occurrence de l'intervalle de temps dynamique auquel est associée la priorité de transmission du message disponible n'a pas été transmise la trame de l'autre message disponible.

5. Noeud d'émission/de réception (100) selon l'une des revendications 3 ou 4, dans lequel le segment dynamique (314) présente un nombre prédéterminé de mini-intervalles de temps (322) qui sont numérotés de manière séquentielle selon leur occurrence dans le segment dynamique (314), dans lequel les intervalles de temps dynamiques (320d) du segment dynamique (314) comportent, chacun, au moins un mini-intervalle de temps, dans lequel le noeud d'émission/de réception (100) est configuré pour rejeter, au cas où l'intervalle de temps dynamique auquel est associée la priorité de transmission du message disponible se produit dans le temps après un dernier mini-intervalle de temps possible qui indique le dernier début de transmission possible de la trame du message disponible, la trame du message disponible ou pour le mettre à disposition du bus de données FlexRay (300) dans un cycle de communication associé ultérieur.

6. Noeud d'émission/de réception (100) selon la revendication 5, dans lequel la deuxième condition est par ailleurs remplie lorsque dans le segment dynamique (314) a été transmise, avant l'occurrence de l'intervalle de temps dynamique auquel est associée la priorité de transmission du message disponible, la trame de l'autre message disponible et que l'intervalle de temps dynamique auquel est associée la priorité de transmission du message disponible se présente en même temps que le dernier mini-intervalle de temps possible qui indique le dernier début de transmission possible de la trame du message disponible ou se produit avant le dernier mini-intervalle de temps possible.

**7.** Noeud d'émission/de réception (100) selon la revendication 1 pour établir une connexion avec le bus de données FlexRay (300), dans lequel la séquence de segments de temps (108) est une séquence d'intervalles de temps dynamiques (340) d'un segment dynamique (314) d'un cycle de communication (310) du bus de données FlexRay (300), où chaque intervalle de temps dynamique $(320_d)$ de la séquence d'intervalles de temps dynamiques (340) présente un nombre prédéterminé de mini-intervalles de temps (322), de sorte que chaque intervalle de temps dynamique $(320_d)$ de la séquence d'intervalles de temps dynamiques (340) commence dans un mini-intervalle donné, où le segment de temps associé (110) est un intervalle de temps dynamique associé $(320_d)$ de la séquence d'intervalles de temps dynamiques (340).

**8.** Noeud d'émission/de réception (100) selon la revendication 7, dans lequel après au moins un intervalle de temps dynamique $(320_d)$ de la séquence d'intervalles de temps dynamiques (340) est accroché un intervalle de temps dynamique additionnel avec des données de remplissage, de sorte qu'un intervalle de temps dynamique suivant de la séquence d'intervalles de temps dynamiques (340) commence au mini-intervalle de temps prédéterminé.

**9.** Noeud d'émission/de réception (100) selon la revendication 7 ou 8, dans lequel les mini-intervalles de temps (322) de l'intervalle de temps dynamique associé $(320_d)$ sont numérotés en séquence selon leur occurrence dans l'intervalle de temps dynamique associé $(320_d)$, dans lequel au moins à deux mini-intervalles de temps sont associées des priorités de transmission de sorte qu'à un mini-intervalle de temps qui présente une numérotation inférieure soit associée une priorité de transmission plus haute qu'à un mini-intervalle de temps qui présente une numérotation supérieure, dans lequel à l'un des au moins deux mini-intervalles de temps est associée la priorité de transmission du message disponible et à un autre des au moins deux mini-intervalles de temps soit associée la priorité d'émission de l'autre message disponible.

**10.** Noeud d'émission/de réception (100) selon la revendication 1 pour établir une connexion avec le bus de données FlexRay (300), dans lequel la séquence d'intervalles de temps (108) est une séquence d'intervalles de temps statiques (342) d'un segment statique (312) d'un cycle de communication (310) du bus de données FlexRay (300), dans lequel le segment de temps associé (110) est un intervalle de temps statique associé $(320_k)$ de la séquence d'intervalles de temps statiques (342).

**11.** Noeud d'émission/de réception (100) selon la revendication 10, dans lequel chaque intervalle de temps statique $(320_k)$ de la séquence d'intervalles de temps statiques (342) présente un nombre prédéterminé de mini-intervalles de temps (322); et
dans lequel les mini-intervalles de temps (322) de l'intervalle de temps statique associé $(320_k)$ sont numérotés de manière séquentielle selon leur occurrence dans le temps, où au moins à deux mini-intervalles de temps sont associées des priorités de transmission de sorte qu'à un mini-intervalle de temps qui présente une numérotation inférieure soit associée une priorité de transmission plus haute qu'à un mini-intervalle de temps qui présente une numérotation supérieure, dans lequel à l'un des au moins deux mini-intervalles de temps est associée la priorité de transmission du message disponible et à un autre des au moins deux mini-intervalles de temps est associée la priorité d'émission de l'autre message disponible.

**12.** Noeud d'émission/de réception (100) selon la revendication 11, dans lequel la deuxième condition est remplie lorsque dans l'intervalle de temps statique $(320_k)$ n'est pas transmisse, avant l'occurrence du mini-intervalle de temps auquel est associée la priorité de transmission du message disponible, la trame de l'autre message disponible.

**13.** Noeud d'émission/de réception (100) selon la revendication 12, dans lequel le noeud d'émission/de réception (100) est conçu pour rejeter, au cas où le mini-intervalle de temps auquel est associée la priorité de transmission du message disponible se produit dans le temps après un dernier mini-intervalle de temps possible qui indique le dernier début de transmission possible de la trame du message disponible, ou pour la mettre à disposition du bus de données FlexRay (300) dans un intervalle de temps statique associé ultérieur; et
dans lequel la deuxième condition est par ailleurs remplie lorsque dans le segment statique a été transmise, avant l'occurrence du mini-intervalle de temps statique auquel est associée la priorité de transmission du message disponible, la trame de l'autre message disponible et que le mini-intervalle de temps statique auquel est associée la priorité de transmission du message disponible se présente en même temps que le dernier mini-intervalle de temps possible ou avant le dernier mini-intervalle de temps possible.

**14.** Noeud d'émission/de réception (100) selon la revendication 1 pour établir une connexion avec le bus de données LIN (400), dans lequel la séquence d'intervalles de temps (108) est une séquence d'intervalles de temps (408) du bus de données LIN (400), dans lequel l'intervalle de temps associé (110) est un intervalle de temps associé (410) de la séquence d'intervalles de temps (408).

**15.** Noeud d'émission/de réception (100) selon la revendication 14, dans lequel le noeud d'émission/de réception (100) est conçu pour obtenir d'un noeud maître du bus de données LIN une trame avec un identificateur qui indique l'intervalle de temps actuel de la séquence d'intervalles de temps (408), dans lequel le noeud d'émission/de réception (100) est configuré pour détecter sur base de l'identificateur l'occurrence de la première condition.

**16.** Noeud d'émission/de réception (100) selon la revendication 14 ou 15, dans lequel le noeud d'émission/de réception (100) est conçu pour mettre à disposition du bus de données LIN (400), dans une phase de réponse de l'intervalle de temps associé (410), la priorité de transmission du message disponible et, au cas où la deuxième condition est remplie, la trame du message disponible par l'intermédiaire de l'interface (102).

**17.** Procédé permettant de faire fonctionner un noeud d'émission/de réception (100) présentant une interface (102) destinée à établir une connexion avec un bus de données FlexRay (300) ou un bus de données LIN (400), aux caractéristiques suivantes consistant à:

    détecter l'occurrence d'une première condition et d'une deuxième condition pour un intervalle de temps (110), associé à un message disponible, d'une séquence d'intervalles de temps (108); et
    mettre à disposition du bus de données FlexRay (300) ou du bus de données LIN (400), par l'intermédiaire de l'interface (102), une trame d'un message disponible pendant l'intervalle de temps associé (110) si la première et la deuxième condition pour l'intervalle de temps associé (110) sont remplies;
    dans lequel la première condition indique, selon un planning de temps, l'intervalle de temps associé (110) pour mettre à disposition la trame du message disponible, et dans lequel la deuxième condition indique que la priorité de transmission associée au message pour l'intervalle de temps associé (110) est la priorité de transmission la plus haute parmi les priorités de transmission des messages disponibles des noeuds d'émission/de réception (100) connectés au bus de données FlexRay (300) ou au bus de données LIN (400) pour le même intervalle de temps associé (110), dans lequel par segment de temps (110) est planifié tout au plus un message par priorité de transmission;
    dans lequel la première et la deuxième condition sont prédéterminées par l'intermédiaire d'un planning de temps qui est déterminé avant l'exécution, de sorte que soit données une possibilité de planification nécessaire et qu'il ne se produise pas de données à transmettre additionnelles au moment de l'exécution;
    dans lequel le planning de temps est un planning à base de mode qui détermine, pour chaque segment de temps, un nombre de messages potentiellement à mettre à disposition, où il est prévu, par segment de temps, tout au plus un message par mode d'exécution, de sorte que chaque segment de temps présente une concurrence limitée qui est ordonnée selon les priorités, d'où est garantie une utilisation flexible de l'intervalle de temps associé pendant le temps d'exécution;
    dans lequel les modes d'exécution sont ordonnés selon les préférences et définissent les priorités de transmission des messages qui sont associés à ces modes d'exécution; et
    dans lequel un segment de temps est associé à plusieurs noeuds d'émission/de réception pour différents modes d'exécution, où ce segment de temps n'est associé, à chaque occurrence, qu'une seule fois par mode d'exécution, de sorte qu'ait lieu une occupation multiple contrôlée du même segment de temps.

**18.** Procédé permettant de faire fonctionner un noeud d'émission/de réception (100) selon la revendication 17 avec l'interface (102) pour établir une connexion avec le bus de données FlexRay (300), dans lequel la séquence de segments de temps (108) est une séquence de cycles de communication du bus de données FlexRay (300), dans lequel le segment de temps associé (110) est un cycle de communication associé (310) de la séquence de cycles de communication, dans lequel le cycle de communication associé (310) présente un segment dynamique (314) avec des intervalles de temps dynamiques ($320_d$), dans lequel à un intervalle de temps dynamique est associée la priorité de transmission du message disponible, et à un autre intervalle de temps dynamique est associée la priorité de transmission d'un autre message disponible, dans lequel la trame du message disponible est transmise dans l'intervalle de temps dynamique auquel est associée la priorité de transmission du message disponible.

**19.** Procédé permettant de faire fonctionner un noeud d'émission/de réception (100) selon la revendication 17 avec l'interface (102) pour établir une connexion avec le bus de données FlexRay (300), dans lequel la séquence d'intervalles de temps (108) est une séquence d'intervalles de temps dynamiques (340) d'un segment dynamique (314) d'un cycle de communication (310) du bus de données FlexRay (300), où chaque intervalle de temps dynamique (320$_d$) de la séquence d'intervalles de temps dynamiques (340) présente un nombre prédéterminé de mini-intervalles de temps (322), de sorte que chaque intervalle de temps dynamique (320$_d$) de la séquence d'intervalles de temps dynamiques (340) commence dans un mini-intervalle de temps prédéterminé, dans lequel le segment de temps associé (110) est un intervalle de temps dynamique associé (320$_d$) de la séquence d'intervalles de temps dynamiques (340).

20. Procédé permettant de faire fonctionner un noeud d'émission/de réception (100) selon la revendication 17 avec l'interface (102) destinée à établir une connexion avec le bus de données FlexRay (300), dans lequel la séquence d'intervalles de temps (108) est une séquence d'intervalles de temps statiques (342) d'un segment statique (312) d'un cycle de communication (310) du bus de données FlexRay (300), dans lequel le segment de temps associé (110) est un intervalle de temps statique associé (320$_k$) de la séquence d'intervalles de temps statiques (342).

21. Procédé permettant de faire fonctionner un noeud d'émission/de réception (100) selon la revendication 17 avec l'interface (102) destinée à établir une connexion avec le bus de données LIN (400), dans lequel la séquence d'intervalles de temps (108) est une séquence d'intervalles de temps (408) du bus de données LIN (400), dans lequel le segment de temps associé (110) est un intervalle de temps associé (410) de la séquence d'intervalles de temps (408).

22. Programme d'ordinateur pour réaliser le procédé selon l'une des revendications 17 à 21 lorsque le programme d'ordinateur est exécuté sur un ordinateur ou un microprocesseur.

FIGUR 1A

FIGUR 1B

FIGUR 2

EP 2 614 996 B1

$200$    $300$    $400$

$100_1$      $100_2$      $100_3$      $100_{n-2}$      $100_{n-1}$      $100_n$

FIGUR 3

208

216     210          218

FIGUR 4

208

$210_1$ $210_2$ $210_3$ $210_4$

| | SA | $S_1$ | $S_2$ | $S_3$ | $S_4$ |
|---|---|---|---|---|---|
| Modus I → | Notfall | $v_6(100_6)$ | – | $v_6(100_6)$ | – |
| Modus II → | Sicherheit | $v_4(100_4)$ | $v_5(100_5)$ | $v_4(100_4)$ | $v_5(100_5)$ |
| Modus III → | Regulär | – | $v_2(100_2)$ | – | $v_3(100_3)$ |
| Modus IV → | Datenstrom | $v_1(100_1)$ | $v_1(100_1)$ | $v_1(100_1)$ | $v_1(100_1)$ |

FIGUR 5

FIGUR 6

| 0 | 1 | ••• | | | | | | | | | | 62 | 63 |

$310_0$  $310_1$  $310$  $310_{62}$  $310_{63}$

$310$

Kommunikationszyklus

312  314  316  318

| statisches Segment | dynamisches Segment | Symbol-fenster | NIT |

$320_l$  $320_k$  $320_i$  $330_{i+1}$  $320_{i+1}$  $320_{d=i+2}$  $320_{i+2}$  $320_{i+3}$

$330_k$

320 ⟶

$330_{i+3}$ ••• Zeitschlitze

statischer Zeitschlitz 1  statischer Zeitschlitz k  statischer Zeitschlitz i  dynamischer Zeitschlitz i+1  i+2  i+3  $330_{d=i+3}$

322 ⟶  ••• Minizeit-schlitze

$330_{i+1}$  $330_{i+3}$

324 ⟶  ••• Makroticks

$330_k$

Rahmen k  Rahmen i+1  i+3

FIGUR 7

EP 2 614 996 B1

EP 2 614 996 B1

308

| 1 | 0 | ••• | | | | | | | | | | 62 | 63 |

$310_0$  $310_1$  $310$  $310_{62}$  $310_{63}$

Kommunikationszyklus

312  314  310  316  318

| statisches Segment | dynamisches Segment | Symbol-fenster | NIT |

$330_{i+1}$  $320_{i+1}$  $320_{d=i+2}$  $320_{i+2}$  $320_{i+3}$

$330_{i+3}$

••• Zeitschlitze

dynamischer Zeitschlitz

$330_{d=i+3}$

i+1  i+2  i+3

••• Minizeit-schlitze

$330_{i+1}$  $330_{i+3}$

300

102

104

100

FIGUR 8

| m ∈ M | mp(m) |
|:---:|:---:|
| Notfall | 0 |
| Sicherheit | 2 |
| Winkel | 4 |
| Regulär | 5 |
| Datenstrom | 10 |

# FIGUR 9

| Knoten | Nachrichtentyp | Anzahl der modusbasierten Zeitschlitze pro Makrozeitabschnitt | Modus |
|---|---|---|---|
| $v_1$ | Unterhaltung | 8 | Datenstrom |
| $v_1$ | Steuerung des Spiegels | 1 | Regulär |
| $v_1$ | Sitzpositionierung | 1 | Regulär |
| $v_2$ | Fenstersteuerung | 1 | Regulär |
| $v_2$ | drahtgebundene Bremse | 4 | Sicherheit |
| $v_3$ | drahtgebundene Lenkung | 4 | Sicherheit |
| $v_3$ | Airbag Steuerung | 4 | Notfall |
| $v_3$ | Kurbelwellensensor | 8 | Winkel |

**FIGUR 10**

| SA | MP | Zeitschlitz 1 | Zeitschlitz 2 | Zeitschlitz 3 | Zeitschlitz 4 | Zeitschlitz 5 | Zeitschlitz 6 | Zeitschlitz 7 | Zeitschlitz 8 | Zeitschlitz 9 | Zeitschlitz 10 | Zeitschlitz 11 | Zeitschlitz 12 | Zeitschlitz 13 | Zeitschlitz 14 | Zeitschlitz 15 | Zeitschlitz 16 | dynamischer Zeitschlitz |
|---|---|---|---|---|---|---|---|---|---|---|---|---|---|---|---|---|---|---|
| Notfall | 0 | $v_3$ | | | | $v_3$ | | | | $v_3$ | | | | $v_3$ | | | | 4 |
| Sicherheit | 2 | | $v_2$ | $v_3$ | | | $v_2$ | $v_3$ | | | $v_2$ | $v_3$ | | | $v_2$ | $v_3$ | | 5 |
| Winkel | 4 | | $v_3$ | | $v_3$ | | $v_3$ | | $v_3$ | | $v_3$ | | $v_3$ | | $v_3$ | | $v_3$ | 6 |
| Regulär | 5 | | | | | $v_1$ | | | | | $v_1$ | | | $v_2$ | | | | 7 |
| Datenstrom | 10 | $v_1$ | | $v_1$ | | $v_1$ | | $v_1$ | | $v_1$ | | $v_1$ | | $v_1$ | | $v_1$ | | 8 |

FIGUR 11

| Knoten | Nachrichtentyp | dynamischer Zeitschlitz (Nummer) | Zyklus-Zähl-Filter |
|---|---|---|---|
| $v_1$ | Unterhaltung | 8 | $10_2$ |
| $v_1$ | Steuerung des Spiegels | 7 | $10100_2$ |
| $v_1$ | Sitzpositionierung | 7 | $11001_2$ |
| $v_2$ | Fenstersteuerung | 7 | $11100_2$ |
| $v_2$ | drahtgebundene Bremse | 5 | $101_2$ |
| $v_3$ | drahtgebundene Lenkung | 5 | $110_2$ |
| $v_3$ | Airbag Steuerung | 4 | $100_2$ |
| $v_3$ | Kurbelwellensensor | 6 | $11_2$ |

# FIGUR 12

EP 2 614 996 B1

| SA | MP | | | | | |
|---|---|---|---|---|---|---|
| Notfall | 0 | | | | | |
| Sicherheit | 2 | | | | | |
| Winkel | 4 | $V_3$ | $V_3$ | $V_3$ | $V_3$ | 4 |
| Regulär | 5 | | | | | |
| Datenstrom | 10 | | | | | |
| | | Zeitschlitz 4 | Zeitschlitz 8 | Zeitschlitz 12 | Zeitschlitz 16 | dynamischer Zeitschlitz |

# FIGUR 13A

| SA | MP | Zeitschlitz 1 | Zeitschlitz 2 | Zeitschlitz 3 | Zeitschlitz 6 | Zeitschlitz 7 | Zeitschlitz 9 | Zeitschlitz 11 | Zeitschlitz 14 | Zeitschlitz 15 | dynamischer Zeitschlitz |
|---|---|---|---|---|---|---|---|---|---|---|---|
| Notfall | 0 | $V_3$ | | | | | $V_3$ | | | | 4 |
| Sicherheit | 2 | | $V_2$ | $V_3$ | $V_2$ | $V_3$ | | $V_3$ | $V_2$ | $V_3$ | 4 |
| Winkel | 4 | | $V_3$ | | $V_3$ | | | $V_3$ | | | 5 |
| Regulär | 5 | | | | | | | | | | |
| Datenstrom | 10 | $V_1$ | | $V_1$ | | $V_1$ | $V_1$ | $V_1$ | | $V_1$ | 5 |

FIGUR 13B

EP 2 614 996 B1

| SA | MP | | |
|---|---|---|---|
| Notfall | 0 | | |
| Sicherheit | 2 | $V_2$ | 4 |
| Winkel | 4 | $V_3$ | 5 |
| Regulär | 5 | $V_1$ | 6 |
| Datenstrom | 10 | | |
| | | Zeitschlitz 10 | dynamischer Zeitschlitz |

| SA | MP | | | |
|---|---|---|---|---|
| Notfall | 0 | $V_3$ | $V_3$ | 4 |
| Sicherheit | 2 | | | |
| Winkel | 4 | | | |
| Regulär | 5 | $V_1$ | $V_2$ | 5 |
| Datenstrom | 10 | $V_1$ | $V_1$ | 6 |
| | | Zeitschlitz 5 | Zeitschlitz 13 | dynamischer zeitschlitz |

FIGUR 13C

FIGUR 14

EP 2 614 996 B1

FIGUR 15

EP 2 614 996 B1

FIGUR 16

EP 2 614 996 B1

FIGUR 17

**EP 2 614 996 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **E. SCHMIDT ; K. SCHMIDT.** *FlexRay Protocol: The Dynamic Segment, IEEE Transactions on Vehicular Technology,* 2009, vol. 58 (5), 2160-2169
- **K. SCHMIDT ; E. G. SCHMIDT.** *FlexRay Protocol: The Static Segment, IEEE Transactions on Vehicular Technology,* 2009, vol. 58 (5), 2170-2179
- Optimized Schedule Synthesis under Real-Time Constraints for the Dynamic Segment of FlexRay. **REINHARD SCHNEIDER et al.** EMBEDDED AND UBIQUITOUS COMPUTING (EUC). IEEE/IFIP 8TH INTERNATIONAL CONFERENCE ON, IEEE, 2010, 31-38
- **FLEXRAY CONSORTIUM et al.** *FlexRay Communications System Protocol Specification Version 3.0.1,* 31. Oktober 2010, 244-254, http://www.scribd.com/doc/73436081/ FlexRay-Protocol-Specification-V3-0-1
- Re-engineering cyber-physical control applications for hybrid communication protocols. **GOSWAMI D et al.** DESIGN, AUTOMATION&TEST IN EUROPE CONFERENCE&EXHIBITION. IEEE, 14. Marz 2011, 1-6
- FlexRay-Spezifikation
- *FlexRay Communications System Electrical Physical Layer Specification,* 2006